(19) Europäisches Patentamt
European Patent Office
Office européen des brevets

(11) Veröffentlichungsnummer: **0 271 883 B1**

(12) # EUROPÄISCHE PATENTSCHRIFT

(45) Veröffentlichungstag der Patentschrift: **06.03.91**

(51) Int. Cl.[5]: **C09B 62/503**, C09B 62/04, D06P 1/38

(21) Anmeldenummer: **87118590.6**

(22) Anmeldetag: **15.12.87**

(54) **Wasserlösliche farbige Verbindungen, Verfahren zu ihrer Herstellung und ihre Verwendung als Farbstoffe.**

(30) Priorität: **17.12.86 DE 3643014**

(43) Veröffentlichungstag der Anmeldung: **22.06.88 Patentblatt 88/25**

(45) Bekanntmachung des Hinweises auf die Patenterteilung: **06.03.91 Patentblatt 91/10**

(84) Benannte Vertragsstaaten: **BE CH DE ES FR GB IT LI**

(56) Entgegenhaltungen:
**EP-A- 0 014 432**
**EP-A- 0 040 790**
**EP-A- 0 133 270**
**EP-A- 0 159 292**
**EP-A- 0 212 264**

(73) Patentinhaber: **HOECHST AKTIENGESELLSCHAFT**
**Postfach 80 03 20**
**W-6230 Frankfurt am Main 80(DE)**

(72) Erfinder: **Springer, Hartmut, Dr.**
**Am Erdbeerstein 27**
**W-6240 Königstein/Taunus(DE)**
Erfinder: **Kühn, Manfred, Dr.**
**Inheidenerstrasse 7**
**W-6000 Frankfurt am Main 60(DE)**
Erfinder: **Büch, Holger Michael, Dr.**
**Neugasse 4**
**W-6238 Hofheim am Taunus(DE)**

**EP 0 271 883 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung liegt auf dem technischen Gebiet der faserreaktiven Farbstoffe.

Faserreaktive Farbstoffe werden in großem Umfang für das Färben und Bedrucken von textilen Fasermaterialien eingesetzt, und eine große Zahl brauchbarer Reaktivfarbstoffe steht für verschiedene Anwendungsbereiche zur Verfügung. Jedoch kann der erreichte Stand nicht ganz befriedigen, da weiterhin gewisse anwendungstechnische Mängel, wie z.B. ungenügende Eignung für bestimmte Färbeverfahren und stark temperaturabhängige Farbausbeuten, sowie teilweise nicht voll befriedigende Echtheiten, wie insbesondere nicht ausreichende Naßlicht- und Schweißlichtechtheiten, vorliegen. Infolge dessen besteht weiterhin ein Bedarf nach neuen Reaktivfarbstoffen mit verbesserten Eigenschaften, der jedoch auch mit Farbstoffen, die eine 4-[4'-(β-Sulfatoethylsulfonyl)-benzylamino]-2-chlor-s-triazin-6-yl-amino-Gruppe als faserreaktiven Rest enthalten und kürzlich mit der deutschen Offenlegungsschrift Nr. 33 27 641 bekannt geworden sind, nicht befriedigt werden konnte.

Desweiteren werden in der älteren europäischen patentanmeldung mit der Veröffentlichungsnummer 0 212 264 A1 (Art. 54(3) EPÜ) Farbstoffe beschrieben, die einen 2-Chlor-4-Phenethylamino-1,3,5-triazin-6-yl-amino-Rest, dessen Phenylrest in para-Stellung durch eine faserreaktive Gruppe der Vinylsulfonreihe substituiert ist und gegebenenfalls eine Sulfogruppe als weiteren Substituenten enthalten kann, besitzen.

Der vorliegenden Erfindung lag deshalb die Aufgabe zugrunde, neue faserreaktive Farbstoffe mit verbesserten Eigenschaften zu finden, die auf Textilfasern, wie insbesondere auf Baumwolle, in allen Farbtönen färben und sich vor allem durch eine beständige Faser-Farbstoff-Bindung und einen hohen Fixiergrad auszeichnen und insbesondere für das Färben nach dem Ausziehverfahren in einem weiten Temperaturbereich und ebenso für den Druck geeignet sind; desweiteren sollten sich Anteile dieser Farbstoffe, die auf der Faser nicht fixieren, leicht auswaschen lassen, und die mit ihnen erhältlichen Färbungen und Drucke sollten gute Gebrauchsechtheiten, insbesondere gute Licht- und Naßlichtechtheiten, wie alkalische Schweißlichtechtheiten, besitzen.

Mit der vorliegenden Erfindung wurde diese Aufgabe durch Auffindung der Verbindungen der allgemeinen Formel (1) gelöst.

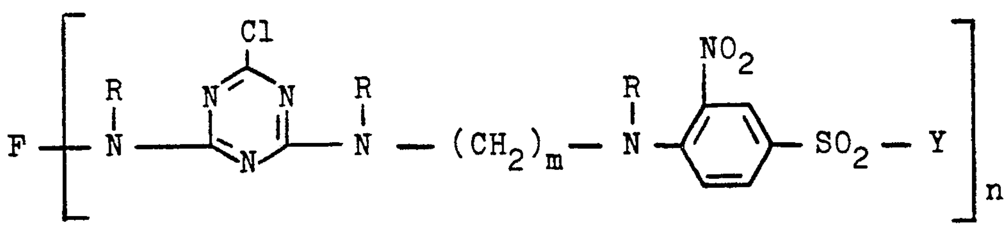

(1)

In dieser Formel bedeuten:

F ist ein Rest eines Farbstoffes, bevorzugt eines wasserlöslichen sulfogruppenhaltigen Farbstoffes und bevorzugt aus der Azoreihe, hiervon insbesondere der Rest eines sulfogruppenhaltigen Monoazo- oder Disazofarbstoffes;

m ist die Zahl 2 oder 3, bevorzugt 2;

n ist die Zahl 1 oder 2, bevorzugt 1;

R ist ein Wasserstoffatom oder eine Alkylgruppe von 1 bis 4 C-Atomen;

Y ist die Vinylgruppe oder eine Gruppe der allgemeinen Formel (2)

$$-CH_2-CH_2-X \qquad (2)$$

in welcher X für einen Substituenten steht, der als Anion, insbesondere mittels eines Alkalis, eliminierbar ist.

Bevorzugt sind Farbstoffe der allgemeinen Formel (1), die insgesamt 1 bis 6 Sulfogruppen besitzen. Die Farbstoffreste F können ferner weitere übliche faserreaktive Gruppen enthalten.

Farbstoffe mit dem Rest F bzw. die den Verbindungen der allgemeinen Formel (1) zugrunde liegenden Farbstoffe mit einer Aminogruppe -NHR sind in der Literatur zahlreich beschrieben, so beispielsweise in den europäischen Patentanmeldungs-Veröffentlichungen Nrs. 0 070 806 A, 0 070 808 A und 0 076 782 A sowie in der deutschen Auslegeschrift Nr. 26 14 550, desweiteren in Venkataraman, The Chemistry of Synthetic Dyes, New York, London, 1972, Band VI, Seiten 213-297.

Besonders wertvolle Farbstoffe dieser Reihe sind wasserlösliche Azofarbstoffe, insbesondere solche,

die Sulfo-und/oder Carboxygruppen aufweisen, insbesondere sulfogruppenhaltige Mono- und Disazofarbstoffe.

In Formel (1) können die Formelreste R zueinander gleiche oder voneinander verschiedene Bedeutungen besitzen. Alkylgruppen R sind beispielsweise die n-Butyl-, n-Propyl- und die Ethylgruppe, vorzugsweise die Methylgruppe. Bevorzugt ist R ein Wasserstoffatom.

Als Anion eliminierbare Substituenten X sind beispielsweise die folgenden zu nennen: Chlor, Sulfato, Thiosulfato, Phosphato, Alkylsulfonyloxy von 1 bis 4 C-Atomen, wie Methylsulfonyloxy, Alkanoyloxy von 2 bis 5 C-Atomen, wie Acetyloxy, und Sulfobenzoyloxy; hiervon sind bevorzugt Sulfato und Phosphato, insbesondere Sulfato.

Sulfo-, Carboxy-, Sulfato-, Thiosulfato- und Phosphatogruppen sind Gruppen der allgemeinen Formel $-SO_3M$, $-COOM$, $-OSO_3M$, $-S-SO_3M$ bzw. $-OPO_3M_2$ , in welchen M für ein Wasserstoffatom oder ein Alkalimetall, wie Natrium, Kalium oder Lithium, steht.

Wichtige Azofarbstoffe entsprechend der allgemeinen Formel (1) sind solche, in denen F einen Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalin-azo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Die vorliegende Erfindung betrifft somit insbesondere wasserlösliche, sulfogruppenhaltige Azofarbstoffe, die die faserreaktive Gruppe Z der allgemeinen Formel (3)

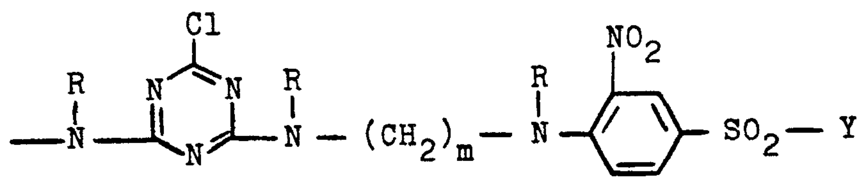

(3)

in welcher R, m und Y die obengenannten Bedeutungen haben, einmal oder zweimal enthalten.

Solche Azofarbstoffe der allgemeinen Formel (1) sind insbesondere Farbstoffe der allgemeinen Formel (4)

$$Z_n \left[ D - N = N - (E - N = N)_v - K \right] \qquad (4)$$

in welcher D für den Rest einer Diazokomponente, E den bivalenten Rest einer kupplungsfähigen und diazotierbaren Verbindung, K den Rest einer Kupplungskomponente und v für die Zahl Null oder 1 steht sowie Z einen Rest der allgemeinen Formel (3) bedeutet und n die Zahl 1 oder 2, bevorzugt 1, ist und der Rest Z an den Rest D oder den Rest K oder im Falle von n = 2 jeweils an D und K gebunden ist.

Diazokomponenten $D-NH_2$ der Anilin- und Aminonaphthalinreihe, die keine faserreaktive Gruppe Z tragen, sind beispielsweise Amine der allgemeinen Formeln (5a) oder (5b)

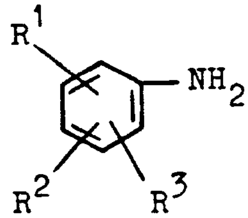

(5a)

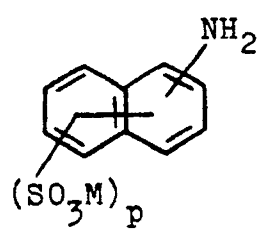

(5b)

in welchen

$R^1$ Wasserstoff, Methyl, Ethyl, Methoxy, Ethoxy, Alkanoyl von 2 bis 5 C-Atomen, wie Acetyl und Propionyl, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^2$ Wasserstoff, Methyl, Ethyl, Methoxy, Ethoxy, Cyan, Carboxy, Sulfo, Alkanoylamino von 2 bis 5 C-Atomen, hiervon insbesondere Acetylamino, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl vofn 1 bis 4 C-Atomen, Phenylsulfonyl oder Phenoxy ist,

$R^3$ ist ein Wasserstoffatom, eine Sulfogruppe oder eine β-Sulfatoethylsulfonyl- oder Vinylsulfonylgruppe,

p die Zahl Null, 1, 2 oder 3 bedeutet (wobei diese Gruppe im Falle von p gleich Null ein Wasserstoffatom bedeutet) und

M die obengenannte Bedeutung hat.

Bevorzugt ist hiervon $R^1$ gleich Wasserstoff, Methyl, Methoxy, Brom, Chlor, Carboxy und Sulfo sowie $R^2$ gleich Wasserstoff, Methyl, Methoxy, Chlor, Carboxy, Sulfo und Acetylamino.

Aromatische Amine der allgemeinen Formel D-$NH_2$ , wie solche der Formeln (5a) und (5b), sind beispielsweise:

Anilin, 2-Methoxy-anilin, 2-Ethoxy-anilin, 2-Methyl-anilin, 4-Nitro-2-amino-anisol, 4-Chlor-2-amino-anisol, 4-Methyl-anilin, 4-Methoxy-anilin, 2-Nitro-4-amino-anisol, 2-Methoxy-5-methyl-anilin, 4-Nitro-anilin, 2-Nitro-4-methyl-anilin, 2,5-Dimethoxyanilin, 2,5-Dimethyl-anilin, 2,4-Dimethyl-anilin, 4-Butyl-anilin, 2,5-Diethoxy-anilin, 4-Cyano-anilin, 2-Chloranilin, 3-Chloranilin, 4-Chloranilin, 4-Chlor-2-methyl-anilin, 3-Chlor-2-methyl-anilin, 4-Chlor-2-amino-toluol, 4-(p-Tolyl-sulfonyl)-anilin, 1-Naphthylamin, 2-Naphthylamin, 4-Benzoylamino-2-ethoxy-anilin, 3-Amino-4-methyl-benzonitril, 4-Methylsulfonyl-anilin, 2-Trifluor-methyl-anilin, 3-Trifluormethyl-4-chloranilin, 2-Amino-oder, 4-Amino-benzoesäure, 3-Amino-benzoesäure, 3-Chlor-anilin-6-carbonsäure, Anilin-2-oder -3- oder -4-sulfonsäure, 2,5-Disulfo-anilin, 2,4-Disulfo-anilin, 3,5-Disulfo-anilin, 2-Aminotoluol-4-sulfonsäure, 2-Amino-anisol-4-sulfonsäure, 2-Amino-anisol-5-sulfonsäure, 2-Ethoxy-anilin-5-sulfonsäure, 2-Ethoxy-anilin-4-sulfonsäure, 4-Sulfo-2-amino-benzoesäure, 2,5-Dimethoxy-anilin-4-sulfonsäure, 2,4-Dimethoxyanilin-5-sulfonsäure, 2-Methoxy-5-methyl-anilin-4-sulfonsäure, 4-Amino-anisol-3-sulfonsäure, 4-Amino-toluol-3-sulfonsäure, 2-Amino-toluol-5-sulfonsäure, 2-Chlor-anilin-4-sulfonsäure, 2-Chlor-anilin-5-sulfonsäure, 2-Bromanilin-4-sulfonsäure, 2,6-Dichlor-anilin-4-sulfonsäure, 2,6-Dimethyl-anilin-3-sulfonsäure oder -4-sulfonsäure, 3-Acetylamino-6-sulfoanilin, 4-Acetyl-amino-2-sulfo-anilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphthalin-3,6-disulfonsäure, 2-Aminonaphthalin-4,8-disulfonsäure, 4-(β-Sulfatoethylsulfonyl)-anilin.

Aromatische Amine der Diazokomponente Z-D-$NH_2$ der Anilin-und Aminonaphthalinreihe mit dem faserreaktiven Rest Z gehen von aromatischen Aminen der allgemeinen Formel (6a) bzw. (6b)

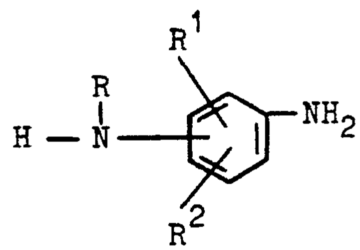
(6a)

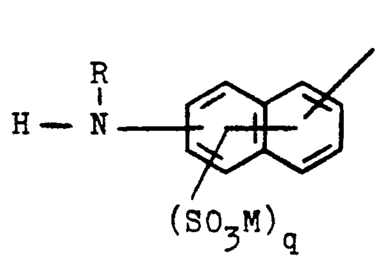
(6b)

aus, in welchen

R, $R^1$ und $R^2$ die oben genannten, insbesondere bevorzugten Bedeutungen haben und

q für die Zahl Null, 1 oder 2 steht (wobei diese Gruppe im Falle von q gleich Null ein Wasserstoffatom bedeutet).

Amine der allgemeinen Formeln (6) sind beispielsweise:

1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxy-benzol, 1,3-Diamino-4-methyl-benzol, 1,4-Diaminobenzol-2,6-disulfonsäure, 1,5-Diamino-4-methyl-benzol-2-sulfonsäure, 1,5-Diamino-4-methoxy-benzol-2-sulfonsäure, 1,3-Diamino-benzol-5-sulfonsäure, 1,3-Diamino-5-methyl-benzol, 1,5-Diamino-naphthalin, 8-Sulfo-1,3-diamino-naphthalin, 4,8-Disulfo-1,6-diamino-naphthalin.

Aromatische Reste E einer kupplungsfähigen und diazotierbaren Verbindung der Anilin- und Aminonaphthalinreihe leiten sich beispielsweise von Aminen der allgemeinen Formeln (7a) und (7b)

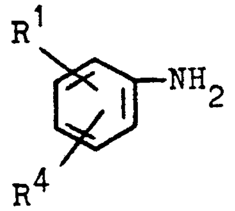 (7a) 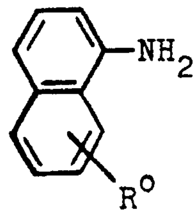 (7b)

ab, in welchen

$R^1$ und M die oben angegebenen Bedeutungen haben,

$R^0$ ein Wasserstoffatom oder eine Sulfogruppe ist,

$R^4$ ein Wasserstoffatom, eine Alkylgruppe von 1 bis 4 C-Atomen, wie die Methyl- oder Ethylgruppe, eine Alkoxygruppe von 1 bis 4 C-Atomen, wie die Methoxy- und Ethoxygruppe, ein Chloratom, eine Alkanoylaminogruppe von 2 bis 5 C-Atomen, wie die Acetylamino- und Propionylaminogruppe, die Benzoylaminogruppe, die Ureidogruppe, eine Phenylureidogruppe, eine Alkylureidogruppe mit 1 bis 4 C-Atomen im Alkylrest, eine Phenylsulfonylgruppe, eine Cycloalkyl-ureido-Gruppe mit 5 bis 8 C-Atomen im Cycloalkylteil, eine Alkylsulfonylgruppe von 1 bis 4 C-Atomen oder eine Alkylsulfonylamino-Gruppe von 1 bis 4 C-Atomen ist.

Solche Verbindungen sind beispielsweise:
Anilin, 3-Methylanilin, 3-Chloranilin, 2,5-Dimethylanilin, 2,5-Dimethoxyanilin, 3-Methoxy-anilin, 3-Methyl-6-methoxy-anilin, 3-Aminophenyl-harnstoff, 3-Acetylamino-6-methylanilin, 2-Amino-4-acetyl-aminobenzol-1-sulfonsäure, 1-Aminonaphthalin, 1-Aminonaphthalin-6- oder -7- oder -8-sulfonsäure, 3-Acetylamino-anilin, 2-Methylanilin, 2-Methoxyanilin, 3-Benzoylamino-anilin, 2,3-Dimethylanilin, 3,5-Dimethylanilin, 1-Amino-2-methoxy-5-acetylamino-benzol, 2-Chlor-6-methyl-anilin, 5-Chlor-2-methyl-anilin, 2,6-Dichlor-3-methyl-anilin, 2-Methoxy-5-methyl-anilin.

Die Reste K der Kupplungskomponente entstammen vorzugsweise der Anilin-, Naphthalin-, Pyridon-, Pyrazol- und Acylacetarylid-Reihe; sie können faserreaktive Gruppen besitzen. Kupplungskomponenten der Formel H-K der Anilin- und Naphthalinreihe sind beispielsweise die Aniline, N-mono- und N,N-disubstituierte Aniline, m-Phenylendiamine und deren Derivate, Naphtholsulfonsäuren, Aminonaphthaline, Naphthole, Hydroxynaphthoesäurederivate, Aminonaphthalinsulfonsäuren oder Aminonaphtholsulfonsäuren.

Kupplungskomponenten der Formel H-K der Anilin- und Naphthalinreihe, die keine faserreaktive Gruppe tragen, sind beispielsweise Verbindungen der allgemeinen Formeln (8a), (8b) und (8c)

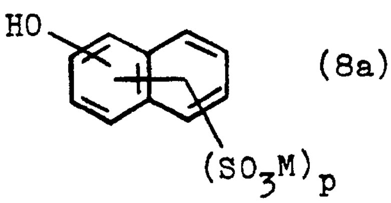 (8a) 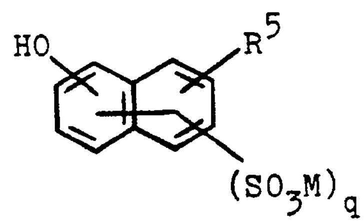 (8b)

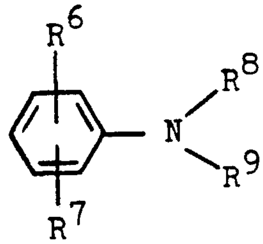 (8c)

in welchen

$R^5$ Alkylureido mit Alkylgruppen von 1 bis 6, bevorzugt 1 bis 3, C-Atomen, Phenylureido, im Phenylrest durch Chlor, Methyl, Methoxy, Nitro, Sulfo und/oder Carboxy substituiertes Phenylureido, Cycloalkylureido mit einem Cycloalkyl- aus 5 bis 8 C-Atomen, wie Cyclohexyl-ureido, Alkanoylamino von 2 bis 7 C-Atomen, wie beispielsweise Acetylamino und Propionylamino, Cyclohexanoylamino, Benzoylamino oder im Benzolrest durch Chlor, Methyl, Methoxy, Nitro, Sulfo und/oder Carboxy substituiertes Benzoylamino

bedeutet,
$R^6$ Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,
$R^7$ Wasserstoff, Alkyl von 1 bis 4 C-Atomen, wie Methyl und Ethyl, Alkoxy von 1 bis 4 C-Atomen, wie Methoxy und Ethoxy, Chlor, Alkanoylamino von 2 bis 7 C-Atomen, wie Acetylamino und Propionylamino, Alkylsulfonylamino von 1 bis 4 C-Atomen, wie Methylsulfonylamino, Ureido, Cyclohexyl-ureido oder Phenylureido ist,
$R^8$ Wasserstoff oder Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, ist,
$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist.

Verbindungen der allgemeinen Formeln (8) sind beispielsweise:
1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure 1-Acetylamino-5-hydroxynaphthalin-7-sulfonsäure, 2-Methyl-amino-8-hydroxynaphthalin-6-sulfonsäure oder 2-(3'- und 4'-Sulfophenyl)-amino-8-hydroxynaphthalin-6-sulfonsäure sowie N,N-Di-(sulfoethyl)-anilin, N-Ethyl-N-sulfoethyl-anilin, N-Sulfoethyl-anilin und N-(β-Carboxyethyl)-anilin und deren im Benzolkern durch Methyl, Methoxy und/oder Ethoxy monooder disubstituierten Derivate.

Von besonderer Bedeutung sind sulfogruppenhaltige, gegebenenfalls Azogruppen, wie 1 oder 2 Azogruppen, tragende Kupplungskomponenten, die in o- oder p-Stellung zu einer Hydroxy- und/oder Aminogruppe kuppeln, wie beispielsweise 2-Acetylamino-5-hydroxy-naphthalin-7-sulfonsäure, 2-Acetylamino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure.

Als Kupplungskomponenten H-K sind weiterhin besonders zu nennen: 1-Amino-8-hydroxynaphthalin-3,6- und 4,6-disulfonsäure sowie deren durch saure Kupplung erhaltene Arylazokupplungsprodukte der Formel (9a)

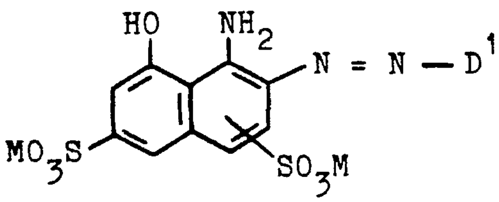

(9a)

in welcher
$D^1$ der Rest einer Diazokomponente, beispielsweise ein Rest der Formel (10a) oder (10b)

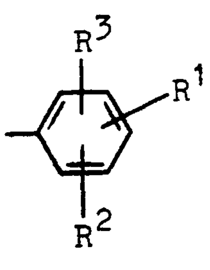

(10a)

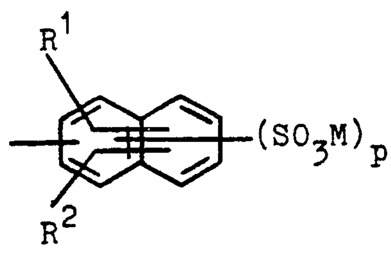

(10b)

sein kann, worin $R^1$, $R^2$, $R^3$, M und p die oben angegebenen, insbesondere bevorzugten Bedeutungen haben.

Einzelne Reste $D^1$ leiten sich beispielsweise von folgenden Aminen ab:

Anilin, Anilin-2-, -3- und -4-sulfonsäure, Anilin-2,4-, -2,5- und -3,5-disulfonsäure, 2-Naphthylamin-1,5- und -4,8-disulfonsäure, 2-Naphthylamin-3,6,8- und -4,6,8-trisulfonsäure, 1-Naphthylamin-3,6,8- und -4,6,8-trisulfonsäure, 1-Naphthylamin-4-sulfonsäure, 2-Naphthylamin-1-sulfonsäure, 3- und 4-Aminoacetanilid, 4- und 5-Acetamido-2-sulfoanilin, 4-Nitroanilin, 4-Nitroanilin-2-sulfonsäure und 2-Amino-6-acetamino-naphthalin-4,8-disulfonsäure, 4-($\beta$-Sulfatoethylsulfonyl)-anilin.

Weitere von der fasserreaktiven Gruppe Z freie Kupplungskomponenten H-K sind bspw. solche der allgemeinen Formeln (11a), (11b), (11c) und (11d)

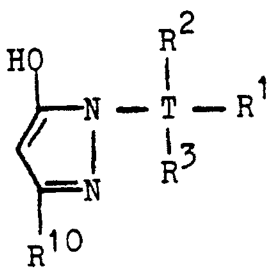

(11a)

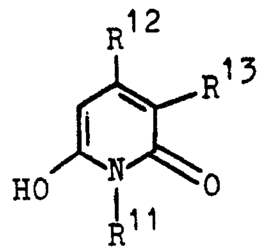

(11b)

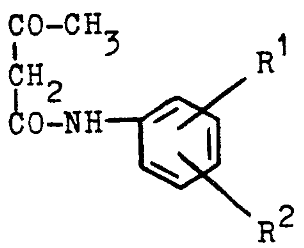

(11c)

oder

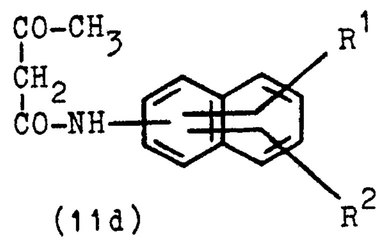

(11d)

in welchen

T für einen Benzol- oder Naphthalinkern steht,

$R^{10}$ Methyl, Carboxy, Methoxycarbonyl oder Ethoxycarbonyl oder ein Phenylrest ist,

$R^{11}$ für ein Wasserstoffatom, eine $C_1$- bis $C_4$-Alkylgruppe, die durch Phenyl oder Sulfophenyl substituiert sein kann, eine durch Hydroxy, Amino, Methoxy, Ethoxy, Carboxy, Sulfo, Sulfato, Phosphato, Methylsulfonyl, Ethylsulfonyl, Phenylsulfonyl, Acetylamino, Benzoylamino oder Cyano substituierte $C_1$- bis $C_4$-Alkylgruppe, eine Cyclohexylgruppe, die Phenylgruppe oder eine durch Carboxy, Sulfo, Benzoylamino, Acetylamino, Methyl, Methoxy, Cyan oder Chlor substituierte Phenylgruppe ist,

$R^{12}$ $C_1$- bis $C_4$-Alkyl oder Phenyl ist,

$R^{13}$ Wasserstoff, Chlor, Brom, Sulfo, Carbamoyl, Methylsulfonyl, Phenylsulfonyl, Cyano oder Sulfomethyl bedeutet

und $R^1$, $R^2$, $R^3$ und M die oben angegebenen, insbesondere bevorzugten Bedeutungen haben.

Pyrazolon-Kupplungskomponenten sind beispielsweise 3-Methyl-, 3-Carboxy, und 3-Alkoxycarbonyl-5-pyrazolone, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Sulfo, Benzoyl, Acetyl, Acetylamino, Nitro, Hydroxy, Carboxy, Carbamoyl oder Sulfamoyl substituiertes Phenyl oder sulfosubstituiertes 1- oder 2-Naphthyl tragen, beispielsweise:

1-Phenyl-, 1-(2'-Chlorphenyl)-, 1-(2'-Methoxyphenyl)-, 1-(2'-Methylphenyl)-, 1-(2',5'-Dichlorphenyl)-, 1-(2',6'-Dichlorphenyl)-1, 1-(2'-Methyl-6'-chlorphenyl)-, 1-(2'-Methoxy-5'-methylphenyl)-, 1-(2'-Chlor-5'-sulfophenyl)-, 1-(2'-Methoxy-5'-sulfophenyl)-, 1-(2'-Methyl-4'-sulfophenyl)-, 1-(2',5'-Dichlor-4'-sulfophenyl)-, 1-(2',5'-Disulfophenyl)-, 1-(2'-Carboxyphenyl)-, 1-(3'-Sulfophenyl)- 1-(4'-Sulfophenyl)-, 1-(3'-Sulfamoylphenyl)-3-carboxy-5-pyrazolon, 1-(3'- oder 4'-Sulfophenyl)-, 1-(2'-Chlorphenyl)-, 1-(2'-Chlor-4'- oder -5'-sulfophenyl)-, 1-(2'-Methyl-4'-sulfophenyl)-, 1-(2',5'-Dichlorphenyl)-, 1-(4',8'-Disulfo-8-naphthyl)-, 1-(6'-Sulfo-1-naphthyl)-3-methyl-5-pyrazolon, 1-Phenyl-5-pyrazolon-3-carbonsäureethylester, 5-Pyrazolon-3-carbonsäureethylester oder 5-Pyrazolon-3-carbonsäure.

Andere aus der Pyrazolreihe stammende Kupplungskomponenten sind beispielsweise 1-Methyl-, 1-Ethyl-, 1-Propyl-, 1-Butyl-, 1-Cyclohexyl-, 1-Benzyl- oder 1-Phenyl-5-aminopyrazol, 1-(4'-Chlorphenyl)-, 1-(4'-Methylphenyl)-5-aminopyrazol oder 1-Phenyl-3-methyl-5-aminopyrazol. Pyridonkupplungskomponenten sind beispielsweise:

1-Ethyl-2-hydroxy-4-methyl-5-carbonamido-pyridon-6, 1-(2'-Hydroxyethyl)-2-hydroxy-4-methyl-5-carbonamido-pyridon-6, 1-Phenyl-2-hydroxy-4-methyl-5-carbonamido-pyridon-6, 1-Ethyl-2-hydroxy-4-methyl-5-cyano-pyridon-6, 1-Ethyl-2-hydroxy-4-sulfomethyl-5-carbonamido-pyridon-6, 1-Ethyl-2-hydroxy-4-methyl-5-sulfomethyl-pyridon-6, 1-Methyl-2-hydroxy-4-methyl-5-cyano-pyridon-6, 1-Methyl-2-hydroxy-5-acetyl-pyridon-6, 1,4-Dimethyl-2-hydroxy-5-cyano-pyridon-6, N-(β-Sulfoethyl)-4-methyl-5-cyano- oder -5-sulfomethyl-oder -5-sulfo- oder -5-carbamoyl-6-hydroxy-2-pyridon, N-(β-Sulfatoethyl)-4-methyl-5-cyano-oder -5-sulfomethyl-oder -5-sulfo- oder -5-carbamoyl-6-hydroxy-2-pyridon, N-(β-Phosphatoethyl)-, N-(β-Sulfoethyl)- und N-(β-Sulfatoethyl)-4-methyl-6-hydroxy-2-pyridon, 1,4-Dimethyl-2-hydroxy-5-carbonamido-pyridon-6, 2,6-Dihydroxy-4-ethyl-5-cyano-pyridin, 2,6-Dihydroxy-4-ethyl-5-carbonamido-pyridin, 1-Ethyl-2hydroxy-4-methyl-5-sulfomethyl-pyridon-6, 1-Methyl-2-hydroxy-4-methyl-5-methylsulfonyl-pyridon-6 oder 1-Carboxymethyl-2-hydroxy-4-ethyl-5-phenylsulfonyl-pyridon-6.

Faserreaktivgruppenhaltige Kupplungskomponenten der Anilin-und Naphthalinreihe leiten sich beispielsweise von Verbindungen der allgemeinen Formeln (11e) bis (11g)

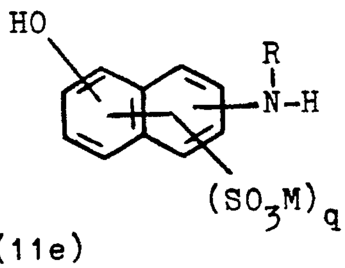

(11e)

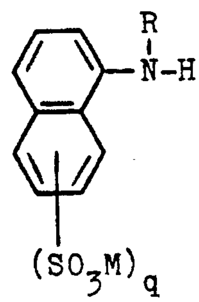

(11f)

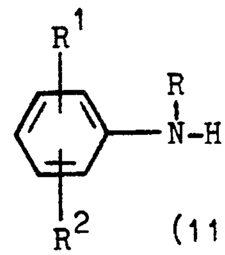

(11g)

in welchen R, $R^1$, $R^2$, M und q die obengenannten, insbesondere bevorzugten Bedeutungen haben.

Durch Umsetzung mit einem faserreaktiven Acylierungsmittel vor der Kupplung mit dem Diazoniumsalz, die Verbindungen der allgemeinen Formel (11e) betreffend, oder nach der Kupplung mit dem Diazoniumsalz, die Verbindungen der allgemeinen Formeln (11e) bis (11g) betreffend, kann ein faserreaktiver Rest eingeführt werden. Prinzipiell kommen hierfür alle bekannten faserreaktiven Acylierungsmittel in Betracht, wie insbesondere 2,4-Dichlo-6-(β-sulfatoethylsulfonyl-phenyl)-amino-s-triazin, 2,4-Dichlor-6-bis-[β-(β'-chlorethylsulfonyl)-ethyl]-amino-s-triazin und 3-(β-Chlorethylsulfonyl)-benzoylchlorid, insbesondere jedoch eine Dichlortriazinylamino-s-triazin-Verbindung der später genannten allgemeinen Formel (19).

Weitere Kupplungskomponenten H-K-Z sind die durch saure Kupplung erhältlichen Arylazo-Kuppungsprodukte der 1-Amino-8-hydroxy-naphthalin-3,6- und -4,6-disulfonsäure der allgemeinen Formel (9b)

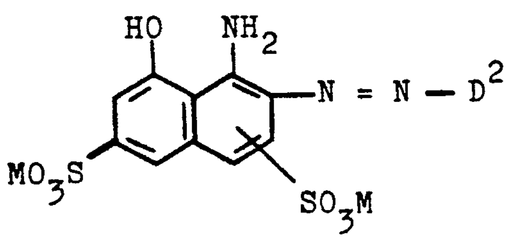

(9b)

in welcher $D^2$ der Rest einer Diazokomponente mit einer faserreaktiven Gruppe, insbesondere der Formel (3), ist. Der Formelrest $D^2$ ist beispielsweise ein Rest der Formel (12)

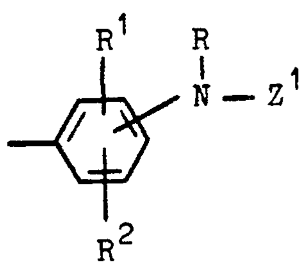

(12)

in welcher R, $R^1$ und $R^2$ die oben angegebenen Bedeutungen haben und

$Z^1$ ein Rest der allgemeinen Formel (3a)

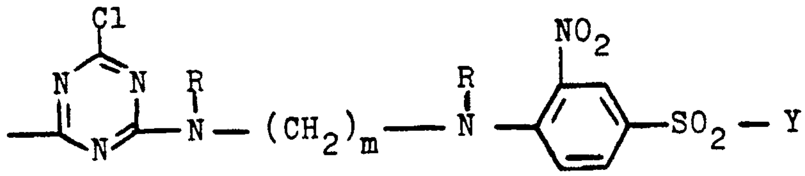

(3a)

mit m, R und Y der oben angegebenen Bedeutung ist.

Aromatische Diamine aus dem Rest der Formel (12) sind beispielsweise: 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxybenzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, wobei in allen diesen Diaminoverbindungen die eine primäre oder sekundäre Aminogruppe durch den faserreaktiven Rest $Z^1$ substituiert ist.

Bevorzugte Reste $D^2$ der Formel (10) sind beispielsweise die Reste der Formeln (12a), (12b), (12c), (12d) und (12e) mit M der oben angegebenen Bedeutung:

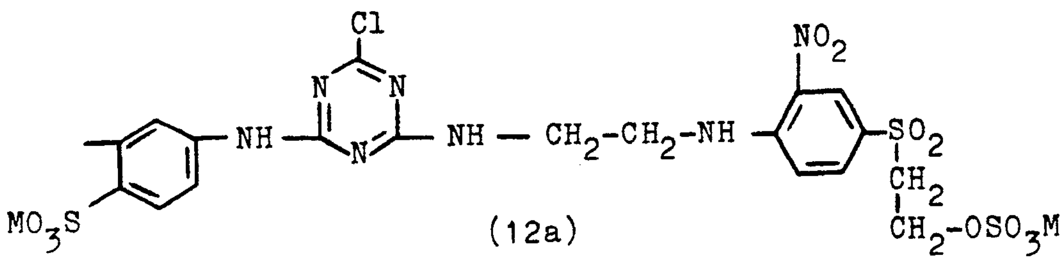

(12a)

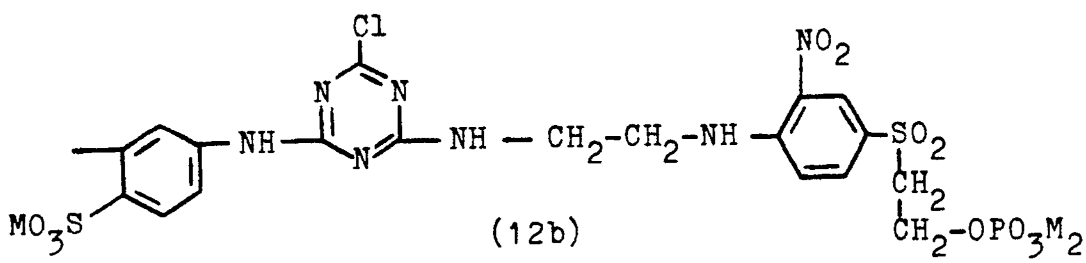

(12b)

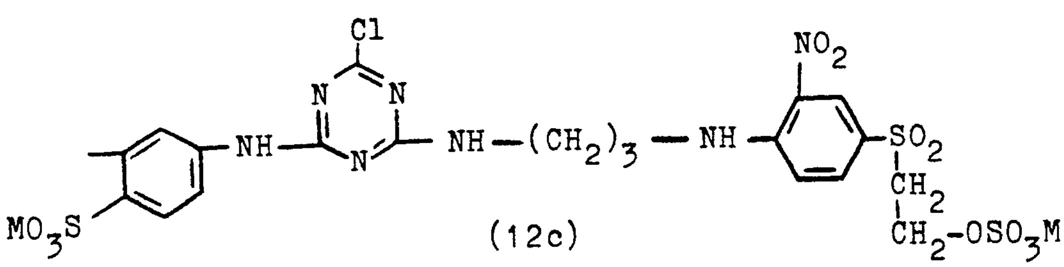

(12c)

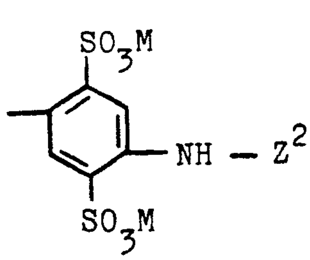

(12d)

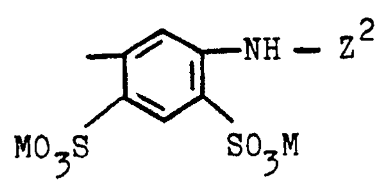

(12e)

in welchen $Z^2$ ein Rest der Formel (3b)

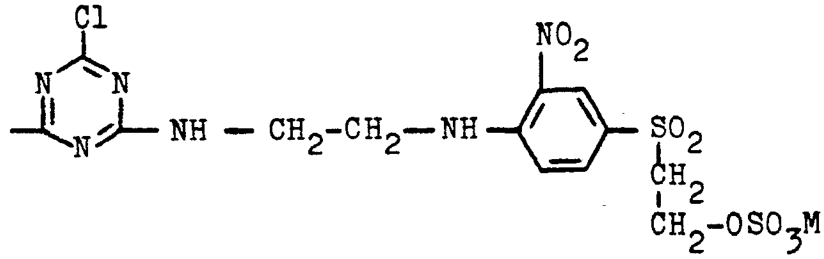

(3b)

mit M der obigen Bedeutung ist.

Faserreaktive Diazokomponentenreste $D^2$ sind auch solche, die eine andere faserreaktive Gruppe als die Gruppe Z enthalten. Solche Reste $D^2$ sind beispielsweise 3-(2,4-Dichlors-triazin-6-yl)-amino-4,6-disulfophenyl, 4-(2-m-Sulfophenylamino-4-chlor-s-triazin-6-yl)-amino-2-sulfo-phenyl, 4-$\beta$-Sulfatoethylsulfonyl-phenyl, 3-$\beta$-Sulfatoethylsulfonylphenyl und 4-Vinylsulfonyl-phenyl.

Kupplungskomponenten, die erfindungsgemäß die faserreaktive Gruppe der Formel (3a) enthalten, sind beispielsweise Verbindungen der allgemeinen Formel (13a), (13b) und (13c) bzw. deren $Z^1$-freien Vorprodukte:

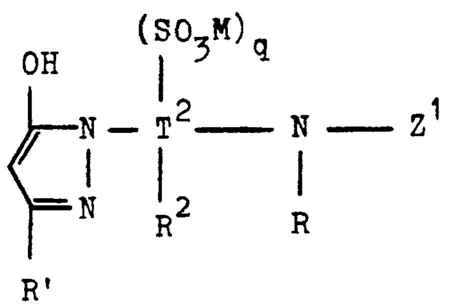

(13a)

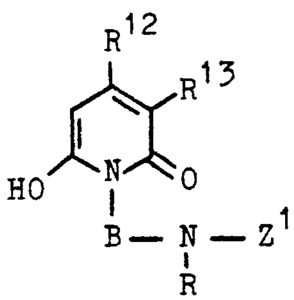

(13b)

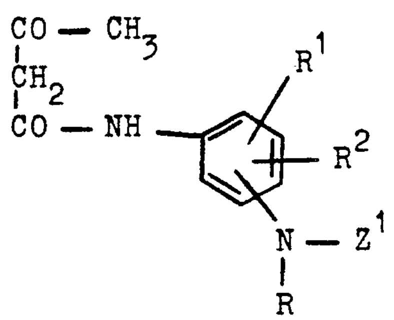

(13c)

in welchen

$R^1$, $R^2$, R, $R^{12}$, $R^{13}$, M, $Z^1$ und q die oben angegebenen Bedeutungen haben und

$T^2$ einen Benzol- oder Naphthalinring bedeutet,

R' eine Methyl- oder Carboxygruppe ist und

B Alkyl von 1 bis 4 C-Atomen, Benzyl oder Phenethyl oder Phenyl oder im Benzolrest durch Fluor, Chlor, Brom, Methyl, Methoxy, Cyano, Sulfo, Carboxy, Acetyl, Nitro, Carbamoyl und/oder Sulfamoyl substituiertes Benzyl, Phenethyl oder Phenyl ist.

Kupplungskomponenten, die den Verbindungen der allgemeinen Formeln (13a) bis (13c) entsprechen und die anstelle des Restes $Z^1$ ein Wasserstoffatom besitzen, in deren freie Aminogruppe jedoch nach beendeter Kupplung der Rest $Z^1$ eingeführt werden kann, sind beispielsweise:

1-(3'- oder 4'-Aminophenyl)-, 1-(2'-Sulfo-5'-aminophenyl)-und 1-(2'-Methoxy-5'-aminophenyl)-3-carboxy-5-pyrazolon, 1-(3'- oder 4'-Aminophenyl)- und 1-(3'- oder 4'-Nitrophenyl)-3-methyl-5-pyrazolon, 1-(3'- oder 4'-Nitrophenyl)-, 1-(6'-Nitro-4',8'-disulfonaphthyl-2')- und 1-(6'-Amino-4',8'-disulfonaphthyl-2')-3-carboxy-5-pyrazolon.

Bevorzugte faserreaktive Kupplungskomponenten entsprechend den Formeln (13a) und (13b) sind beispielsweise Verbindungen der Formeln (14a) bis (14h):

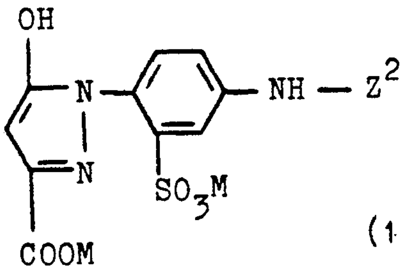

(14a)

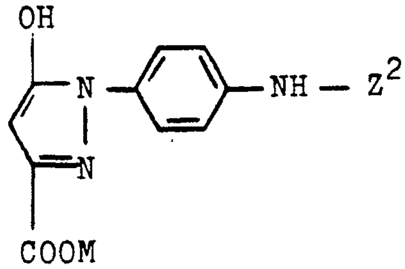

(14b)

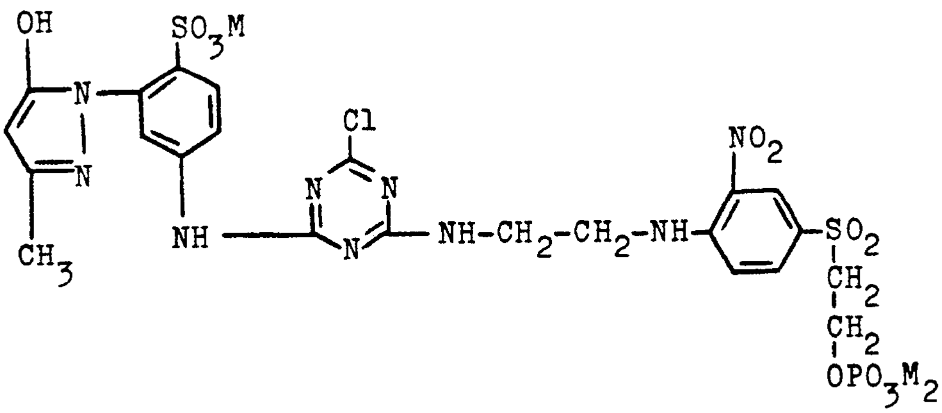

(14c)

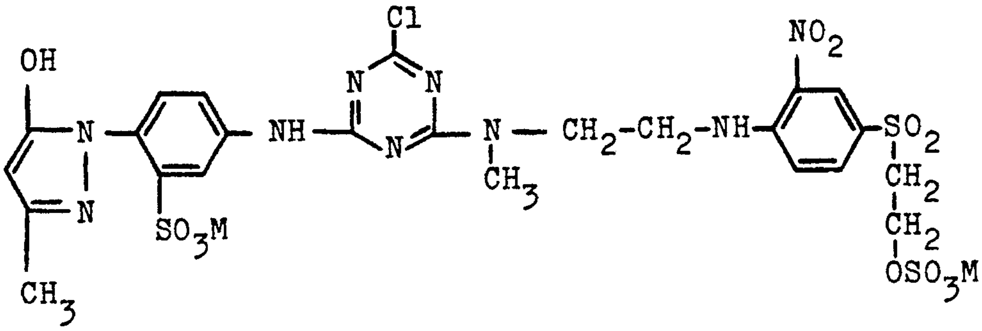

(14d)

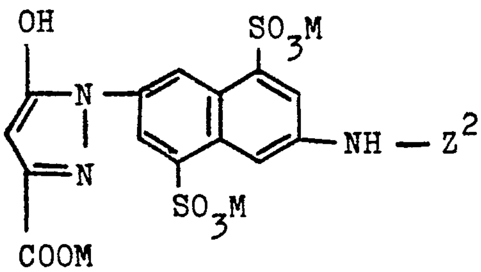

(14e)

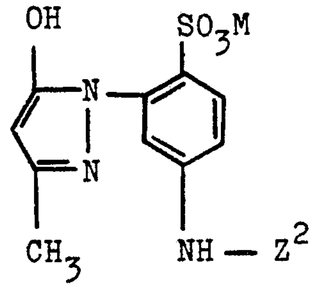

(14f)

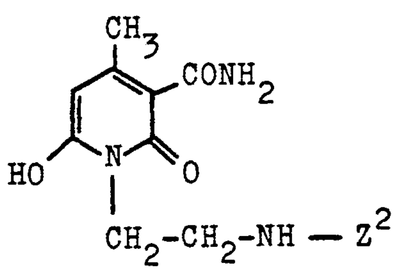

(14g)

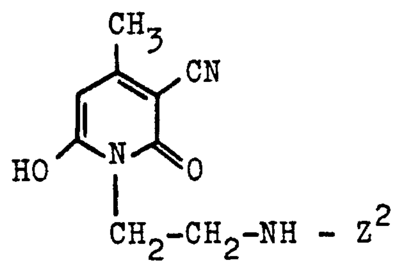

(14h)

in welchen M und $Z^2$ die obengenannten Bedeutungen haben.

Von den erfindungsgemäßen Verbindungen der allgemeinen Formel (1) sind von besonderer technischer Bedeutung die Disazoverbindungen der allgemeinen Formeln (15), (16a), (16b) und (16c):

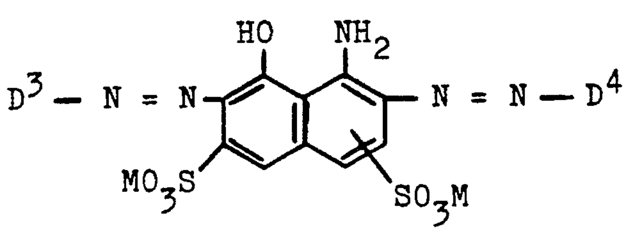

(15)

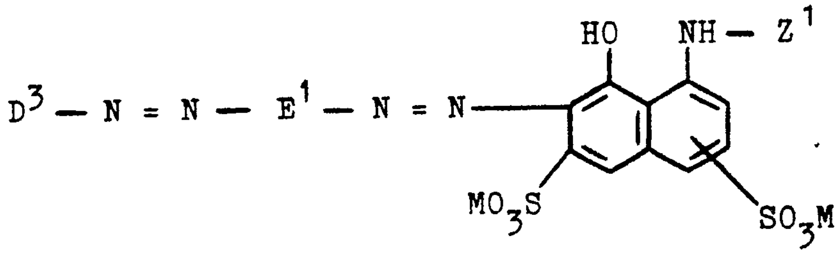

(16a)

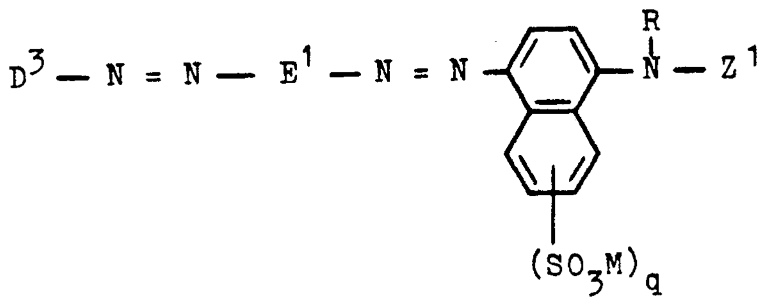

(16b)

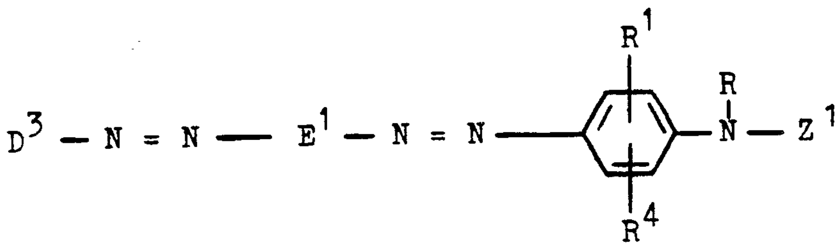

(16c).

In diesen Formeln bedeuten:

In Formel (15) haben $D^3$ und $D^4$ zueinander gleiche oder voneinander verschiedene Bedeutungen und jedes ist ein Rest einer Diazokomponente, von denen mindestens eine eine faserreaktive Gruppe der allgemeinen Formel (3), bevorzugt mit R jeweils gleich Wasserstoff und insbesondere bevorzugt mit m gleich 2, besitzt und M die obengenannte Bedeutung hat; bevorzugt sind $D^3$ und $D^4$, zueinander gleich oder voneinander verschieden, jedes ein Rest $D^1$ oder $D^2$ entsprechend den obengenannten und definierten allgemeinen Formeln (10a) und (10b) bzw. (12), insbesondere bevorzugt ein Mono- oder Disulfophenyl- oder Mono-, Di- oder Trisulfonaphthyl-Rest bzw. ein Rest der Formel (12A), von diesem insbesondere ein Rest der Formel (12B)

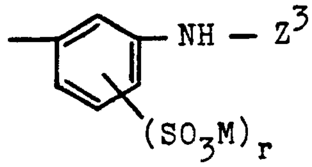

(12A)

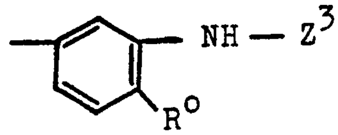

(12B)

in welchen

r für die Zahl 1 oder 2 steht,

$R^o$ und M die obengenannte Bedeutung haben und

$Z^3$ ein Rest der allgemeinen Formel (3c)

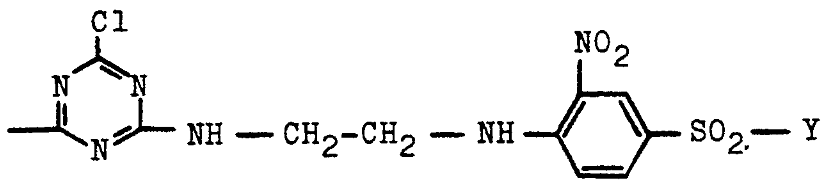

(3c)

mit Y der obengenannten Bedeutung ist;
in Formel (16a) haben $D^3$ und M die für Formel (15) genannten Bedeutungen, wobei $D^3$ bevorzugt ein Rest $D^1$ der Formel (10a) oder (10b) ist, insbesondere bevorzugt ein Monosulfo- oder Disulfophenyl- oder ein Monosulfo-, Disulfo- oder Trisulfonaphthylrest ist, $Z^1$ ist ein Rest der allgemeinen Formel (3a), bevorzugt mit R jeweils gleich Wasserstoff, und insbesondere bevorzugt ein Rest der allgemeinen Formel (3c) und $E^1$ ist ein Rest der allgemeinen Formel (7A) oder (7B)

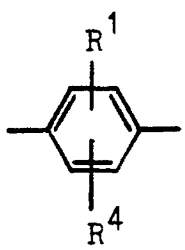

(7A)

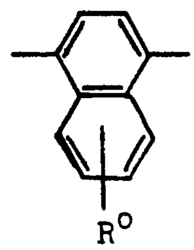

(7B)

mit $R^1$, $R^4$ und $R^o$ der obengenannten Bedeutung, bevorzugt jedoch ein Rest der Formel (7A);
in den Formeln (16b) und (16c) haben $D^3$, $E^1$, M, q, $Z^1$, R, $R^1$ und $R^4$ die für Formel (15) bzw. (16a) genannten Bedeutungen, wobei $D^3$ bevorzugt ein Rest $D^1$ der Formel (10a) oder (10b) ist, insbesondere bevorzugt ein Monosulfo- oder Disulfo-phenyl- oder ein Monosulfo-, Disulfo- oder Trisulfonaphthylrest ist, R bevorzugt ein Wasserstoffatom ist und in Formel (16b) $E^1$ bevorzugt ein Rest der Formel (7A) und in Formel (16c) bevorzugt ein Rest der Formel (7B) ist.

Bevorzugt sind von den Verbindungen der allgemeinen Formeln (15) und (16) diejenigen, in welchen Y für den β-Phosphatoethyl-Rest und insbesondere für den β-Sulfatoethyl-Rest steht.

Von den Farbstoffen der allgemeinen Formel (15) können diejenigen der Beispiele 121 und 137 hervorgehoben werden, von den Farbstoffen der allgemeinen Formel (16a) derjenige des Beispiels 66, von den Farbstoffen der allgemeinen Formel (16b) diejenigen der Beispiele 67 und 107 und von den Farbstoffen der allgemeinen Formel (16c) diejenigen der Beispiele 100, 101, 102 und 103.

Die erfindungsgemäßen Farbstoffe lassen sich in üblicher Weise der Synthese von Farbstoffen herstellen, beispielsweise durch Umsetzung von für die entsprechende Farbstoffklasse dem Fachmann geläufigen Farbstoffvorprodukten mit den für diese Farbstoffklasse üblichen Synthesemethoden, wobei mindestens eine dieser Farbstoffvorprodukte eine faserreaktive Gruppe der allgemeinen Formel (3) enthält. So können beispielsweise Mono- und Disazofarbstoffe entsprechend der allgemeinen Formel (1) durch Umsetzung von deren Diazo- und Kupplungskomponenten in der hierfür üblichen Verfahrensweise der Diazotierung und Kupplung synthetisiert werden, wobei die Diazo- oder Kupplungskomponente oder beide (jeweils) eine faserreaktive Gruppe der allgemeinen Formel (3) enthalten. Im Falle der Synthese von Disazofarbstoffen kann bereits die Diazo- oder Kupplungskomponente die zweite Azogruppierung gebunden enthalten. Erfindungsgemäß einsetzbare Diazokomponenten sind die für faserreaktive Azofarbstoffe üblichen aromatischen carbocyclischen und heterocyclischen Aminoverbindungen, die gegebenenfalls die faserreaktive Gruppe der allgemeinen Formel (3) enthalten, und die zur Synthese von faserreaktiven Azofarbstoffen üblichen Kupplungskomponenten, beispielsweise der Naphthol-, Anilin-, Naphthylamin-, Aminonaphthol-, Pyrazolon- und Pyridonreihe, wobei gegebenenfalls die Kupplungskomponente die faserreaktive Gruppe der allgemeinen Formel (3) enthält. Solche Diazo- und Kupplungskomponenten sind beispielsweise die anfangs beschriebenen Verbindungen entsprechend den allgemeinen Formeln (5), (6), (7), (8), (9), (10), (11) und (13) sowie (14).

Die Diazotierungs- und Kupplungsreaktionen erfolgen in üblicher Weise, so die Diazotierung in der Regel bei einer Temperatur zwischen -5 °C und +15 °C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle der aminogruppenhaltigen Kupplungskomponente und bei einem pH-Wert zwischen 3 und 7,5 im Falle der hydroxygruppenhaltigen Kupplungskomponente und bei einer Temperatur zwischen 0 und 25 °C, ebenso bevorzugt in wäßrigem Medium.

Die neuen Farbstoffe der allgemeinen Formel (1) können ebenfalls erfindungsgemäß in der Weise hergestellt werden, daß man Cyanurchlorid mit einer Aminoverbindung der allgemeinen Formel (17)

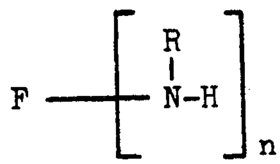

(17)

in welcher F, R und n die obengenannten Bedeutungen haben, und einer Aminoverbindung der allgemeinen Formel (18)

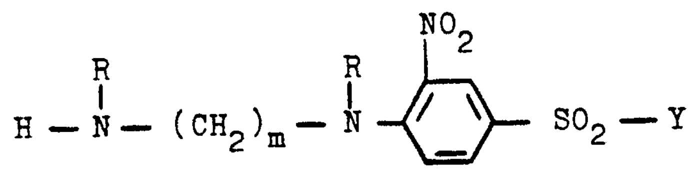

(18)

in welcher m, R und Y die obengenannten Bedeutungen haben, in beliebiger Folge umsetzt. So kann man zunächst eine Aminoverbindung der allgemeinen Formel (17) mit Cyanurchlorid zur Dichlortriazinylaminoverbindung der allgemeinen Formel (17a)

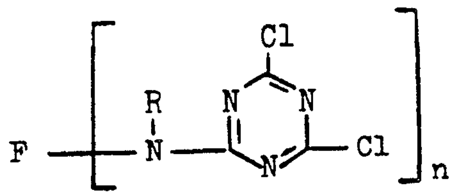

(17a)

mit F, R und n der obengenannten Bedeutung umsetzen, und diese wird durch Reaktion mit einer Aminoverbindung der allgemeinen Formel (18) in äquivalenter Menge in den Endfarbstoff (1) übergeführt, oder man reagiert zunächst eine Aminoverbindung der allgemeinen Formel (18) mit Cyanurchlorid zur Dichlortriazinylaminoverbindung der allgemeinen Formel (19)

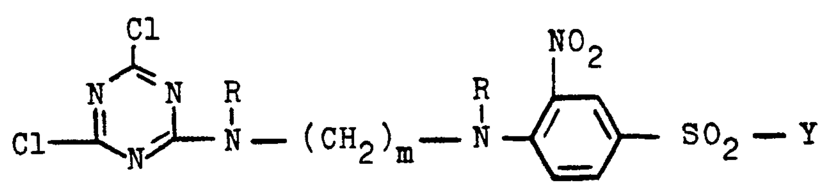

(19)

mit m, R und Y der obengenannten Bedeutung und setzt diese in äquivalenter Menge mit der Verbindung der allgemeinen Formel (17) zum Endfarbstoff (1) um. Die Kondensationsreaktionen zwischen Cyanurchlorid bzw. den Dichlortriazinylaminoverbindungen (17a) und (19) mit den Aminoverbindungen (17) und/oder (18) können in der üblichen Weise der Umsetzung von Cyanurchlorid bzw. Dichlortriazinylaminoverbindungen mit Aminoverbindungen erfolgen, so in organischem oder bevorzugt wäßrig-organischem Medium, insbesondere bevorzugt in wäßrigem Medium unter Zusatz säurebindender Mittel, wie Alkali- oder Erdalkalicarbonaten, Alkali- oder Erdalkalihydrogencarbonaten oder -hydroxiden oder Alkaliacetaten, wobei die Alkali- und Erdalkalimetalle vorzugsweise Natrium, Kalium oder Calcium sind. Säurebindende Mittel sind ebenso tertiäre Amine, wie beispielsweise Pyridin, Triethylamin oder Chinolin. Sofern diese Kondensationsreaktionen in organischem oder wäßrigorganischem Medium erfolgen, ist das (anteilige) organische Lösemittel Aceton, Dioxan und Dimethylformamid.

Die Kondensationsreaktionen zwischen Cyanurchlorid und den Aminoverbindungen erfolgen in der Regel bei einer Temperatur zwischen -10°C und +40°C, vorzugsweise zwischen -10°C und +30°C, sowie bei einem pH-Wert zwischen 1,0 und 7,0, bevorzugt zwischen 3,5 und 5. Die Umsetzung der Dichlortriazinylaminoverbindungen der allgemeinen Formel (17a) oder (19) mit einer Aminoverbindung der

allgemeinen Formel (17) bzw. (18) erfolgt beispielsweise bei einer Temperatur zwischen 10 und 60° C, bevorzugt zwischen 20 und 50° C, und bei einem pH-Wert zwischen 2 und 8, bevorzugt zwischen 3 und 7, wobei darauf zu achten ist, daß die faserreaktive Gruppierung im schwach alkalischen Bereich nicht geschädigt wird.

Die Ausgangs-Aminoverbindungen entsprechend der allgemeinen Formel (18) sind aus Beispiel 5 der US-PS 3 268 548 bekannt bzw. können analog der dort angegebenen Verfahrensweise hergestellt werden. Die β-Hydroxyethylsulfonyl-Verbindung wird anschließend verestert, so in die entsprechende β-Sulfatoethylsulfonyl- oder β-Phosphatoethylsulfonyl-Verbindung mittels üblicher Sulfatierungs- und Phosphatierungsmittel; solche Methoden sind an sich bekannt und können analog angewendet werden.

Die erfindungsgemäßen Verbindungen der allgemeinen Formel (1) eignen sich als faserreaktive Farbstoffe zum Färben und Bedrucken von hydroxygruppenhaltigen Fasern, insbesondere von Baumwolle, ebenso auch für synthetische oder natürliche Polyamidfasern wie Wolle. Als Färbeverfahren eignen sich die bekannten Färbe- und Druckverfahren für faserreaktive Farbstoffe, insbesondere solche für faserreaktive Farbstoffe, die eine Kombination aus den faserreaktiven Gruppen der Chlortriazin- und Vinylsulfonreihe besitzen. Solche Verfahrensweisen sind zahlreich in der Allgemein- und Patentliteratur beschrieben, so beispielsweise in der europäischen Patentanmeldungs-Veröffentlichung Nr. 0 196 536A1. Insbesondere sind die erfindungsgemäßen Farbstoffe im Ausziehverfahren bei 40 bis 80° C und im Kaltverweilverfahren mit Vorteil anwendbar. Die Applikation ist in einem weiten Temperaturbereich möglich, und die Farbstoffe zeichnen sich durch eine hohe Farbtiefe und einen hohen Fixiergrad aus; deren Färbungen und Drucke besitzen hohe Echtheiten.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalisalze, in die Synthese eingesetzt werden.

Die für die erfindungsgemäßen Verbindungen angegebenen Absorptionsmaxima ($\lambda_{max}$) und Extinktionswerte E im sichtbaren Bereich wurden anhand derer Alkalimetallsalze in wäßriger Lösung ermittelt. Die in den Tabellenbeispielen nach dem Farbton in Klammer stehenden Zahlen stellen die Absorptionswerte in nm dar.

## Beispiel 1

Man diazotiert und kuppelt in üblicher Weise 38,3 Teile 2-Amino-3,6,8-trisulfo-naphthalin mit 15,1 Teilen N-(3-Aminophenyl)-harnstoff und setzt die gebildete Azoverbindung in an und für sich bekannter Weise mit 19 Teilen fein dispergiertem Cyanurchlorid bei 20° C und einem pH-Wert von 6,5 und anschließend mit 37 Teilen 4-(β-Sulfatoethylsulfonyl)-3-nitro-1-(β-amino-ethylamino)-benzol bei einer Temperatur von 55 bis 65° C und einem pH-Wert von 6,5 um. Die so gebildete erfindungsgemäße Monoazoverbindung wird aus der wäßrigen Syntheselösung mit Natriumchlorid ausgefällt, isoliert und getrocknet. Man erhält ein rotstichig gelbes, elektrolythaltiges Pulver des Natriumsalzes der Verbindung der Formel

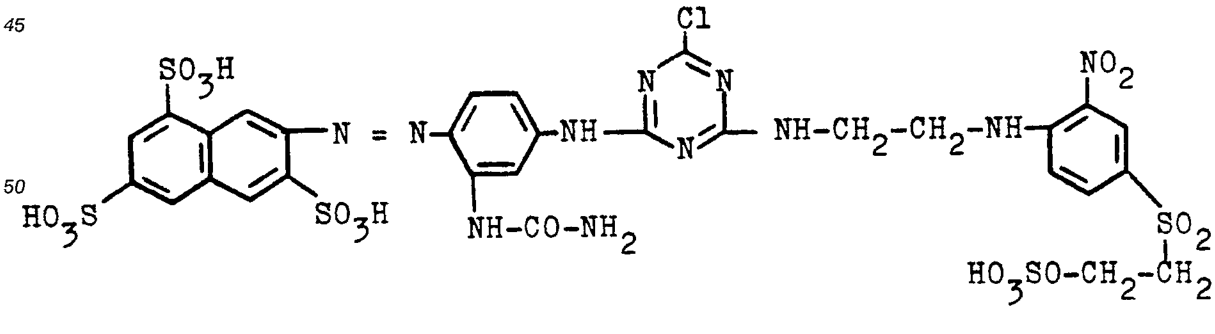

($\lambda_{max}$ = 421 nm)

das sehr gute faserreaktive Farbstoffeigenschaften besitzt und beispielsweise Cellulosefasermaterialien nach den für faserreaktive Farbstoffe üblichen Applikations- und Fixiermethoden in kräftigen, klaren, rotstichig gelben Tönen mit hohen Auszieh- und Fixierwerten färbt. Die mit dieser erfindungsgemäßen Verbindung erhältlichen Färbungen und Drucke zeigen sehr gute Lichtechtheiten und Naßechtheitseigenschaften, wie insbesondere sehr gute Waschechtheiten und gute Naßlichtechtheiten, von denen insbesondere die gute alkalische Schweißlichtechtheit hervorgehoben werden kann.

Beispiele 2 bis 18

Weitere erfindungsgemäße Farbstoffe entsprechend einer allgemeinen Formel (A)

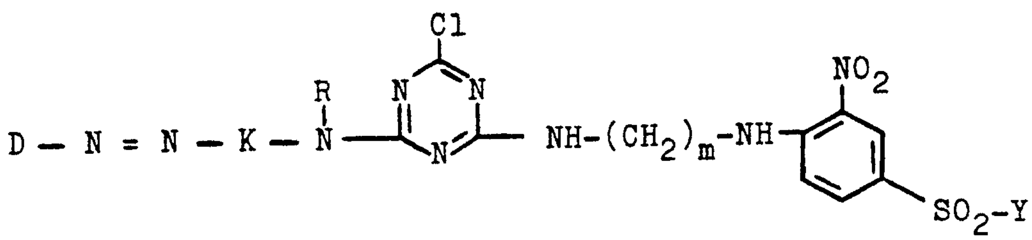

(A)

sind in den nachfolgenden Tabellenbeispielen mit Hilfe der dort angegebenen Komponenten beschrieben. Sie lassen sich in erfindungsgemäßer Weise, beispielswiese analog dem Ausführungsbeispiel 1, unter Anwendung der von einer faserreaktiven Gruppe freien Diazokomponente D-$NH_2$ , der Kupplungskomponente H-K-NHR , Cyanurchlorid und einem Amin entsprechend der in der Beschreibung angegebenen allgemeinen Formel (18) mit R jeweils gleich einem Wasserstoffatom herstellen.

Diese erfindungsgemäßen Monoazoverbindungen (Farbstoffe) besitzen ebenfalls sehr gute faserreaktive Farbstoffeigenschaften und färben insbesondere Cellulosefasermaterialien in den für das jeweilige Tabellenbeispiel angegebenen kräftigen, klaren, echten Farbtönen.

| Bsp. | Diazokomponente $D-NH_2$ | Kupplungskomponente H-K-NHR | m | Y | Farbton |
|---|---|---|---|---|---|
| 2 | 2-Amino-3,6,8-trisulfo-naphthalin | N-(3-Aminophenyl)-harnstoff | 3 | ß-Sulfato-ethyl | goldgelb |
| 3 | dito | dito | 2 | ß-Phosphato-ethyl | goldgelb |
| 4 | dito | N-Phenyl-N'-(3-aminophenyl)-harnstoff | 2 | ß-Phosphato-ethyl | goldgelb |
| 5 | dito | N-(3-Aminophenyl)-N'-methyl-harnstoff | 2 | ß-Sulfato-ethyl | goldgelb |
| 6 | dito | 3-Acetylamino-anilin | 2 | ß-Sulfato-ethyl | goldgelb |
| 7 | dito | 3-Propionylamino-anilin | 3 | ß-Phosphato-ethyl | goldgelb |
| 8 | 2-Amino-6,8-disulfo-naphthalin | dito | 2 | ß-Sulfato-ethyl | goldgelb |
| 9 | dito | 3-Acetylamino-anilin | 2 | dito | goldgelb |
| 10 | dito | N-(3-Aminophenyl)-harnstoff | 2 | dito | goldgelb |
| 11 | 2-Amino-4,8-disulfo-naphthalin | dito | 2 | ß-Sulfato-ethyl | goldgelb |
| 12 | dito | N-Cyclohexyl-N'-(3-amino-phenyl)-harnstoff | 3 | ß-Phosphato-ethyl | goldgelb |
| 13 | dito | 3-(Methylsulfonylamino)-anilin | 2 | ß-Sulfato-ethyl | goldgelb |
| 14 | 2-Amino-1,6-disulfo-naphthalin | N-(3-Aminophenyl)-harnstoff | 2 | ß-Sulfato-ethyl | goldgelb |
| 15 | dito | N-(3-Aminophenyl)-N'-methyl-harnstoff | 2 | dito | goldgelb |

| Bsp. | Diazokomponente $D-NH_2$ | Kupplungskomponente H-K-NHR | m | Y | Farbton |
|---|---|---|---|---|---|
| 16 | 2-Amino-3,6,8-trisulfo-naphthalin | N-(3-Aminophenyl)-harnstoff | 3 | Vinyl | goldgelb |
| 17 | dito | dito | 2 | Vinyl | goldgelb |
| 18 | dito | 3-Acetylamino-anilin | 2 | Vinyl | goldgelb |

Beispiel 19

Man rührt 37 Teile 4-(β-Sulfatoethylsulfonyl)-3-nitro-1-(β-aminoethyl-amino)-benzol in 500 Teilen Wasser an und setzt es unter Rühren bei 20° C und einem pH-Wert von 2 bis 2,5 mit 19 Teilen fein dispergiertem Cyanurchlorid um. Sodann gibt man eine neutrale Lösung von 18,8 Teilen 1,3-Diaminobenzol-4-sulfonsäure in 200 Teilen Wasser hinzu und führt die zweite Kondensationsreaktion bei 70° C und einem pH-Wert von 4 bis 5 durch. Die so erhaltene Diazokomponente mit der faserreaktiven Gruppierung wird diazotiert und bei einer Temperatur von 10° C und einem pH-Wert von 6,5 auf 23,3 Teile N-(βSulfoethyl)-4-methyl-6-hydroxy-2-pyridon gekuppelt.

Anschließend wird die erfindungsgemäße Verbindung aus dem Syntheseansatz isoliert, beispielsweise durch Sprühtrocknen oder durch Aussalzen mit Natriumchlorid. Man erhält ein elektrolythaltiges Produkt des Alkalimetallsalzes der Verbindung der Formel

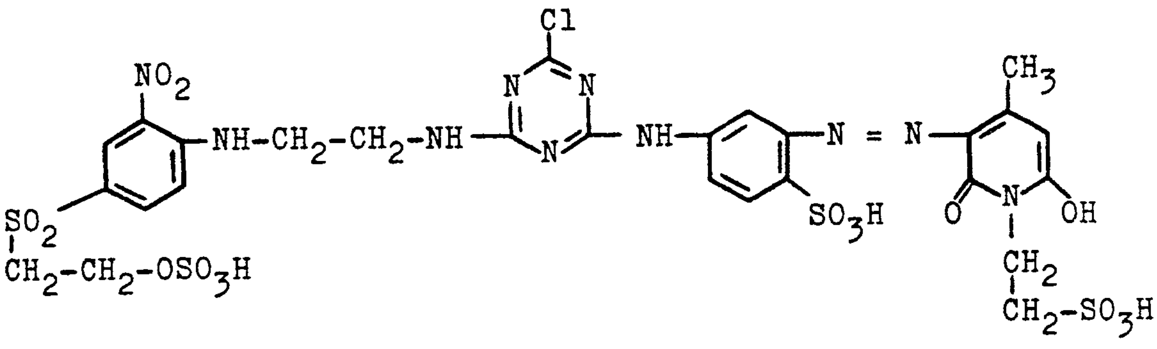

($\lambda_{max}$ = 416 nm)

das sehr gute Farbstoffeigenschaften besitzt und beispielsweise auf Cellulosefasermaterialien kräftige klare Färbungen und Drucke von grünstichig gelbem Farbton mit sehr guten Licht- und Naßechtheitseigenschaften liefert.

Beispiel 20

Ein auf üblichem Wege hergestelltes primäres Kondensationsprodukt aus 18,8 Teilen 1,3-Diaminobenzol-4-sulfonsäure und 19 Teilen Cyanurchlorid wird diazotiert und auf 28,5 Teile 1-(4'-Sulfophenyl)-3-carboxy-5-pyrazolon bei einem pH-Wert zwischen 5 und 7 gekuppelt. Danach wird eine wäßrige, neutrale Lösung von 37 Teilen 4-(β-Sulfatoethylsulfonyl)-3-nitro-1-(β-aminoethyl-amino)-benzol zugegeben; der Reaktionsansatz wird auf 40° C erwärmt und ein pH-Wert von 7 eingestellt und die (zweite) Kondensationsreaktion mit der Dichlortriazinylamino-Verbindung bei dieser Temperatur und diesem pH-Wert zu Ende geführt. Die gebildete erfindungsgemäße Verbindung wird mit Kaliumchlorid ausgesalzen, isoliert und getrocknet.

Die Verbindung besitzt, in Form der freien Säuren geschrieben, die Formel

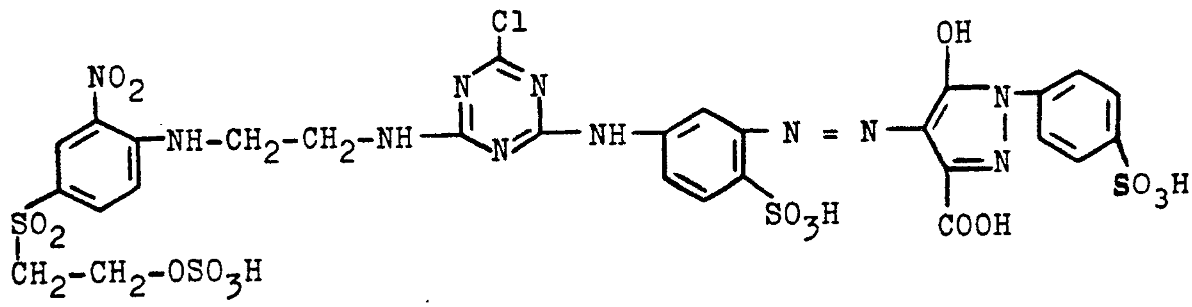

( $\lambda_{max}$ = 403 nm )

und zeigt sehr gute Farbstoffeigenschaften. Die Verbindung färbt beispielsweise Cellulosefasermaterialien nach den in der Technik üblichen Applikations- und Fixierverfahren für faserreaktive Farbstoffe in echten, gelben Tönen.

<u>Beispiel 21</u>

Das auf üblichem Wege hergestellte Monokondensationsprodukt von 1,3-Diaminobenzol-4-sulfonsäure mit Cyanurchlorid wird diazotiert und auf 1-Acetylamino-3,6-disulfo-8-naphthol gekuppelt. Die erhaltene Dichlortriazinylamino-Azoverbindung wird in einer zweiten Kondensationsreaktion mit 4-(β-Sulfatoethylsulfonyl)-3-nitro-1-(β-aminoethylamino)-benzol bei einer Temperatur von 55 bis 65 °C und einem pH-Wert von 6,5 umgesetzt.

Die erfindungsgemäße Monoazoverbindung wird in üblicher Weise als Alaklimetallsalz isoliert; sie besitzt, in Form der freien Säure geschrieben, die Formel

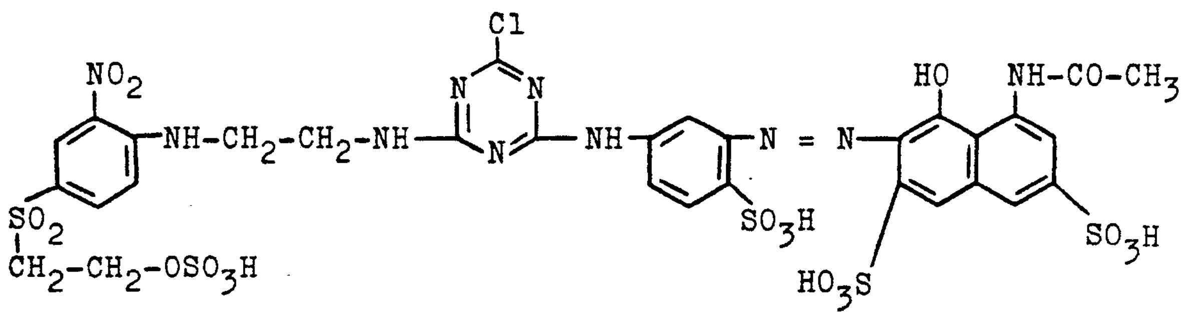

( $\lambda_{max}$ = 504 nm )

und färbt beispielsweise Baumwolle nach den für faserreaktive Farbstoffe üblichen Applikations- und Fixierverfahren in brillanten, echten, roten Farbtönen.

<u>Beispiele 22 bis 63</u>

In den nachfolgenden Tabellenbeispielen sind weitere erfindungsgemäße Verbindungen entsprechend einer allgemeinen Formel (B)

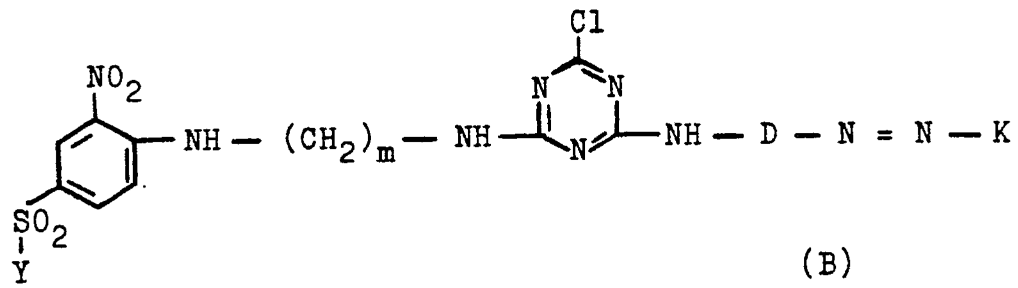

(B)

mit Hilfe der dort angegebenen Formelreste bzw. Komponenten beschrieben. Sie lassen sich in erfindungsgemäßer Weise, beispielsweise analog dem Ausführungsbeispiel 19, 20 oder 21, aus diesen Komponenten (Cyanurchlorid, einer Diaminobenzolverbindung entsprechend der allgemeinen Formel $H_2N\text{-}D\text{-}NH_2$ , einer Aminoverbindung entsprechend der in der Beschreibung angegebenen allgemeinen Formel (18) mit R jeweils einem Wasserstoffatom und der Kupplungskomponente H-K) herstellen. Diese neuen Verbindungen entsprechend der allgemeinen Formel (1) besitzen ebenfalls sehr gute faserreaktive Farbstoffeigenschaften und färben die in der Beschreibung angegebenen Fasermaterialien, insbesondere Cellulosefasermaterialien, in kräftigen echten Tönen (die Farbtöne in den Tabellenbeispielen beziehen sich auf Färbungen auf Cellulosefasermaterialien).

| Bsp. | Rest D des Diamins $H_2N$-D-$NH_2$ | Kupplungskomponente H-K | m | Y | Farbton |
|---|---|---|---|---|---|
| 22 | 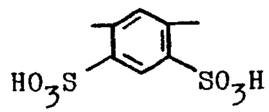 | N-(ß-Sulfatoethyl)-4-methyl-5-carbamoyl-6-hydroxy-2-pyridon | 3 | ß-Sulfato ethyl | grünstichig gelb |
| 23 | dito | N-(γ-Methoxypropyl)-4-methyl-6-hydroxy-2-pyridon | 2 | dito | dito |
| 24 | 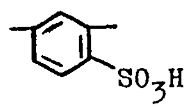 | 4-Methyl-5-sulfomethyl-6-hydroxy-2-pyridon | 2 | dito | dito |
| 25 | dito | N-(γ-Methoxypropyl)-4-methyl-5-sulfomethyl-6-hydroxy-2-pyridon | 2 | dito | dito |
| 26 | dito | N-(ß-Sulfatoethyl)-4-methyl-6-hydroxy-2-pyridon | 2 | dito | dito |
| 27 | 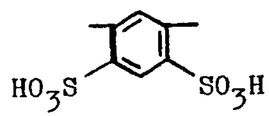 | N-(ß-Phosphatoethyl)-4-methyl-6-hydroxy-2-pyridon | 2 | ß-Phosphato-ethyl | dito |
| 28 | dito | N-(ß-Sulfoethyl)-4-methyl-6-hydroxy-2-pyridon | 3 | dito | dito |
| 29 | dito | 1-(2'-Methyl-4'-sulfo-phenyl)-3-carboxy-5-pyrazolon | 2 | ß-Sulfato-ethyl | gelb |
| 30 | dito | dito | 3 | dito | gelb |

| Bsp. | Rest D des Diamins $H_2N-D-NH_2$ | Kupplungskomponente H-K | m | Y | Farbton |
|---|---|---|---|---|---|
| 31 | dito | 1-(2'-Methyl-4'-sulfo-phenyl)-3-carboxy-5-pyrazolon | 2 | ß-Phosphato-ethyl | gelb |
| 32 | dito | 3,6-Disulfo-1-naphthol | 2 | ß-Sulfato-ethyl | orange |
| 33 | dito | 3,8-Disulfo-1-naphthol | 2 | ß-Phosphato-ethyl | scharlach |
| 34 | dito | 4,8-Disulfo-1-naphthol | 3 | ß-Sulfato-ethyl | gelbstichig rot |
| 35 | dito | 3,3'-Disulfo-7-(phenylamino)-1-naphthol | 2 | dito | braun |
| 36 | dito | 1-(4'-Sulfophenyl)-3-carboxy-5-pyrazolon | 3 | ß-Phosphato-ethyl | gelb |
| 37 | 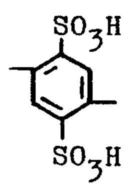 | dito | 2 | dito | gelb |
| 38 | 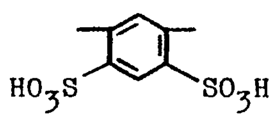 | 1-Phenyl-3-carboxy-5-pyrazolon | 2 | ß-Sulfato-ethyl | gelb |
| 39 | dito | dito | 3 | dito | gelb |
| 40 | 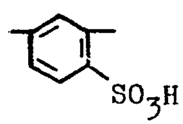 | 3,6-Disulfo-1-naphthol | 2 | Vinyl | gelb |

| Bsp. | Rest D des Diamins $H_2N-D-NH_2$ | Kupplungskomponente H-K | m | Y | Farbton |
|---|---|---|---|---|---|
| 41 | dito | 1-(4'-Sulfophenyl)-3-carboxy-5-pyrazolon | 2 | Vinyl | gelb |
| 42 | dito | N-(ß-Sulfoethyl)-4-methyl-5-cyano-6-hydroxy-2-pyridon | 2 | Vinyl | grünstichig gelb |
| 43 | dito | N-(ß-Sulfoethyl)-4-methyl-5-sulfomethyl-6-hydroxy-2-pyridon | 2 | ß-Sulfato-ethyl | dito |
| 44 | dito | N-(ß-Sulfoethyl)-4-methyl-5-sulfo-6-hydroxy-2-pyridon | 2 | dito | dito |
| 45 | 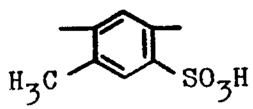 | dito | 2 | ß-Phosphato-ethyl | dito |
| 46 | 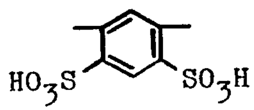 | N-(ß-Sulfoethyl)-4-methyl-5-cyano-6-hydroxy-2-pyridon | 2 | ß-Sulfato-ethyl | dito |
| 47 | 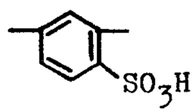 | 1-Acetylamino-3,6-disulfo-8-naphthol | 3 | dito | rot |
| 48 | dito | 1-Benzoylamino-3,6-disulfo-8-naphthol | 2 | dito | rot |
| 49 | dito | 1-[(N'-Cyclohexyl)-ureido]-3,6-disulfo-8-naphthol | 2 | dito | rot |
| 50 | dito | 4,8-Disulfo-1-naphthol | 2 | dito | rot |
| 51 | dito | 4-Sulfo-1-naphthol | 2 | dito | rot |
| 52 | dito | dito | 2 | ß-(Methyl-sulfonyloxy)-ethyl | rot |

| Bsp. | Rest D des Diamins $H_2N$-D-$NH_2$ | Kupplungskomponente H-K | m | Y | Farbton |
|---|---|---|---|---|---|
| 53 | 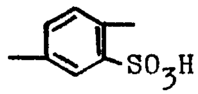 | 1-Acetylamino-3,6-disulfo-8-naphthol | 2 | ß-Sulfato-ethyl | rot |
| 54 | dito | dito | 2 | ß-Phosphato-ethyl | rot |
| 55 | dito | dito | 3 | ß-Sulfato-ethyl | rot |
| 56 | 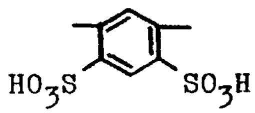 | 1-Benzoylamino-3,6-disulfo-8-naphthol | 2 | dito | rot |
| 57 | dito | 1-Benzoylamino-4,6-disulfo-8-naphthol | 2 | dito | rot |
| 58 | dito | dito | 2 | ß-Phosphato-ethyl | rot |
| 59 | 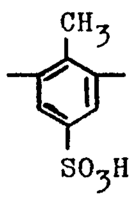 | dito | 2 | dito | rot |
| 60 | dito | dito | 2 | ß-Sulfato-ethyl | rot |
| 61 | 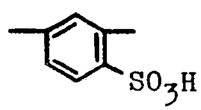 | 1-Acetylamino-3,6-disulfo-8-naphthol | 2 | Vinyl | rot |
| 62 | dito | 1-Benzoylamino-3,6-disulfo-8-naphthol | 2 | Vinyl | rot |
| 63 | dito | 1-Benzoylamino-4,6-disulfo-8-naphthol | 2 | Vinyl | rot |

Beispiel 64

95 Teile Cyanurchlorid werden in an und für sich bekannter Verfahrensweise mit 160 Teilen 1-Amino-3,6-disulfo-8-naphthol, beispielsweise in wäßrigem Medium bei einer Temperatur zwischen 10 und 15 °C

und einem pH-Wert von 2 bis 2,5, umgesetzt; das Monokondensationsprodukt wird sodann mit dem Diazoniumsalz aus 87 Teilen 1-Aminobenzol-2-sulfonsäure bei einem pH-Wert zwischen 4 und 4,5 und einer Temperatur zwischen 10 und 20° C gekuppelt. Sodann gibt man 185 Teile 4-(β-Sulfatoethylsulfonyl)-3-nitro-1-(β-aminoethyl-amino)-benzol hinzu und führt die zweite Kondensationsreaktion bei einem pH-Wert von 6 und einer Temperatur zwischen 50 und 60° C durch.

Die gebildete erfindungsgemäße Verbindung wird mit Kaliumchlorid ausgefällt und isoliert. Sie besitzt, in Form der freien Säure geschrieben, die Formel

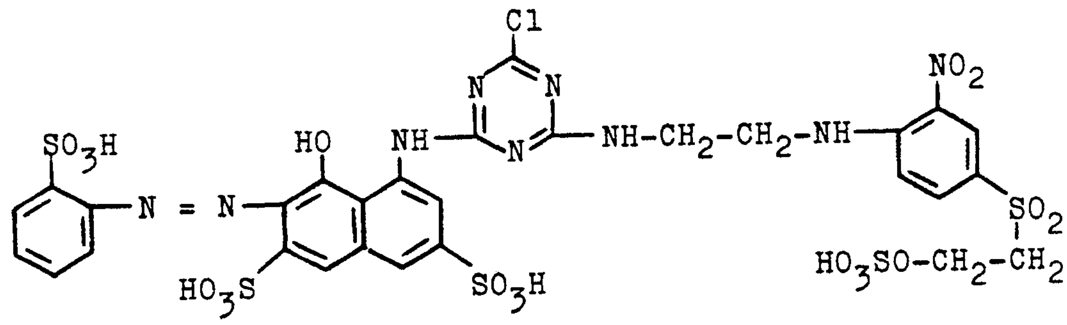

($\lambda_{max}$ = 532 nm)

und zeigt sehr gute Farbstoffeigenschaften. Sie färbt die in der Beschreibung genannten Fasermaterialien in roten echten Tönen und liefert insbesondere auf Cellulosefasermaterialien nach den für faserreaktive Farbstoffe üblichen Anwendungsmethoden Färbungen in leuchtend roten Nuancen mit sehr guten Naßechtheitseigenschaften, wie einer sehr guten Chlorwasserechtheit und sehr guten Naßlichtechtheiten, wie hiervon insbesondere einer guten alkalischen Schweißlichtechtheit.

Beispiel 65

Man setzt in üblicher Verfahrensweise 1-Amino-3,6-disulfo-8-naphthol mit Cyanurchlorid zum Monokondensationsprodukt um und kuppelt es mit dem Diazoniumsalz des 4-(4′-Sulfophenylazo)-anilins. Diese Disazoverbindung wird sodann gemäß den Angaben des Beispieles 1 mit der äquivalenten Menge an 4-(β-Sulfatoethylsulfonyl)-3-nitro-1-(β-aminoethylamino)-benzol umgesetzt. Die erfindungsgemäße Verbindung wird mit Kaliumchlorid ausgefällt und isoliert; sie besitzt, in Form der freien Säure geschrieben, die Formel

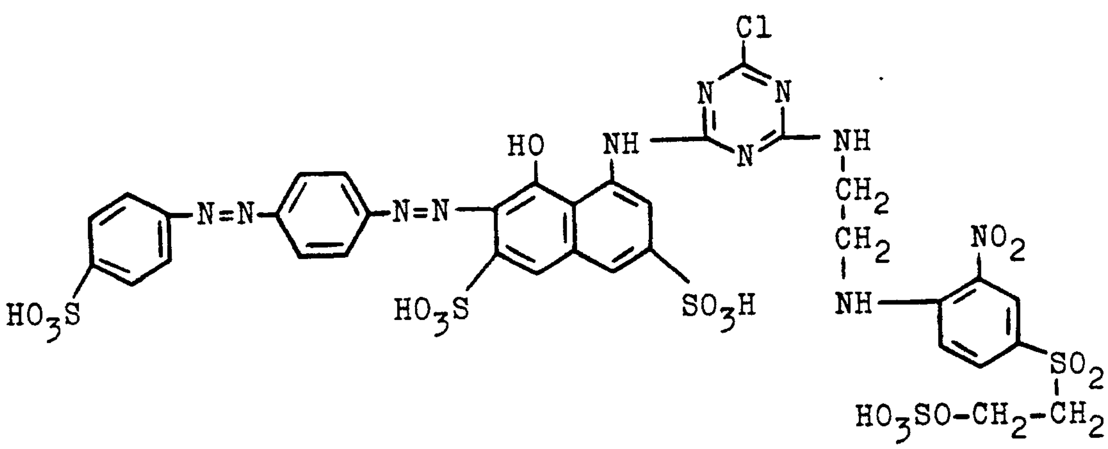

und färbt nach den üblichen Färbeverfahren beispielsweise Baumwolle in sehr echten rotvioletten Tönen.

Beispiel 66

38,3 Teile 2-Amino-naphthalin-3,6,8-trisulfonsäure werden in üblicher Weise diazotiert und bei einem

pH-Wert von 3 auf 13,7 Teile 3-Amino-4-methoxy-toluol gekuppelt. Die Amino-Azoverbindung wird in ihrer wäßrigen Syntheselösung diazotiert und bei einem pH-Wert von 6 bis 6,5 und bei einer Temperatur zwischen 20 und 25° C mit 80 Teilen des Kondensationsproduktes aus 1-Amino-8-naphthol-3,6-disulfonsäure, Cyanurchlorid und 4-(β-Sulfatoethylsulfonyl)-3-nitro-1-(β-aminoethyl-amino)-benzol, das aus diesen Komponenten in bekannter Verfahrensweise hergestellt wurde, gekuppelt.

Die erfindungsgemäße Disazoverbindung wird sodann mit Kaliumchlorid ausgefällt und isoliert. Man erhält ein schwarzes, elektrolythaltiges Pulver des Alkalimetallsalzes der Verbindung der Formel

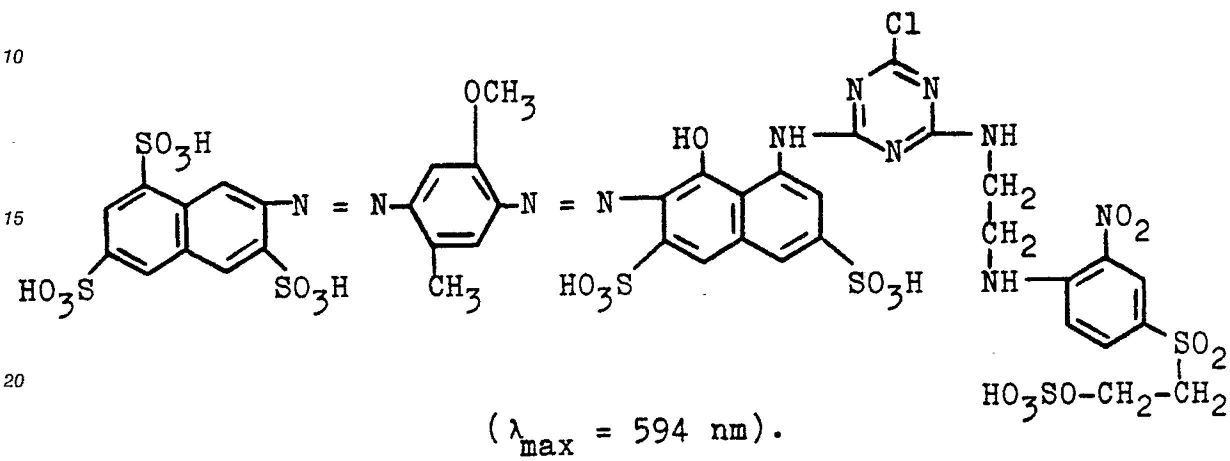

($\lambda_{max}$ = 594 nm).

Diese erfindungsgemäße Disazoverbindung zeigt sehr gute faserreaktive Farbstoffeigenschaften und färbt insbesondere Baumwolle in kräftigen, echten, marineblauen Farbtönen.

Beispiel 67

19 Teile Cyanurchlorid werden in 300 Teilen Wasser bei einem pH-Wert von 6,5 und einer Temperatur von 0 bis 5° C zunächst mit 77 Teilen der bekannten Amino-Disazoverbindung der Formel

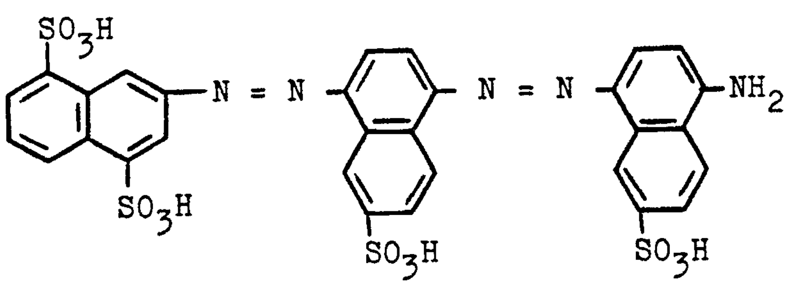

und sodann bei einer Temperatur von 55 bis 65° C und einem pH-Wert von 6 bis 6,5 mit 37 Teilen 4-(β-Sulfatoethylsulfonyl)-3-nitro-1-(β-aminoethyl-amino)-benzol umgesetzt. Die erhaltene erfindungsgemäße Disazoverbindung wird aus ihrer Syntheselösung mit Kaliumchlorid ausgefällt und iso liert. Man erhält ein elektrolythaltiges Pulver des Alkalisalzes der Verbindung der Formel

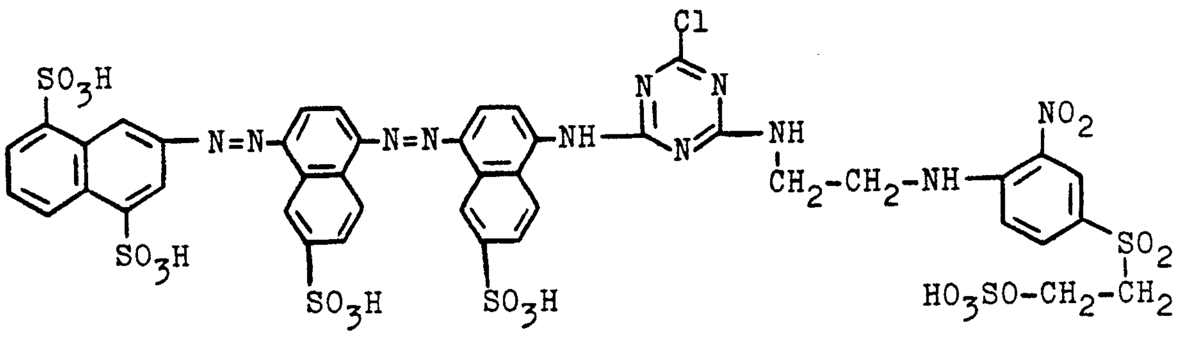

($\lambda_{max}$ = 445 nm)

welche sehr gute faserreaktive Farbstoffeigenschaften aufweist und mit den hierfür üblichen Färbe- und Druckverfahren insbesondere auf Baumwolle farbstarke Färbungen und Drucke in echten, rötlich braunen Nuancen liefert.

Beispiele 68 bis 120

In den nachfolgenden Tabellenbeispielen sind weitere erfindungsgemäße Verbindungen entsprechend der allgemeinen Formel (A)

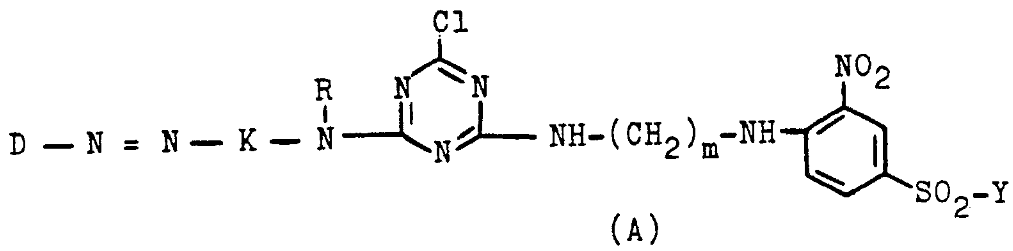

(A)

mit Hilfe der dort angegebenen Formelreste bzw. Komponenten beschrieben. Sie lassen sich in erfindungsgemäßer Weise, beispielsweise analog einem der Ausführungsbeispiele 1 und 64 bis 67, mit Hilfe dieser Komponenten (der von einer faserreaktiven Gruppe freien Diazokomponente $D-NH_2$ , der Kupplungskomponente H-K-NHR , deren Aminogruppe gegebenenfalls bereits die faserreaktive Chlortriazinyl amino-Gruppierung besitzt, Cyanurchlorid und gegebenenfalls einem Amin entsprechend der in der Beschreibung angegebenen allgemeinen Formel (18) mit R jeweils gleich einem Wasserstoffatom) herstellen.

Diese erfindungsgemäßen Azoverbindungen entsprechend der allgemeinen Formel (1) besitzen ebenfalls sehr gute faserreaktive Farbstoffeigenschaften; insbesondere auf Cellulosefasermaterialien erhält man mit ihnen farbstarke, klare echte Färbungen und Drucke in dem für das jeweilige Tabellenbeispiel angegebenen Farbton.

| Bsp. | Rest D der Diazokomp. $D-NH_2$ | Komponente H-K-NHR | m | Gruppe Y | Farbton |
|---|---|---|---|---|---|
| 68 | 4-Phenoxy-2-sulfo-phenyl | 1-Amino-3,6-disulfo-8-naphthol | 2 | ß-Sulfato-ethyl | blaustichig rot |
| 69 | 4-Ethoxy-phenyl | dito | 2 | dito | dito |
| 70 | 4-Methoxy-phenyl | dito | 2 | dito | dito |
| 71 | 4-Methyl-2-sulfo-phenyl | dito | 2 | dito | dito |
| 72 | 4-Sulfo-phenyl | dito | 2 | dito | rot |
| 73 | 3-Sulfo-phenyl | dito | 2 | dito | rot |
| 74 | 1,5-Disulfo-naphth-2-yl | dito | 2 | dito | rot |
| 75 | 4,8-Disulfo-naphth-2-yl | dito | 2 | dito | rot |
| 76 | 4-Sulfo-naphth-1-yl | dito | 2 | dito | rot |
| 77 | 6-Sulfo-naphth-1-yl | dito | 2 | dito | rot |
| 78 | 1-Sulfo-naphth-2-yl | dito | 2 | dito | rot |
| 79 | 5-Sulfo-naphth-2-yl | dito | 2 | ß-(Methyl-sulfonyloxy)-ethyl | rot |
| 80 | 6-Sulfo-naphth-2-yl | dito | 2 | ß-Phosphato-ethyl | rot |
| 81 | Phenyl | 1-Amino-4,6-disulfo-8-naphthol | 2 | ß-Sulfato-ethyl | scharlach |
| 82 | 2-Sulfo-phenyl | dito | 2 | dito | scharlach |
| 83 | dito | 1-Amino-4-sulfo-8-naphthol | 2 | dito | scharlach |
| 84 | dito | dito | 2 | ß-(Methyl-sulfonyloxy)-ethyl | scharlach |
| 85 | dito | 2-Amino-6-sulfo-8-naphthol | 3 | ß-Sulfato-ethyl | rot |

| Bsp. | Rest D der Diazokomp. $D-NH_2$ | Komponente H-K-NHR | m | Gruppe Y | Farbton |
|---|---|---|---|---|---|
| 86 | Phenyl | 1-Amino-2,4-disulfo-8-naphthol | 2 | dito | rot |
| 87 | 4-Sulfo-phenyl | 2-Amino-7-sulfo-5-naphthol | 2 | dito | orange |
| 88 | 1,5-Disulfo-naphth-2-yl | dito | 2 | dito | orange |
| 89 | dito | 2-Methylamino-7-sulfo-5-naphthol | 2 | dito | orange |
| 90 | dito | dito | 2 | ß-(Methyl-sulfonyloxy)-ethyl | orange |
| 91 | Phenyl | 1-Amino-3,6-disulfo-8-naphthol | 2 | ß-Sulfato-ethyl | rot |
| 92 | dito | dito | 3 | dito | rot |
| 93 | dito | dito | 2 | ß-(Methyl-sulfonyloxy)-ethyl | rot |
| 94 | dito | dito | 2 | ß-Phosphato-ethyl | rot |
| 95 | 2-Chlor-phenyl | dito | 2 | ß-Sulfato-ethyl | rot |
| 96 | 3-Methyl-phenyl | dito | 2 | dito | rot |
| 97 | 4-Methoxy-2-sulfo-phenyl | dito | 2 | dito | blaustichig rot |
| 98 | dito | dito | 2 | Vinyl | blaustichig rot |
| 99 | 1,5-Disulfo-naphth-2-yl | dito | 2 | Vinyl | rot |

| Bsp. | Rest D der Diazokomp. $D-NH_2$ | Komponente H-K-NHR | m | Gruppe Y | Farbton |
|---|---|---|---|---|---|
| 100 | 4-(4',8'-Disulfo-naphth-2'-yl-azo)-7-sulfo-naphth-1-yl | 3-Methyl-anilin | 2 | ß-Sulfato-ethyl | rotstichig braun (441) |
| 101 | 4-(4',8'-Disulfo-naphth-2'-yl-azo)-(6,7)-monosulfo-naphth-1-yl | 2-Methoxy-5-methyl-anilin | 2 | dito | dito (443) |
| 102 | dito | 2,5-Dimethyl-anilin | 2 | dito | dito (441) |
| 103 | 4-(4',6',8'-Trisulfo-naphth-2'-yl-azo)-6-sulfo-naphth-1-yl | 3-Methyl-anilin | 2 | dito | dito (444) |
| 104 | 4-(2',5',7'-Trisulfo-naphth-1'-yl-azo)-naphth-1-yl | 7-Sulfo-1-amino-naphthalin | 2 | dito | rotbraun |
| 105 | 4-(2',5'-Disulfo-phenylazo)-2,5-dimethyl-phenyl | 8-Sulfo-1-amino-naphthalin | 2 | dito | orangebraun |
| 106 | 4-(4',6',8'-Trisulfo-naphth-2'-yl-azo)-phenyl | Anilin | 2 | dito | orangebraun |
| 107 | 4-(4',8'-Disulfo-naphth-2'-yl-azo)-7-sulfo-naphth-1-yl | 8-Sulfo-1-amino-naphthalin | 2 | dito | rotstichig braun (445) |
| 108 | 4-(3',6',8'-Trisulfo-naphth-2'-yl-azo)-2,5-dimethyl-phenyl | 1-Amino-3,6-disulfo-8-naphthol | 2 | dito | marineblau |
| 109 | 4-(3',6',8'-Trisulfo-naphth-2'-yl-azo)-3-methyl-phenyl | dito | 2 | ß-Phosphato-ethyl | dito |
| 110 | 4-(3',6',8'-Trisulfo-naphth-2'-yl-azo)-2-methyl-5-methoxy-phenyl | dito | 2 | ß-Sulfato-ethyl | dito |
| 111 | 4-(3',6',8'-Trisulfo-naphth-2'-yl-azo)-5-chlor-2-methyl-phenyl | dito | 2 | ß-(Methyl-sulfonyloxy)-ethyl | dito |
| 112 | 4-(4',6',8'-Trisulfo-naphth-2'-yl-azo)-2,5-dimethyl-phenyl | dito | 2 | ß-Sulfato-ethyl | dito |

| Bsp. | Rest D der Diazokomp. $D-NH_2$ | Komponente H-K-NHR | m | Gruppe Y | Farbton |
|---|---|---|---|---|---|
| 113 | 4-(1',5',7'-Trisulfo-naphth-2'-yl-azo)-2,5-dimethyl-phenyl | dito | 2 | ß-Sulfato-ethyl | dito |
| 114 | 4-(6',8'-Disulfo-naphth-2'-yl-azo)-2-methyl-5-methoxy-phenyl | dito | 2 | ß-Sulfato-ethyl | dito |
| 115 | 4-(5',7'-Disulfo-naphth-2'-yl-azo)-3-methyl-phenyl | dito | 2 | ß-Phosphato-ethyl | dito |
| 116 | dito | dito | 2 | ß-Sulfato-ethyl | dito |
| 117 | 4-(4',8'-Disulfo-6'-nitro-naphth-2'-yl-azo)-2-methyl-5-methoxy-phenyl | dito | 2 | ß-Sulfato-ethyl | dito |
| 118 | 4-(4',8'-Disulfo-naphth-2'-yl-azo)-2-methyl-5-methoxy-phenyl | dito | 2 | ß-Sulfato-ethyl | dito |
| 119 | 4-(4',6',8'-Trisulfo-naphth-2'-yl-azo)-6-sulfo-naphth-1-yl | 3-Methyl-anilin | 2 | Vinyl | rotstichig braun |
| 120 | dito | 2-Methoxy-5-methyl-anilin | 2 | Vinyl | dito |

Beispiel 121

Zu einer wäßrigen, salzsauren Lösung des Diazoniumsalzes aus 17,3 Teilen Anilin-4-sulfonsäure rührt man bei 5° C eine wäßrige Suspension von 31,6 Teilen 1-Amino-3,6-disulfo-8-naphthol ein und führt die

Kupplung bei einem pH zwischen 1 und 2 durch. Sodann gibt man die wäßrige, salzsaure Suspension des Diazoniumsalzes aus 38,6 Teilen eines auf üblichem Wege hergestellten primären Kondensationsproduktes aus Cyanurchlorid und 1,3-Diaminobenzol-4-sulfonsäure hinzu und stellt zur Durchführung der Kupplungsreaktion mit Natriumcarbonat einen pH-Wert von 5 bis 6 ein. Zu der so erhaltenen Lösung der Disazoverbindung gibt man eine wäßrige, neutrale Lösung mit 37 Teilen 4-($\beta$-Sulfatoethylsulfonyl)-3-nitro-1-($\beta$-aminoethyl-amino)-benzol hinzu und führt die Kondensationsreaktion bei 30 bis 40 °C und einem pH-Wert von 7 bis 7,5 zu Ende.

Die erfindungsgemäße Disazoverbindung wird mittels Kaliumchlorid aus der neutralen Syntheselösung ausgefällt, isoliert und getrocknet. Man erhält ein schwarzes, elektrolythaltiges Pulver des Alkalimetallsalzes der Verbindung der Formel

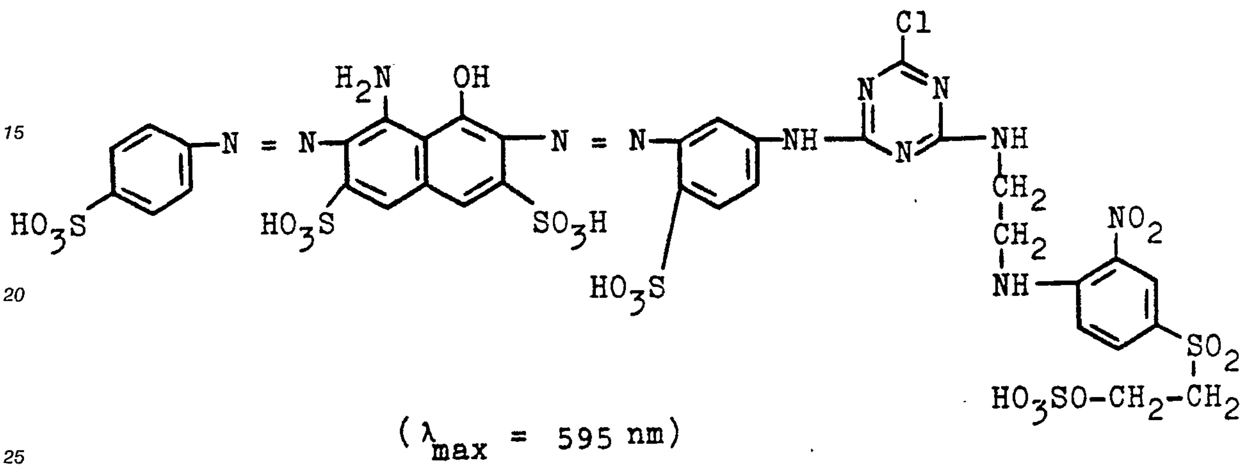

($\lambda_{max}$ = 595 nm)

die sehr gute faserreaktive Farbstoffeigenschaften besitzt und beispielsweise Baumwolle nach den für faserreaktive Farbstoffe üblichen Färbe- und Druckverfahren in echten marineblauen Tönen färbt.

Beispiele 122 bis 136

In den nachfolgenden Tabellenbeispielen sind weitere erfindungsgemäße Disazoverbindungen entsprechend einer allgemeinen Formel (C)

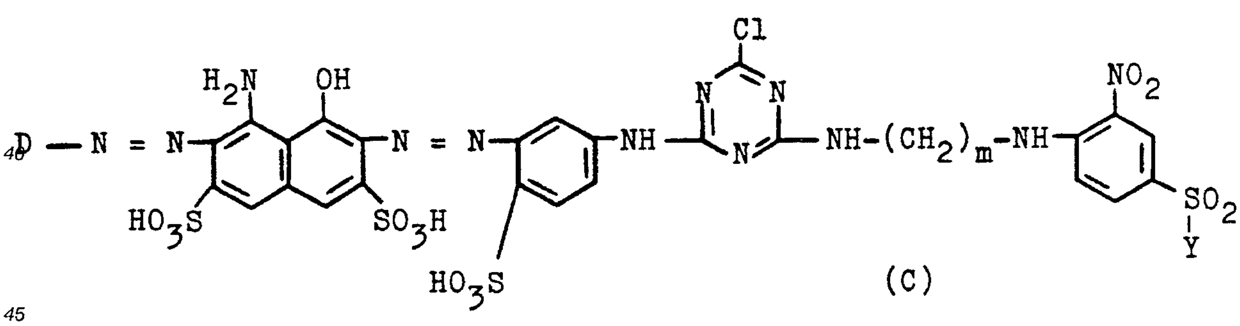

(C)

mit Hilfe der dort angegebenen Formelreste beschrieben. Sie lassen sich in erfindungsgemäßer Weise, beispielsweise analog den Angaben der Beispiele 19 und 121, mit Hilfe der daraus ersichtlichen Komponenten (1-Amino-3,6-disulfo-8-naphthol als bivalenter Kupplungskomponente, der sauer angekuppelten Diazokomponente D-$NH_2$ , 1,3-Diaminobenzol-4-sulfonsäure, Cyanurchlorid und einem Amin entsprechend der in der Beschreibung angegebenen allgemeinen Formel (18) mit R jeweils gleich einem Wasserstoffatom) herstellen. Diese erfindungsgemäßen Disazoverbindungen besitzen ebenfalls sehr gute faserreaktive Farbstoffeigenschaften und liefern insbesondere auf Cellulosefasermaterialien farbstarke echte Färbungen und Drucke in dem für das jeweilige Tabellenbeispiel angegebenen Farbton.

| Bsp. | Diazokomp. $D-NH_2$ | m | Gruppe Y | Farbton |
|---|---|---|---|---|
| 122 | 2-Chlor-4-sulfo-anilin | 2 | ß-Sulfatoethyl | marineblau |
| 123 | 2-Chlor-4,6-disulfo-anilin | 2 | ß-(Methylsulfonyloxy)-ethyl | rotstichig marineblau |
| 124 | 4-Chlor-2-sulfo-anilin | 2 | ß-Phosphatoethyl | dito |
| 125 | 1,5-Disulfo-2-amino-naphthalin | 2 | ß-Sulfatoethyl | grünstichig marineblau |

| Bsp. | Diazokomp. $D-NH_2$ | m | Gruppe Y | Farbton |
|---|---|---|---|---|
| 126 | 4-Ethylsulfonyl-anilin | 3 | dito | rotstichig marineblau |
| 127 | 2-Methyl-4,6-di-sulfo-anilin | 3 | ß-(Methylsulfonyloxy)-ethyl | dito |
| 128 | 3,6,8-Trisulfo-2-amino-naphthalin | 2 | ß-Sulfatoethyl | grünstichig marineblau |
| 129 | 4-(ß-Sulfatoethyl-sulfonyl)-anilin | 2 | dito | rotstichig marineblau |
| 130 | 2-Sulfo-anilin | 2 | dito | dito |
| 131 | 3-[2'-Chlor-4'-(3"-sulfophenyl-amino)-s-triazin-6'-yl]-amino-6-sulfo-anilin | 2 | dito | dito |
| 132 | dito | 3 | dito | dito |
| 133 | 3-[2'-Chlor-4'-(4"-ß-sulfatoethylsulfonyl-phenylamino)-s-triazin-6'-yl]-amino-6-sulfo-anilin | 2 | dito | dito |
| 134 | Anilin | 2 | dito | dito |
| 135 | 3,6,8-Trisulfo-2-amino-naphthalin | 2 | Vinyl | grünstichig marineblau |
| 136 | 4-Sulfo-anilin | 2 | Vinyl | marineblau |

Beispiel 137

66,9 Teile des sekundären Kondensationsproduktes aus 1,3-Diaminobenzol-4-sulfonsäure, Cyanurchlorid und 4-($\beta$-Sulfatoethylsulfonyl)-3-nitro-1-($\beta$-aminoethyl-amino)-benzol werden in üblicher Weise in salzsaurer Lösung diazotiert und sodann mit 30,8 Teilen 1-Amino-3,6-disulfo-8-naphthol sauer gekuppelt. Die erhaltene Monoazoverbindung wird in deren Syntheselösung anschließend mit der wäßrigen, salzsauren Lösung des Diazoniumsalzes aus 17,3 Teilen Anilin-4-sulfonsäure versetzt, der Reaktionsansatz auf einen

pH-Wert von 7 gestellt und die Kupplungsreaktion zur Disazoverbindung im neutralen Bereich zu Ende geführt.

Die erfindungsgemäße Disazoverbindung wird mit Kaliumchlorid aus ihrer Syntheselösung ausgefällt, isoliert und getrocknet. Man erhält ein schwarzes, elektrolythaltiges Pulver mit dem Alkalimentallsalz der Verbindung der Formel

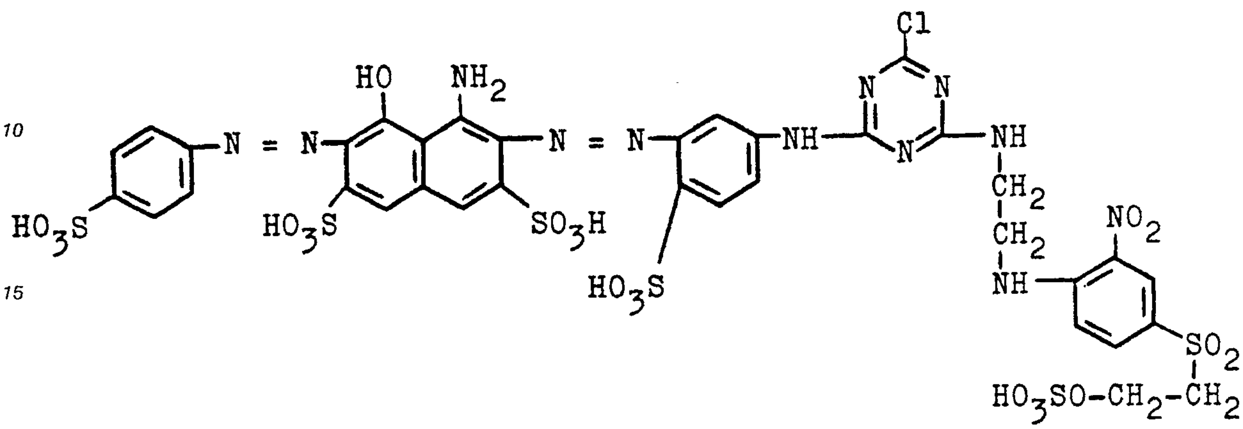

($\lambda_{max}$ = 584 nm)

die sehr gute faserreaktive Farbstoffeigenschaften besitzt und beispielsweise Baumwolle nach den für faserreaktive Farbstoffe üblichen Färbe- und Druckverfahren in echten rotstichig marineblauen Tönen färbt.

Beispiele 138 bis 149

In den nachfolgenden Tabellenbeispielen sind weitere erfindungsgemäße Disazoverbindungen entsprechend einer allgemeinen Formel (D)

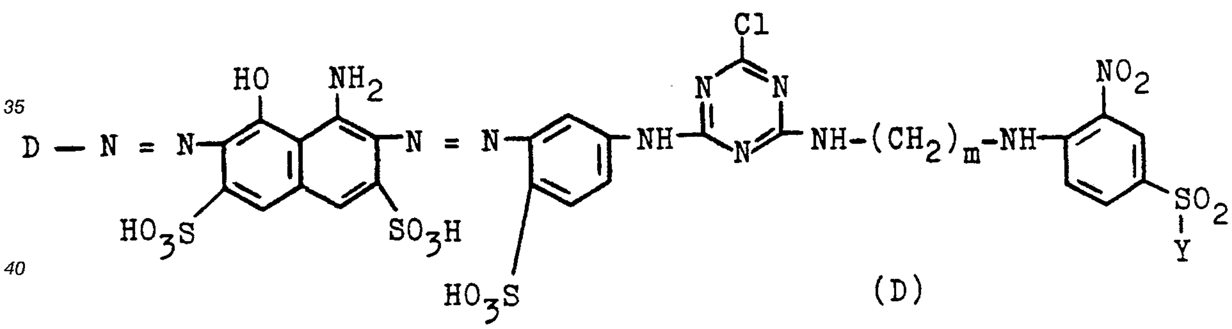

(D)

mit Hilfe der dort angegebenen Formelreste beschrieben. Sie lassen sich in erfindungsgemäßer Weise, beispielsweise analog den Angaben des Beispieles 137, mit Hilfe der daraus ersichtlichen Komponenten (1-Amino-3,6-disulfo-8-naphthol als bivalenter Kupplungskomponente, der schwach sauer bis neutral angekuppelten Diazokomponente D-$NH_2$ , 1,3-Diaminobenzol-4-sulfonsäure als sauer ankuppelbarer Diazokomponententeil, Cyanurchlorid und einem Amin entsprechend der in der Beschreibung angegebenen allgemeinen Formel (18) mit R jeweils gleich einem Wasserstoffatom) herstellen. Diese erfindungsgemäßen Disazoverbindungen besitzen ebenfalls sehr gute faserreaktive Farbstoffeigenschaften und liefert insbesondere auf Cellulosefasermaterialien farbstarke echte Färbungen und Drucke in dem für das jeweilige Tabellenbeispiel angegebenen Farbton.

| Bsp. | Diazokomp. $D-NH_2$ | m | Gruppe Y | Farbton |
|---|---|---|---|---|
| 138 | 1,5-Disulfo-2-amino-naphthalin | 2 | ß-Phosphatoethyl | rotstichig marineblau |
| 139 | 2-Chlor-4,6-disulfo-anilin | 3 | ß-Sulfatoethyl | dito |
| 140 | 2-Chlor-4-sulfo-anilin | 2 | ß-(Methylsulfo-nyloxy)-ethyl | dito |
| 141 | 2-Methyl-4,6-disulfo-anilin | 2 | ß-Sulfatoethyl | dito |
| 142 | 4-(ß-Sulfatoethyl-sulfonyl)-anilin | 2 | dito | dito |
| 143 | 2-Sulfo-anilin | 2 | dito | dito |
| 144 | 3,6,8-Trisulfo-2-amino-naphthalin | 2 | dito | dito |
| 145 | Anilin | 2 | dito | dito |
| 146 | Anilin | 3 | ß-Phosphatoethyl | dito |
| 147 | 4-Sulfamoyl-anilin | 2 | ß-Sulfatoethyl | dito |
| 148 | 4-Sulfo-anilin | 2 | Vinyl | dito |
| 149 | 3,6,8-Trisulfo-2-amino-naphthalin | 2 | Vinyl | dito |

## Ansprüche

1. Eine Verbindung, die der allgemeinen Formel (1)

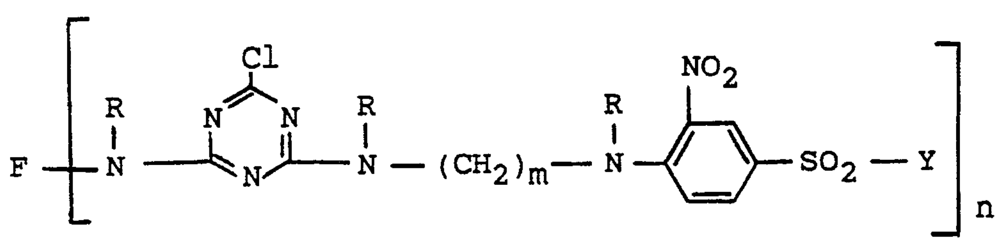

(1)

entspricht, in welcher bedeutet:

F ist ein Rest eines Farbstoffes, bevorzugt eines wasserlöslichen sulfogruppenhaltigen Farbstoffes und bevorzugt aus der Azoreihe;
m ist die Zahl 2 oder 3;
n ist die Zahl 1 oder 2;
R ist ein Wasserstoffatom oder eine Alkylgruppe von 1 bis 4 C-Atomen;
Y ist die Vinylgruppe oder eine Gruppe der allgemeinen Formel (2)

$$-CH_2-CH_2-X \quad (2)$$

in welcher X für einen Substituenten steht, der als Anion, insbesondere mittels eines Alkalis, eliminierbar ist.

2. Verbindung nach Anspruch 1, dadurch gekennzeichnet, daß F der Rest eines sulfogruppenhaltigen Mono- oder Disazofarbstoffes ist.

3. Verbindung nach Anspruch 1 oder 2, dadurch gekennzeichnet, daß R jedes für Wasserstoff und Y für β-Sulfatoethyl oder β-Phosphatoethyl steht.

4. Verbindung nach Anspruch 1 entsprechend der allgemeinen Formel (4)

$$Z_n - \left[ D - N = N - (E - N = N)_v - K \right] \quad (4)$$

in welcher D für den Rest einer Diazokomponente, E für den bivalenten Rest einer kupplungsfähigen und diazotierbaren Verbindung, K für den Rest einer Kupplungskomponente und v für die Zahl Null oder 1 steht, n die Zahl 1 oder 2 ist sowie Z einen Rest der allgemeinen Formel (3)

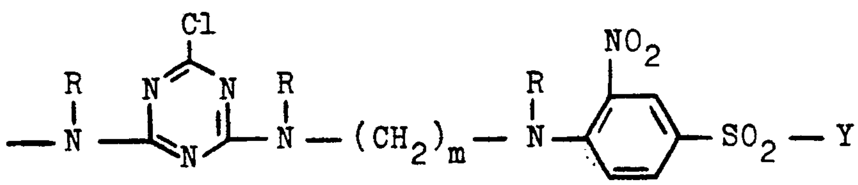

(3)

bedeutet, in welcher R, m und Y die in Anspruch 1 genannten Bedeutungen haben, wobei der Rest Z an den Rest D oder den Rest K oder im Falle von n = 2 jeweils an D und K gebunden ist.

5. Verbindung nach Anspruch 4, dadurch gekennzeichnet, daß n für die Zahl 1 steht und Z an K gebunden ist und D einen Rest der allgemeinen Formel

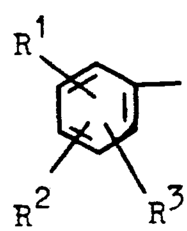

oder

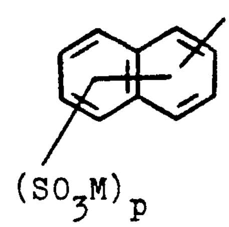

bedeutet, in welchen

$R^1$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^2$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylfulfonyl von 1 bis 4 C-Atomen, Phenylsulfonyl oder Phenoxy ist,

$R^3$ ein Wasserstoffatom, eine Sulfogruppe, eine β-Sulfatoethylsulfonyl-oder Vinylsulfonyl-Gruppe bedeutet,

p die Zahl Null, 1, 2 oder 3 bedeutet und

M ein Wasserstoffatom oder ein Alkalimetall bedeutet.

6. Verbindung nach Anspruch 4, dadurch gekennzeichnet, daß n für die Zahl 1 steht und Z an D gebunden ist und D einen Rest der allgemeinen Formel

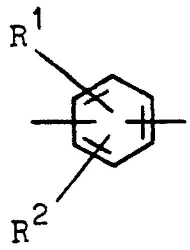

oder

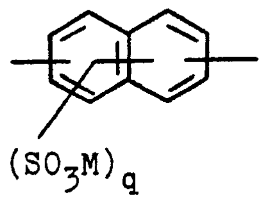

bedeutet, in welchen

$R^1$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist

$R^2$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

q die Zahl Null, 1 oder 2 bedeutet und

M ein Wasserstoffatom oder ein Alkalimetall ist.

7. Verbindung nach Anspruch 4, dadurch gekennzeichnet, daß n für die Zahl 1 steht, Z an D gebunden ist und K einen Rest der allgemeinen Formel

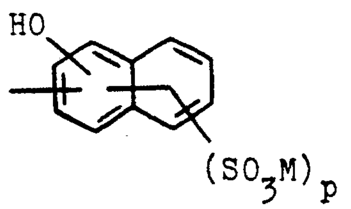

oder

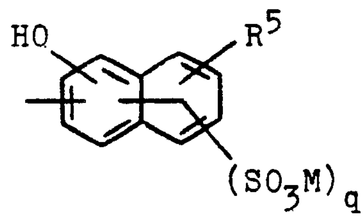

oder

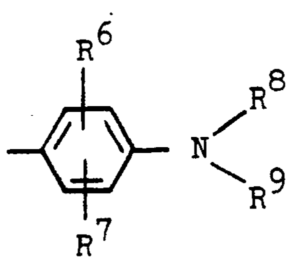

bedeutet, in welchen

$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substitutiertes Phenylureido, Alkanoylamino von 2 bis 7 C-Atomen, Cyclohexanoylamino, Benzoylamino oder im Benzolrest durch Chlor, Methyl, Methoxy, Nitro, Sulfo und/oder Carboxy substituiertes Benzoylamino bedeutet,

$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,

$R^7$ Wasserstoff, Alkyl von 1 bis 4 C-Atomen, Alkoxy von 1 bis 4 C-Atomen, Chlor oder Alkanoylamino von 2 bis 7 C-Atomen oder eine Ureido- oder Phenylureidogruppe ist,

$R^8$ Wasserstoff oder Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann,

$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist,

p für die Zahl Null, 1, 2 oder 3 steht,

q die Zahl Null, 1 oder 2 bedeutet und
M ein Wasserstoffatom oder ein Alkalimetall ist.

**8.** Verbindung nach Anspruch 4, dadurch gekennzeichnet, daß n für die Zahl 1 steht, der Rest Z an K gebunden ist und die Gruppe -K-Z einen Rest der Formel

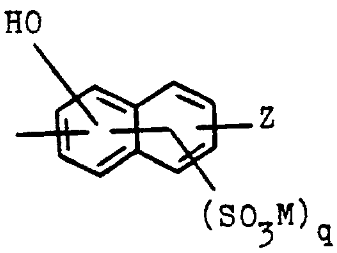

oder

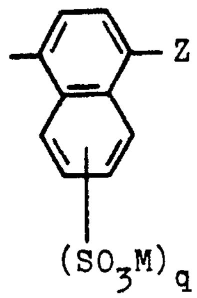

oder

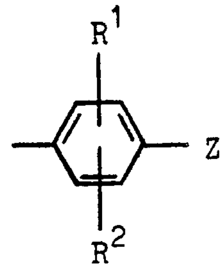

bedeutet, in welchen $R^1$ gleich Wasserstoff, Methyl, Methoxy, Chlor, Carboxy oder Sulfo, $R^2$ gleich Wasserstoff, Methyl, Methoxy, Chlor, Carboxy, Sulfo oder Acetylamino, q die Zahl Null, 1 oder 2 und M gleich Wasserstoff oder ein Alkalimetall ist sowie Z die in Anspruch 4 genannte Bedeutung besitzt.

**9.** Verbindung nach Anspruch 4, dadurch gekennzeichnet, daß v für die Zahl 1 steht und E einen Rest der Formel

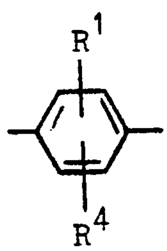

oder

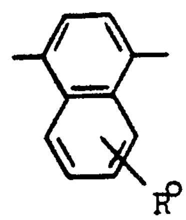

bedeutet, in welcher
$R^1$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist,
$R^0$ ein Wasserstoffatom oder eine Sulfogruppe ist und
M ein Wasserstoffatom oder ein Alkalimetall bedeutet.

**10.** Verbindung nach Anspruch 1 entsprechend der allgemeinen Formel (15)

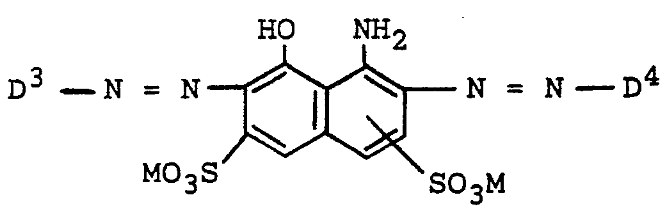

(15)

in welcher $D^3$ und $D^4$ zueinander gleiche oder voneinander verschiedene Bedeutungen haben und jedes den Rest einer Diazokomponente ist, von denen mindestens eine eine faserreaktive Gruppe der allgemeinen Formel (3)

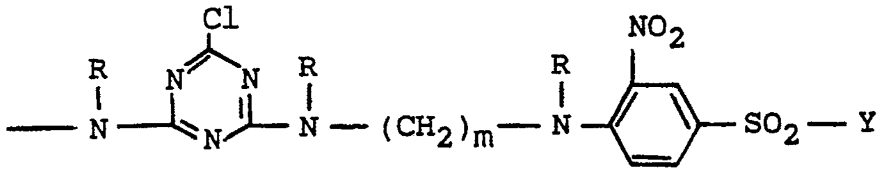

(3)

mit R, m und Y der in Anspruch 1 genannten Bedeutung gebunden enthält, und in welcher M ein Wasserstoffatom oder ein Alkalimetall bedeutet.

**11.** Verbindung nach Anspruch 10, dadurch gekennzeichnet, daß $D^3$ oder $D^4$ oder beide, zueinander gleich oder voneinander verschieden, einen Rest der allgemeinen Formel (10a) oder (10b) oder (12) bedeuten, wobei mindestens einer der Reste $D^3$ und $D^4$ ein Rest der Formel (12) ist,

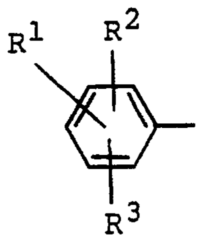

(10a)

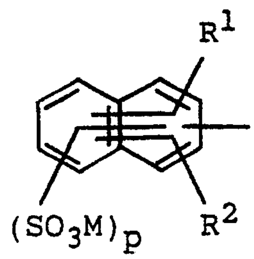

(10b)

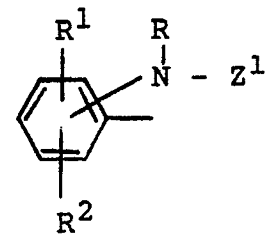

(12)

in welchen

$R^1$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^2$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

$R^3$ Wasserstoff, Sulfo, β-Sulfatoethylsulfonyl oder Vinylsulfonyl ist,

R gleich Wasserstoff ist,

$Z^1$ einen Rest der allgemeinen Formel (3a)

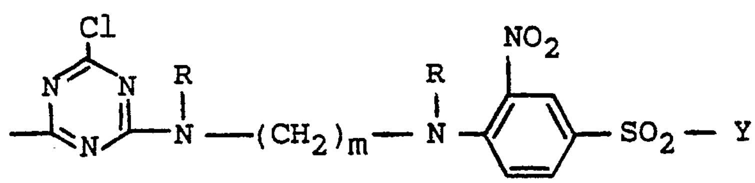

(3a)

mit R jeweils gleich Wasserstoff und m und Y der in Anspruch 1 angegebenen Bedeutung darstellt,

p die Zahl Null, 1, 2 oder 3 bedeutet und

M ein Wasserstoffatom oder ein Alkalimetall ist.

**12.** Verbindung nach Anspruch 1 entsprechend der allgemeinen Formel

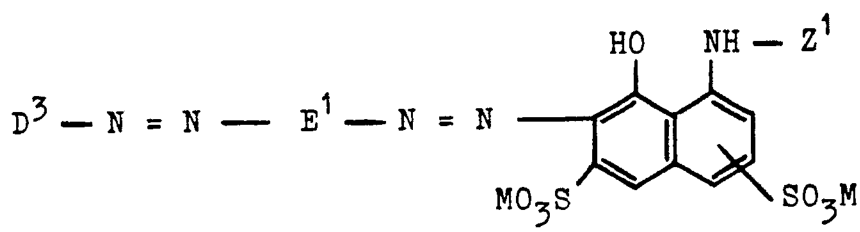

in welcher

$D^3$ ein Rest der allgemeinen Formel (10a) oder (10b)

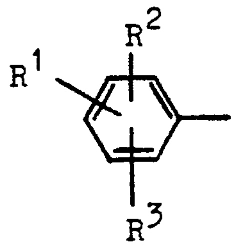

(10a)

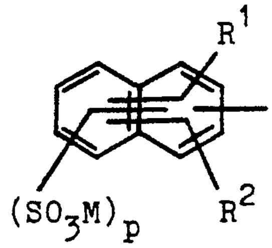

(10b)

ist, worin

$R^1$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^2$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

$R^3$ Wasserstoff, Sulfo, $\beta$-Sulfatoethylsulfonyl oder Vinylsulfonyl bedeutet,

p die Zahl Null, 1, 2 oder 3 bedeutet und

M ein Wasserstoffatom oder ein Alkalimetall ist,

$E^1$ einen Rest der allgemeinen Formel (7A) oder (7B)

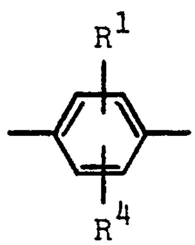

(7A)

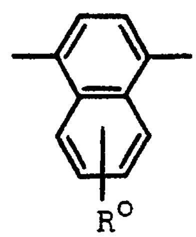

(7B)

ist, worin $R^1$ eine der obengenannten Bedeutungen hat und

$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl, Cycloalkyl-ureido mit 5 bis 8 C-Atomen im Cycloalkylteil, Alkylsulfonyl von 1 bis 4 C-Atomen oder Alkylsulfonylamino von 1 bis 4 C-Atomen ist und

$R^o$ für Wasserstoff oder Sulfo steht, und

$Z^1$ einen Rest der allgemeinen Formel (3a)

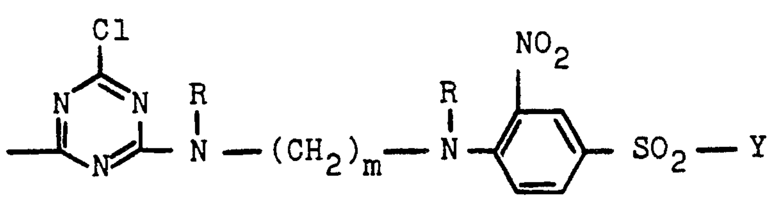

(3a)

mit R jeweils gleich Wasserstoff und m und Y der in Anspruch 1 angegebenen Bedeutung darstellt.

**13.** Verbindung nach Anspruch 1 der allgemeinen Formel

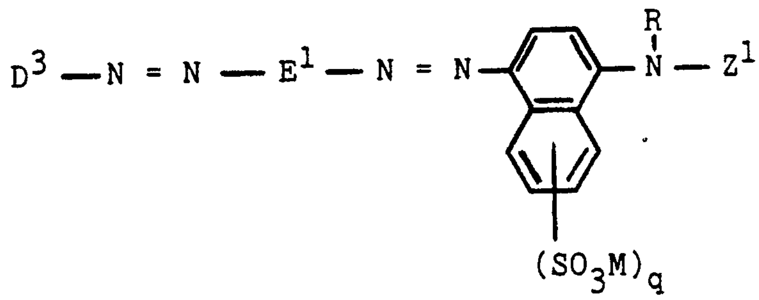

in welcher $D^3$, $E^1$, M und $Z^1$ eine der in Anspruch 12 genannten Bedeutungen haben, R für ein Wasserstoffatom steht und q die Zahl Null, 1 oder 2 ist.

14. Verbindung nach Anspruch 1 der allgemeinen Formel

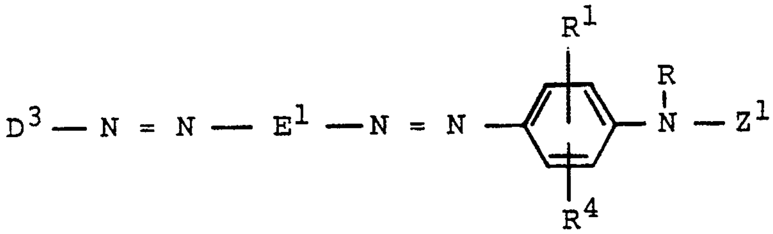

in welcher R eine der in Anspruch 1 und $D^3$, $E^1$ und $Z^1$ eine der in Anspruch 12 genannten Bedeutungen haben,
$R^1$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist und
$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl, Cycloalkyl-ureido mit 5 bis 8 C-Atomen im Cycloalkylteil, Alkylsulfonyl von 1 bis 4 C-Atomen oder Alkylsulfonylamino von 1 bis 4 C-Atomen ist.

15. Verbindung nach mindestens einem der Ansprüche 1 bis 14, dadurch gekennzeichnet, daß m die Zahl 2 ist.

16. Verbindung nach mindestens einem der Ansprüche 1 bis 15, dadurch gekennzeichnet, daß Y für die $\beta$-Sulfatoethyl-Gruppe steht.

17. Verbindung nach Anspruch 1, dadurch gekennzeichnet, daß R jedes für ein Wasserstoffatom steht.

18. Verfahren zur Herstellung der in Anspruch 1 genannten und definierten Verbindungen der allgemeinen Formel (1), dadurch gekennzeichnet, daß man die für wasserlösliche Farbstoffe üblichen Vorprodukte, von denen mindestens eines eine Gruppe der allgemeinen Formel (3) enthält, miteinander analog üblichen Verfahrensweisen zum entsprechenden Farbstoff umsetzt,
oder indem man Cyanurchlorid in beliebiger Folge mit einer Aminoverbindung der allgemeinen Formel (17)

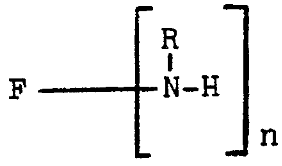

(17)

in welcher F, R und n die in Anspruch 1 genannten Bedeutungen haben, und einer Aminoverbindung

der allgemeinen Formel (18)

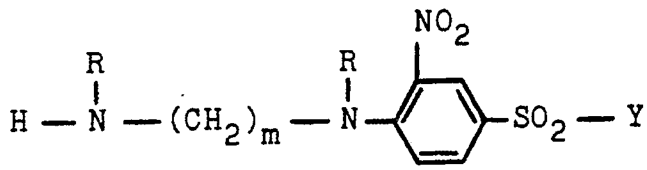 (18)

in welcher m, R und Y die in Anspruch 1 genannten Bedeutungen haben, umsetzt.

**19.** Verwendung der in Anspruch 1 genannten und definierten Verbindungen der allgemeinen Formel (1) zum Färben und Bedrucken von hydroxy- und/oder carbonamidgruppenhaltigem Material, insbesondere Fasermaterial.

**20.** Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff eine Verbindung der in Anspruch 1 genannten und definierten allgemeinen Formel (1) einsetzt.

Patentansprüche für folgenden Vertragsstaat: ES

**1.** Verfahren zur Herstellung einer Verbindung, die der allgemeinen Formel (1)

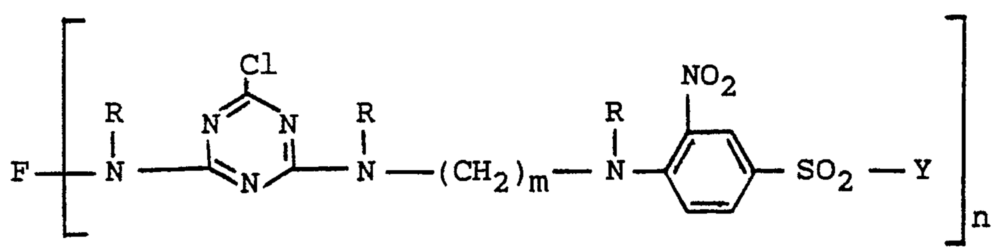 (1)

entspricht, in welcher bedeutet:

F ist ein Rest eines Farbstoffes, bevorzugt eines wasserlöslichen sulfogruppenhaltigen Farbstoffes und bevorzugt aus der Azoreihe;
m ist die Zahl 2 oder 3;
n ist die Zahl 1 oder 2;
R ist ein Wasserstoffatom oder eine Alkylgruppe von 1 bis 4 C-Atomen;
Y ist die Vinylgruppe oder eine Gruppe der allgemeinen Formel (2)

$$-CH_2-CH_2-X \qquad (2)$$

in welcher X für einen Substituenten steht, der als Anion, insbesondere mittels eines Alkalis, eliminierbar ist, dadurch gekennzeichnet, daß man die für wasserlösliche Farbstoffe üblichen Vorprodukte, von denen mindestens eines eine Gruppe der allgemeinen Formel (3)

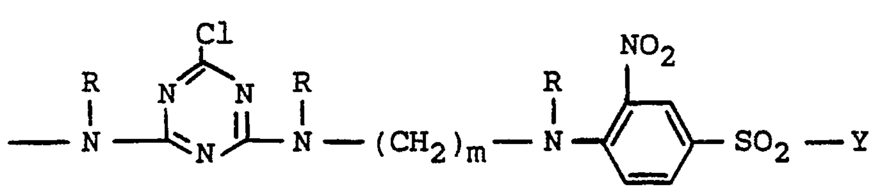 (3)

in welcher R, m und Y die obengenannten Bedeutungen haben, enthält, miteinander analog üblichen

Verfahrensweisen zum entsprechenden Farbstoff umsetzt, oder indem man Cyanurchlorid in beliebiger Folge mit einer Aminoverbindung der allgemeinen Formel (17)

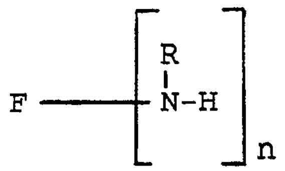

(17)

in welcher F, R und n die oben genannten Bedeutungen haben, und einer Aminoverbindung der allgemeinen Formel (18)

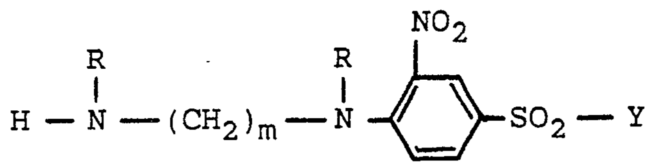

(18)

in welcher m, R und Y die oben genannten Bedeutungen haben, umsetzt.

2. Verfahren nach Anspruch 1, dadurch gekennzeichnet, daß F der Rest eines sulfogruppenhaltigen Mono- oder Disazofarbstoffes ist.

3. Verfahren nach Anspruch 1 oder 2, dadurch gekennzeichnet, daß n die Zahl 1 ist.

4. Verfahren nach Anspruch 1, dadurch gekennzeichnet, daß die synthetisierte Verbindung der Formel (1) eine Verbindung entsprechend der allgemeinen Formel (4)

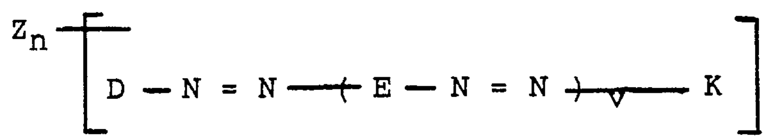

(4)

ist, in welcher D für den Rest einer Diazokomponente, E für den bivalenten Rest einer kupplungsfähigen und diazotierbaren Verbindung, K für den Rest einer Kupplungskomponente und v für die Zahl Null oder 1 steht, n die Zahl 1 oder 2 ist und Z die in Anspruch 1 genannte Bedeutung besitzt, wobei der Rest Z an den Rest D oder den Rest K oder im Falle von n = 2 jeweils an D und K gebunden ist.

5. Verfahren nach Anspruch 4, dadurch gekennzeichnet, daß n für die Zahl 1 steht und Z an K gebunden ist und D einen Rest der allgemeinen Formel

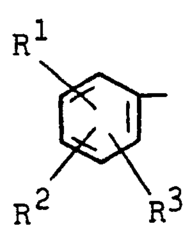

oder

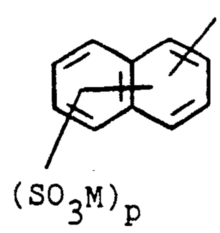

bedeutet, in welchen

$R^1$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^2$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
$R^3$ ein Wasserstoffatom, eine Sulfogruppe, eine $\beta$-Sulfatoethylsulfonyl-oder Vinylsulfonyl-Gruppe, bedeutet,
p die Zahl Null, 1, 2 oder 3 bedeutet und
M ein Wasserstoffatom oder ein Alkalimetall bedeutet.

6. Verfahren nach Anspruch 4, dadurch gekennzeichnet, daß n für die Zahl 1 steht und Z an D gebunden ist und D einen Rest der allgemeinen Formel

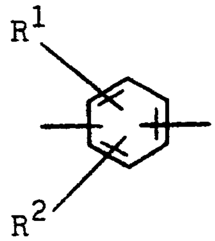

oder

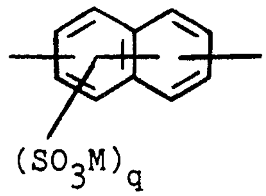

bedeutet, in welchen
$R^1$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist
$R^2$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
q die Zahl Null, 1 oder 2 bedeutet und
M ein Wasserstoffatom oder ein Alkalimetall ist.

7. Verfahren nach Anspruch 4, dadurch gekennzeichnet, daß n für die Zahl 1 steht, Z an D gebunden ist und K einen Rest der allgemeinen Formel

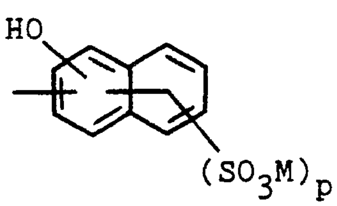

oder

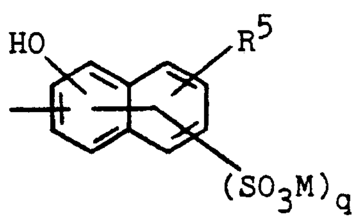

oder

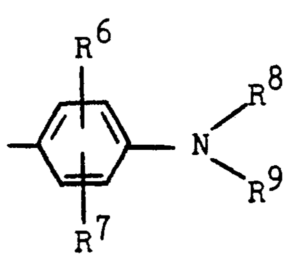

bedeutet, in welchen
$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substituiertes Phenylureido, Alkanoylamino von 2 bis 7 C-Atomen, Cyclohexanoylamino, Benzoylamino oder im Benzolrest durch Chlor, Methyl, Methoxy, Nitro, Sulfo und/oder Carboxy substituiertes Benzoylamino bedeutet,

$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,
$R^7$ Wasserstoff, Alkyl von 1 bis 4 C-Atomen, Alkoxy von 1 bis 4 C-Atomen, Chlor oder Alkanoylamino von 2 bis 7 C-Atomen oder eine Ureido- oder Phenylureidogruppe ist,
$R^8$ Wasserstoff oder Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann,
$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist,
p für die Zahl Null, 1, 2 oder 3 steht,
q die Zahl Null, 1 oder 2 bedeutet und
M ein Wasserstoffatom oder ein Alkalimetall ist.

**8.** Verfahren nach Anspruch 4, dadurch gekennzeichnet, daß n für die Zahl 1 steht, der Rest Z an K gebunden ist und die Gruppe -K-Z einen Rest der Formel

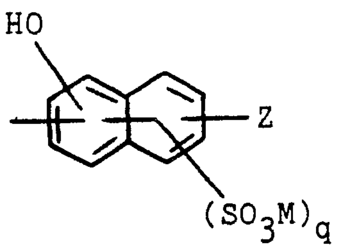

oder

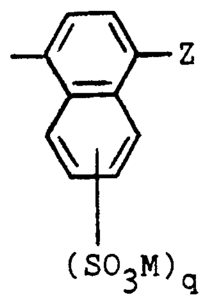

oder

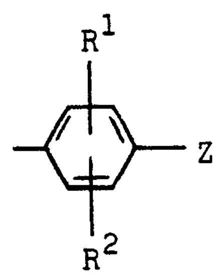

bedeutet, in welchen $R^1$ gleich Wasserstoff, Methyl, Methoxy, Chlor, Carboxy oder Sulfo, $R^2$ gleich Wasserstoff, Methyl, Methoxy, Chlor, Carboxy, Sulfo oder Acetylamino, q die Zahl Null, 1 oder 2 und M gleich Wasserstoff oder ein Alkalimetall ist sowie Z die in Anspruch 4 genannte Bedeutung besitzt.

**9.** Verfahren nach Anspruch 4, dadurch gekennzeichnet, daß v für die Zahl 1 steht und E einen Rest der Formel

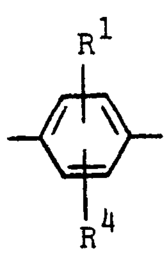

oder

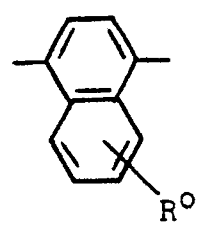

bedeutet, in welcher
$R^1$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist,
$R^o$ ein Wasserstoffatom oder eine Sulfogruppe ist und
M ein Wasserstoffatom oder ein Alkalimetall bedeutet.

**10.** Verfahren nach Anspruch 1, dadurch gekennzeichnet, daß die synthetisierte Verbindung der Formel (1) eine Verbindung entsprechend der allgemeinen Formel (15)

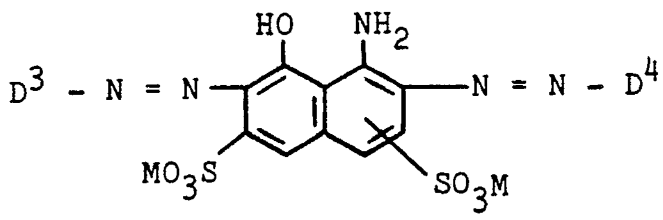

(15)

ist,in welcher $D^3$ und $D^4$ zueinander gleiche oder voneinander verschiedene Bedeutungen haben und jedes den Rest einer Diazokomponente ist, von denen mindestens eine eine faserreaktive Gruppe der allgemeinen Formel (3) gebunden enthält und in welcher M ein Wasserstoffatom oder ein Alkalimetall bedeutet.

**11.** Verfahren nach Anspruch 10, dadurch gekennzeichnet, daß $D^3$ oder $D^4$ oder beide, zueinander gleich oder voneinander verschieden, einen Rest der allgemeinen Formel (10a) oder (10b) oder (12) bedeuten, wobei mindestens einer der Reste $D^3$ und $D^4$ ein Rest der Formel (12) ist

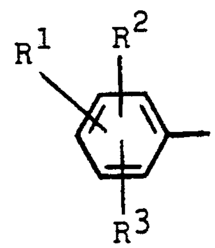

(10a)

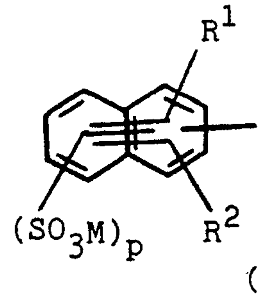

(10b)

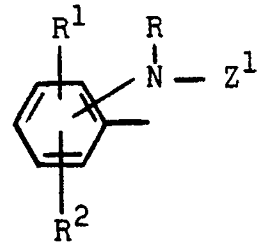

(12)

in welchen

$R^1$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^2$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

$R^3$ Wasserstoff, Sulfo, $\beta$-Sulfatoethylsulfonyl oder Vinylsulfonyl ist,

R gleich Wasserstoff ist,

$Z^1$ einen Rest der allgemeinen Formel (3a)

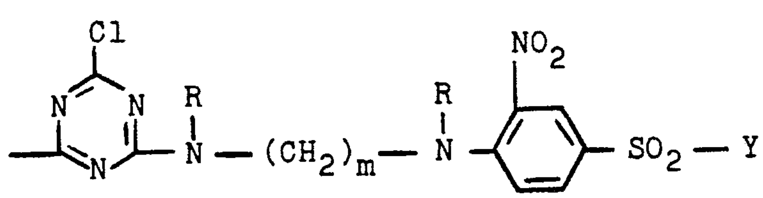

(3a)

mit R jeweils gleich Wasserstoff und m und Y der in Anspruch 1 angegebenen Bedeutung darstellt,

p die Zahl Null, 1, 2 oder 3 bedeutet und

M ein Wasserstoffatom oder ein Alkalimetall ist.

**12.** Verfahren nach Anspruch 1, dadurch gekennzeichnet, daß die synthetisierte Verbindung der Formel (1) eine Verbindung entsprechend der allgemeinen Formel

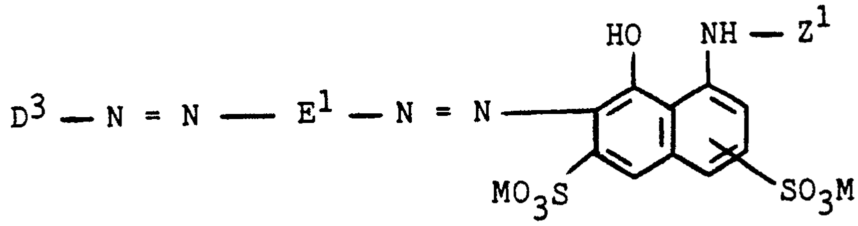

ist, in welcher

$D^3$ ein Rest der allgemeinen Formel (10a) oder (10b)

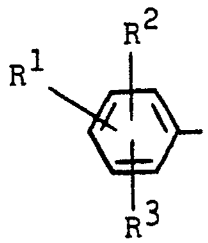

(10a)

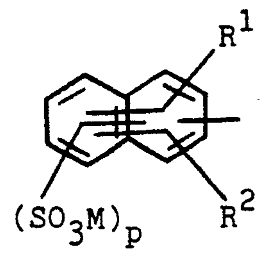

(10b)

ist, worin

$R^1$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^2$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

$R^3$ Wasserstoff, Sulfo, β-Sulfatoethylsulfonyl oder Vinylsulfonyl bedeutet,

p die Zahl Null, 1, 2 oder 3 bedeutet und

M ein Wasserstoffatom oder ein Alkalimetall ist,

$E^1$ einen Rest der allgemeinen Formel (7A) oder (7B)

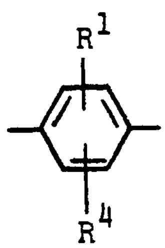

(7A)

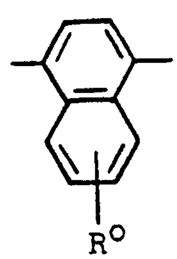

(7B)

ist, worin $R^1$ eine der obengenannten Bedeutungen hat und

$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl, Cycloalkyl-ureido mit 5 bis 8 C-Atomen im Cycloalkylteil, Alkylsulfonyl von 1 bis 4 C-Atomen oder Alkylsulfonylamino von 1 bis 4 C-Atomen ist und

$R^o$ für Wasserstoff oder Sulfo steht, und

$Z^1$ einen Rest der allgemeinen Formel (3a)

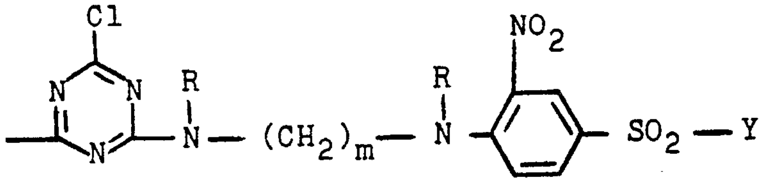

(3a)

mit R jeweils gleich Wasserstoff und m und Y der in Anspruch 1 angegebenen Bedeutung darstellt.

**13.** Verfahren nach Anspruch 1, dadurch gekennzeichnet, daß die synthetisierte Verbindung der Formel (1) eine Verbindung entsprechend der allgemeinen Formel

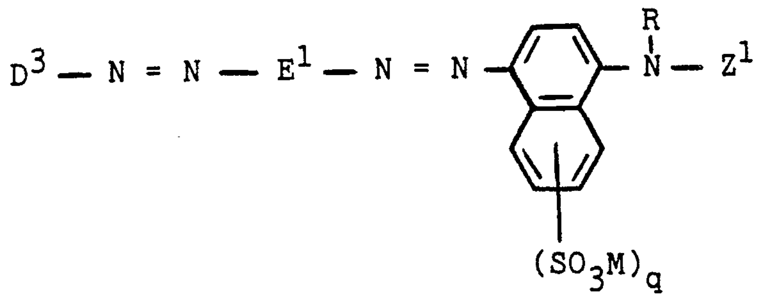

ist, in welcher $D^3$, $E^1$, M und $Z^1$ eine der in Anspruch 12 genannten Bedeutungen haben,
R für ein Wasserstoffatom steht und
q die Zahl Null, 1 oder 2 ist.

**14.** Verfahren nach Anspruch 1, dadurch gekennzeichnet, daß die synthetisierte Verbindung der Formel (1) eine Verbindung entsprechend der allgemeinen Formel

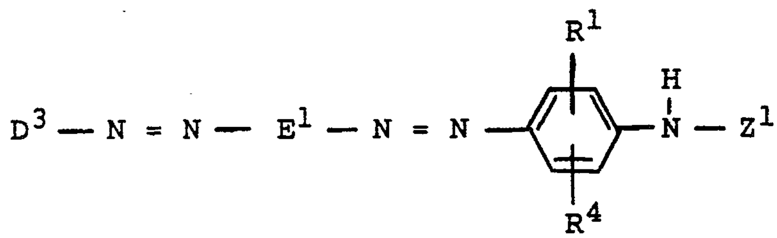

ist, in welcher R eine der in Anspruch 1 und $D^3$, $E^1$ und
$Z^1$ eine der in Anspruch 12 genannten Bedeutungen haben,
$R^1$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist und
$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl, Cycloalkyl-ureido mit 5 bis 8 C-Atomen im Cycloalkylteil, Alkylsulfonyl von 1 bis 4 C-Atomen oder Alkylsulfonylamino von 1 bis 4 C-Atomen ist.

**15.** Verfahren nach mindestens einem der Ansprüche 1 bis 14, dadurch gekennzeichnet, daß m die Zahl 2 ist.

**16.** Verfahren nach mindestens einem der Ansprüche 1 bis 15, dadurch gekennzeichnet, daß Y für die β-Sulfatoethyl-Gruppe steht.

**17.** Verfahren nach Anspruch 1, dadurch gekennzeichnet, daß R jedes für ein Wasserstoffatom steht.

**18.** Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff eine Verbindung einsetzt, die der in Anspruch 1 genannten und definierten allgemeinen Formel (1) entspricht oder gemäß einem Verfahren nach Anspruch 1 hergestellt wurde.

## Claims

1. A compound which corresponds to the formula (1)

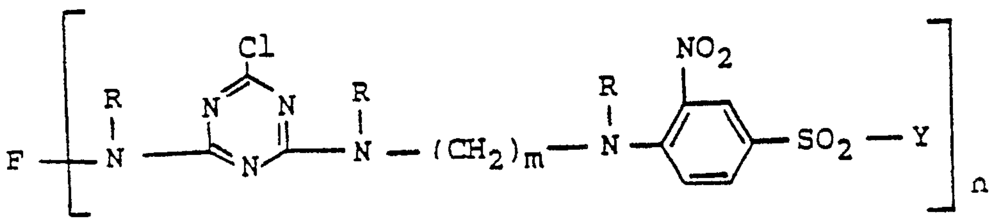

(1)

in which:

F denotes a radical of a dye, preferably a water-soluble sulfo group-containing dye and preferably from the azo series;
m denotes the number 2 or 3;
n denotes the number 1 or 2;
R denotes a hydrogen atom or alkyl group having 1 to 4 carbon atoms; and
Y denotes the vinyl group or a group of the formula (2)

$$-CH_2-CH_2-X \qquad (2)$$

in which X represents a substituent which can be eliminated as an anion, in particular by means of an alkali metal.

2. A compound as claimed in claim 1, wherein F is the radical of a sulfo group-containing monoazo or disazo dye.

3. A compound as claimed in claim 1 or 2, wherein n is the number 1.

4. A compound as claimed in claim 1, corresponding to the formula (4)

$$Z_n - \left[ D-N=N-(E-N=N)_v-K \right] \qquad (4)$$

in which D represents the radical of a diazo component, E represents the divalent radical of a compound which is capable of coupling and can be diazotized, K represents the radical of a coupling component, and v represents the number zero or 1, n is the number 1 or 2 and Z denotes a radical of the formula (3)

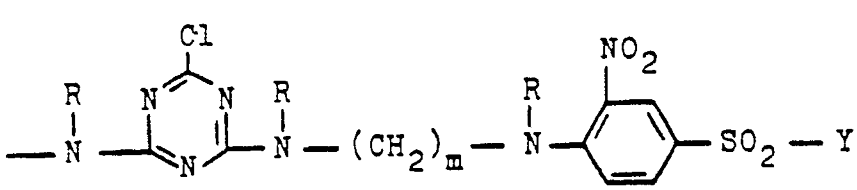

(3)

in which R, m and Y have the meanings mentioned in claim 1, the radical Z being bonded to the radical D or to the radical K or, in the case where n = 2, to each of D and K.

5. A compound as claimed in claim 4, wherein n represents the number 1 and 2 is bonded to K, and D denotes a radical of the formula

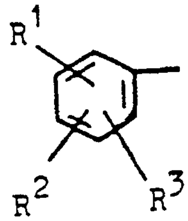

or

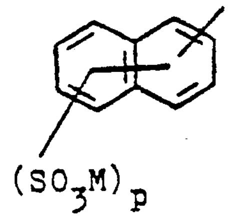

in which

$R^1$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-car-bamoyl, fluorine, chlorine, bromine or trifluoromethyl,

$R^2$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N- ($C_1$-$C_4$-alkyl) -carbamoyl, fluorine, chlorine, nitro, sulfamoyl, N-($C_1$-$C_4$-alkyl)-sulfamoyl, alkylsulfonyl having 1 to 4 carbon atoms, phenylsulfonyl or phenoxy,

$R^3$ is a hydrogen atom, a sulfo group, a $\beta$-sulfatoethylsulfonyl group or a vinylsulfonyl group,

p denotes the number zero, 1, 2 or 3, and

M denotes a hydrogen atom or an alkali metal.

**6.** A compound as claimed in claim 4, wherein n represents the number 1 and Z is bonded to D, and D denotes a radical of the formula

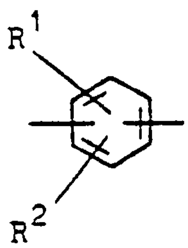

or

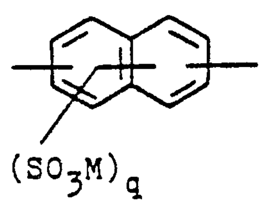

in which

$R^1$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N- ($C_1$-$C_4$-alkyl ) -carbamoyl, fluorine, chlorine, bromine or trifluoromethyl,

$R^2$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)-sulfamoyl, alkylsulfonyl having 1 to 4 carbon atoms, phenylsulfonyl or phenoxy,

q denotes the number zero, 1 or 2, and

M is a hydrogen atom or an alkali metal.

**7.** A compound as claimed in claim 4, wherein n represents the number 1, Z is bonded to D and K denotes a radical of the formula

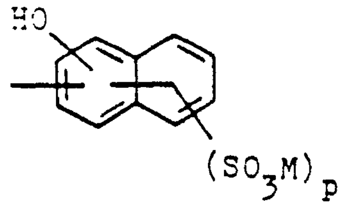

or

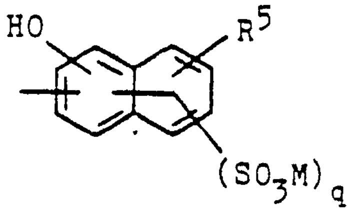

or

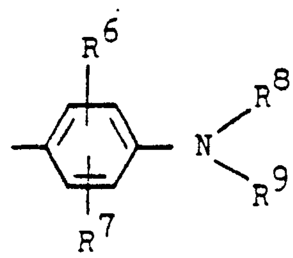

in which

$R^5$ denotes alkylureido containing alkyl groups having 1 to 6 carbon atoms, phenylureido, phenylureido which is substituted in the phenyl radical by chlorine, methyl, methoxy, nitro, sulfo and/or carboryl, alkanoylamino having 2 to 7 carbon atoms, cyclohexanoylamino, benzoylamino, or benzoylamino which is substituted in the benzene radical by chlorine, methyl, methoxy, nitro, sulfo and/or carboxyl,

$R^6$ is hydrogen, alkyl having 1 to 4 carbon atoms, alkoxy having 1 to 4 carbon atoms, bromine, chlorine or alkanoylamino having 2 to 7 carbon atoms,

$R^7$ is hydrogen, alkyl having 1 to 4 carbon atoms, alkoxy having 1 to 4 carbon atoms, chlorine or alkanoylamino having 2 to 7 carbon atoms, or a ureido or phenylureido group,

$R^8$ is hydrogen, or alkyl which has 1 to 4 carbon atoms and which may be substituted by hydroxyl, cyano, carboxyl, sulfo, sulfato, methoxycarbonyl, ethoxycarbonyl or acetoxy,

$R^9$ represents alkyl which has 1 to 4 carbon atoms and which may be substituted by hydroxyl, cyano, carboxyl, sulfo, sulfato, methoxycarbonyl, ethoxycarbonyl or acetoxy, or is benzyl or phenyl or phenyl which is substituted by alkyl having 1 to 4 carbon atoms, alkoxy having 1 to 4 carbon atoms, chlorine and/or sulfo,

p represents the number zero, 1, 2 or 3,

q denotes the number zero, 1 or 2, and

M is a hydrogen atom or an alkali metal.

8. A compound as claimed in claim 4, wherein n represents the number 1, the radical 2 is bonded to K, and the -K-Z group denotes a radical of the formula

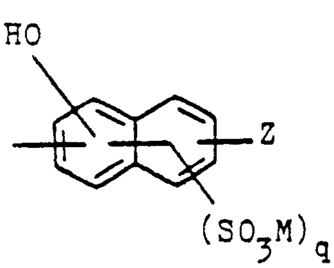

or

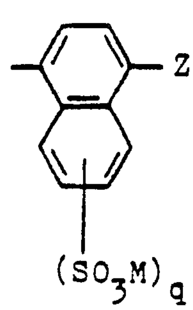

or

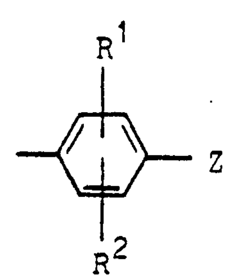

in which $R^1$ equals hydrogen, methyl, methoxy, chlorine, carboxyl or sulfo, $R^2$ equals hydrogen, methyl, methoxy, chlorine, carboxyl, sulfo or acetylamino, q is the number zero, 1 or 2, and M equals hydrogen or an alkali metal, and 2 has the meaning mentioned in claim 4.

9. A compound as claimed in claim 4, wherein v represents the number 1 and E denotes a radical of the formula

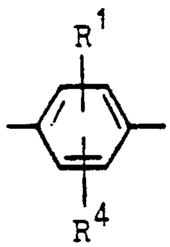

or

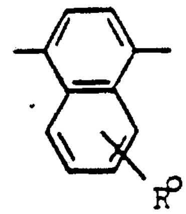

in which

$R^1$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N- ($C_1$-$C_4$-alkyl) -carbamoyl, fluorine, chlorine, bromine or trifluoromethyl,

$R^4$ is hydrogen, alkyl having 1 to 4 carbon atoms, alkoxy having 1 to 4 carbon atoms, chlorine, alkanoylamino having 2 to 5 carbon atoms, benzoylamino, ureido, phenylureido, alkylureido having 1 to 4 carbon atoms in the alkyl radical, phenylsulfonyl or alkylsulfonyl having 1 to 4 carbon atoms,

$R^{\circ}$ is a hydrogen atom or a sulfo group, and

M denotes a hydrogen atom or an alkali metal.

**10.** A compound as claimed in claim 1, corresponding to the formula (15)

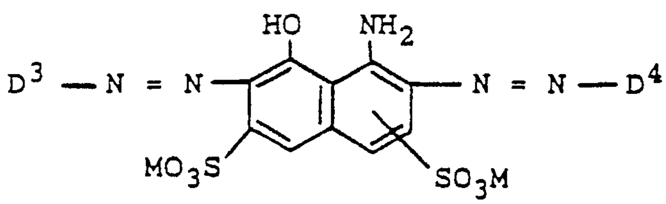

(15)

in which $D^3$ and $D^4$ have meanings which are identical to or different from one another, and each is the radical of a diazo component of which at least one contains, bonded, a fiber-reactive group of the formula (3)

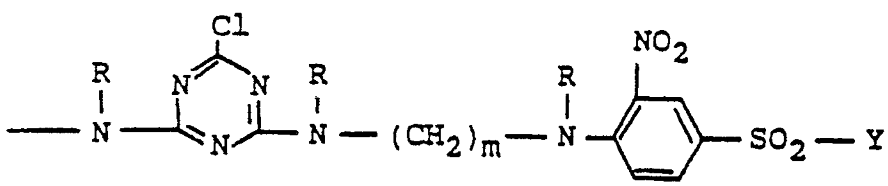

(3)

where R, M and y have the meanings given in claim 1, and in which M denotes a hydrogen atom or an alkali metal.

**11.** A compound as claimed in claim 10, wherein $D^3$ or $D^4$ or both, identical to or different from one another, denote a radical of the formula (10a) or (10b) or (12), at least one of the radicals $D^3$ and $D^4$ being a radical of the formula (12)

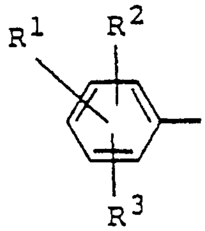

(10a)

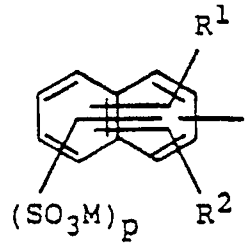

(10b)

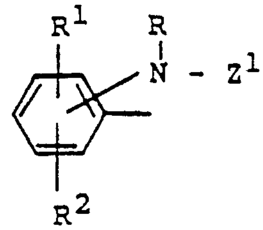

(12)

in which

$R^1$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl,

$R^2$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)-sulfamoyl, alkylsulfonyl having 1 to 4 carbon atoms, phenylsulfonyl or phenoxy,

$R^3$ is hydrogen, sulfo, β-sulfatoethylsulfonyl or vinylsulfonyl,

R equal hydrogen,

$Z^1$ represents a radical of the formula (3a)

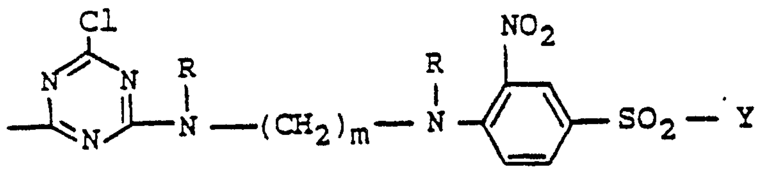

(3a)

where R in each case equals hydrogen, and m and Y have the meaning given in claim 1,

p denotes the number zero, 1, 2, or 3 and

M is a hydrogen atom or an alkali metal.

**12.** A compound as claimed in claim 1, corresponding to the formula

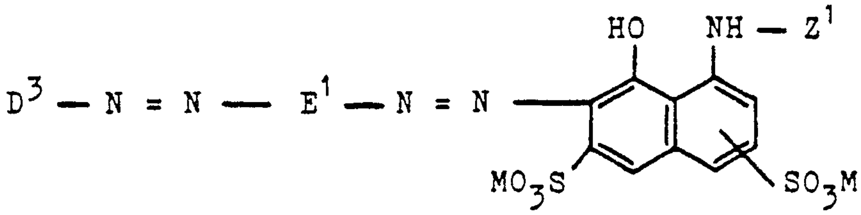

in which

$D^3$ is a radical of the formula (10a) or (10b)

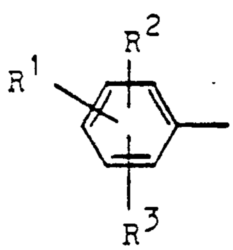

(10a)

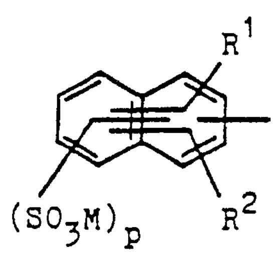

(10b)

in which

$R^1$ is hydrogen, methyl, ethyl, methoxy, ethoxy, alkanoyl having 2 to 5 carbon atoms, cyano, carboxyl, sulfo, alkorycarbonyl having 2 to 5 carbon atoms, carbamoyl, N-($C_1$-$C_4$-alkyl)-carbamoyl, fluorine, chlorine, bromine or trifluoromethyl,

$R^2$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)carbamoyl, fluorine, chlorine, nitro, sulfamoyl, N-($C_1$-$C_4$-alkyl)-sulfamoyl, alkylsulfonyl having 1 to 4 carbon atoms, phenylsulfonyl or phenoxy,

$R^3$ denotes hydrogen, sulfo, β-sulfatoethylsulfonyl or vinylsulfonyl,

p denotes the number zero, 1, 2 or 3, and

M is a hydrogen atom or an alkali metal,

$E^1$ is a radical of the formula (7A) or (7B)

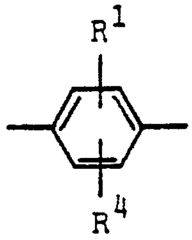 (7A) 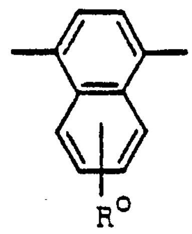 (7B)

in which $R^1$ has one of the above mentioned meanings, and
$R^4$ is hydrogen, alkyl having 1 to 4 carbon atoms, alkoxy having 1 to 4 carbon atoms, chlorine, alkanoylamino having 2 to 5 carbon atoms, benzoylamino, ureido, phenylureido, alkylureido having 1 to 4 carbon atoms in the alkyl radical, phenylsulfonyl, cycloalkylureido having 5 to 8 carbon atoms in the cycloalkyl part, alkylsulfonyl having 1 to 4 carbon atoms or alkylsulfonylamino having 1 to 4 carbon atoms, and
$R^{\circ}$ represents hydrogen or sulfo, and
$Z^1$ represents a radical of the formula (3a)

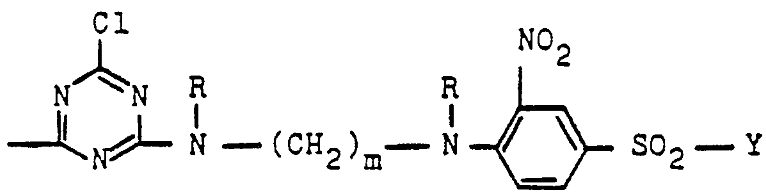 (3a)

where R in each case equals hydrogen and m and Y have the meaning given in claim 1.

**13.** A compound as claimed in claim 1, of the formula

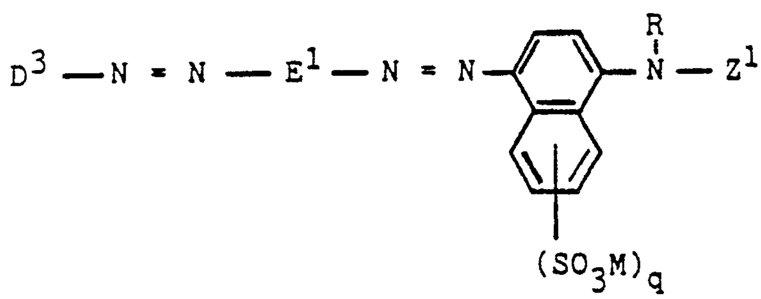

in which
$D^3$, $E^1$, M and $Z^1$ have one of the meanings given in claim 12,
R represents a hydrogen atom and
q is the number zero, 1 or 2.

**14.** A compound as claimed in claim 1, of the formula

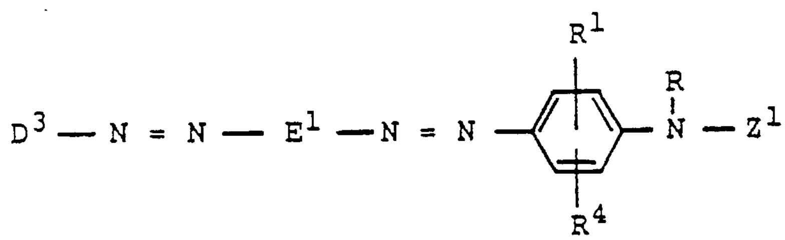

in which R has one of the meanings given in claim 1 and
$D^3$, $E^1$ and $Z^1$ have one of the meanings given in claim 12,
$R^1$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl,

fluorine, chlorine, bromine or trifluoromethyl and
$R^4$ is hydrogen, alkyl having 1 to 4 carbon atoms, alkoxy having 1 to 4 carbon atoms, chlorine, alkanoylamino having 2 to 5 carbon atoms, benzoylamino, ureido, phenylureido, alkylureido having 1 to 4 carbon atoms in the alkyl radical, phenylsulfonyl, cycloalkylureido having 5 to 8 carbon atoms in the cycloalkyl part, alkylsulfonyl having 1 to 4 carbon atoms or alkylsulfonylamino having 1 to 4 carbon atoms.

**15.** A ccmpound as claimed in at least one of claims 1 to 14, wherein m is the number 2.

**16.** A compound as claimed in at least one of claims 1 to 15, wherein Y represents the β-sulfatoethyl group.

**17.** A compound as claimed in at least one of claims 1 to 10 and 14 to 16, wherein each R represents a hydrogen atom.

**18.** A process for the preparation of the compounds of the formula (1) mentioned and defined in claim 1, which comprises reacting the intermediates conventional for water-soluble dyes and of which at least one contains a group of the formula (3) with one another analogously to conventional procedures to give the corresponding dye, or reacting cyanuric chloride in any desired sequence with an amino compound of the formula (17)

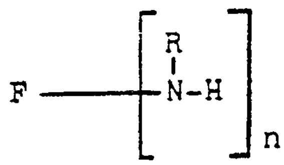

(17)

in which F, R and n have the meanings mentioned in claim 1, and an amino compound of the formula (18)

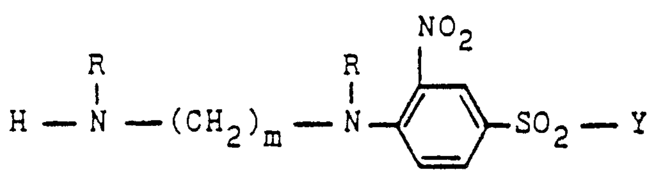

(18)

in which m, R and Y have the meanings mentioned in claim 1.

**19.** The use of a compound of the formula (1) mentioned and defined in claim 1 for dyeing and printing hydroxyl and/or carboxamide group-containing material, in particular fiber material.

**20.** A process for coloring (dyeing, including printing) hydroxyl and/or carboxamide group-containing material, preferably fiber material, in which process a dye is applied to the material or incorporated into the material, and the dye is fixed onto or in the material by means of heat or with the aid of an agent with an alkaline effect or by means of heat and with the aid of an alkaline agent, wherein the dye employed is a compound of the formula (1) mentioned and defined in claim 1.

Claims for the following Contracting State: ES

**1.** A process for the preparation of a compound which corresponds to the formula (1)

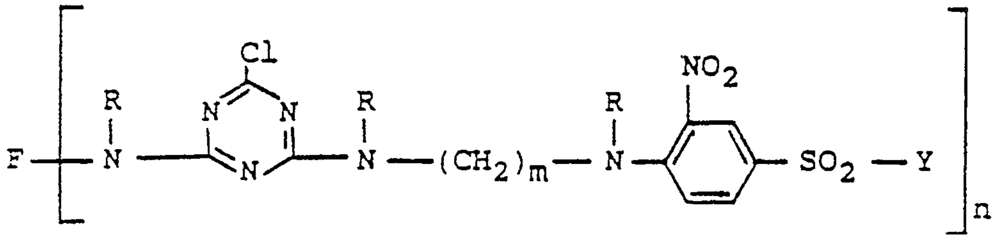

(1)

in which:

F denotes a radical of a dye, preferably a water-soluble sulfo group-containing dye and preferably from the azo series;

m denotes the number 2 or 3;

n denotes the number 1 or 2;

R denotes a hydrogen atom or an alkyl group having 1 to 4 carbon atoms; and

Y denotes the vinyl group or a group of the formula

$$-CH_2-CH_2-X \qquad (2)$$

in which x represents a substituent which can be eliminated as an anion, in particular by means of an alkali metal, which comprises reacting the intermediates conventional for water-soluble dyes and of which at least one contains a group of the formula (3)

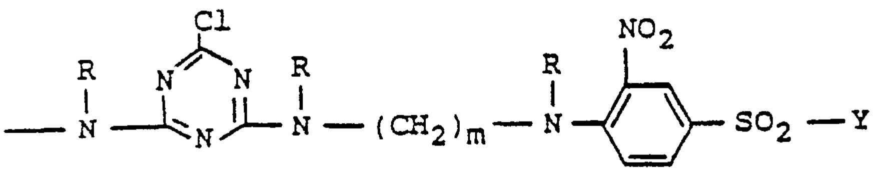

(3)

in which R, m and Y have the above mentioned meanings, with one another analogously to conventional procedures to give the corresponding dye, or reacting cyanuric chloride in any desired sequence with an amino compound of the formula (17)

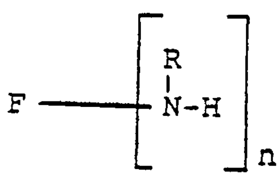

(17)

in which F, R and n have the meanings mentioned above, and an amino compound of the formula (18)

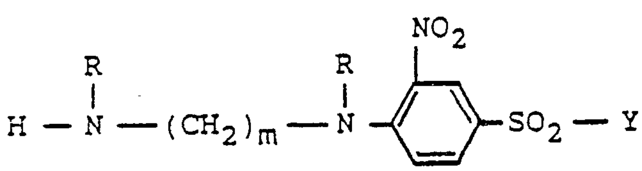

(18)

in which m, R and Y have the meanings mentioned above.

2. The process as claimed in claim 1, wherein F is the radical of a sulfo group-containing monoazo or disazo dye.

3. The process as claimed in claim 1 or 2, wherein n is the number 1.

4. The process as claimed in claim 1, wherein the synthesized compound of the formula (1) is a compound corresponding to the formula (4)

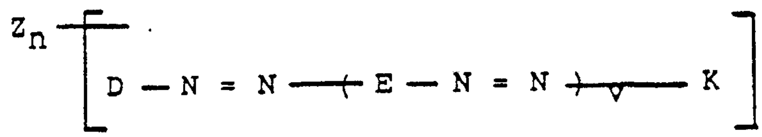

(4)

in which D represents the radical of a diazo component, E represents the divalent radical of a compound which is capable of coupling and can be diazotized, K represents the radical of a coupling component, and v represents the number zero or 1, n is the number 1 or 2 and Z has the meaning given in claim 1, the radical Z being bonded to the radical D or to the radical K or, in the case where n = 2, to each of D and K.

5. The process as claimed in claim 4, wherein n represents the number 1 and Z is bonded to K, and D denotes a radical of the formula

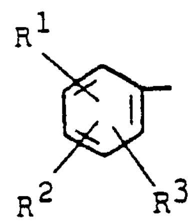

or

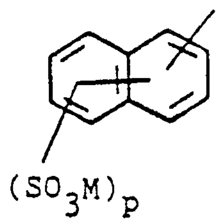

in which
$R^1$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl,
$R^2$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N- ($C_1$-$C_4$-alkyl) -carbamoyl, fluorine, chlorine, nitro, sulfamoyl, N-($C_1$-$C_4$-alkyl)sulfamoyl, alkylsulfonyl having 1 to 4 carbon atoms, phenylsulfonyl or phenoxy,
$R^3$ is a hydrogen atom, a sulfo group, a $\beta$-sulfatoethylsulfonyl group or a vinylsulfonyl group,
p denotes the number zero, 1, 2 or 3, and
M denotes a hydrogen atom or an alkali metal.

6. The process as claimed in claim 4, wherein n represents the number 1 and Z is bonded to D, and D denotes a radical of the formula

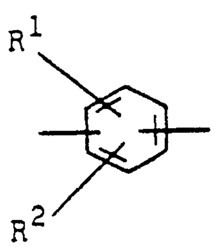

or

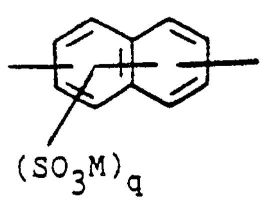

in which
$R^1$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl,
$R^2$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)-sulfamoyl, alkylsulfonyl having 1 to 4 carbon atoms, phenylsulfonyl or phenoxy,

q denotes the number zero, 1 or 2, and
M is a hydrogen atom or an alkali metal.

7. The process as claimed in claim 4, wherein n represents the number 1, Z is bonded to D and K denotes a radical of the formula

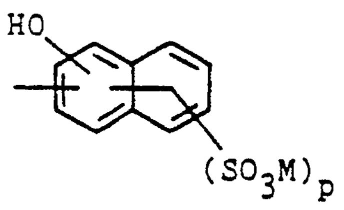

or

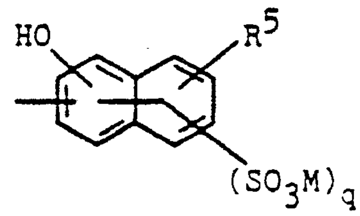

or

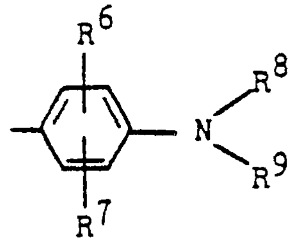

in which

$R^5$ denotes alkylureido containing alkyl groups having 1 to 6 carbon atoms, phenylureido, phenylureido which is substituted in the phenyl radical by chlorine, methyl, methoxy, nitro, sulfo and/or carboryl, alkanoylamino having 2 to 7 carbon atoms, cyclohexanoylamino, benzoylamino, or benzoylamino which is substituted in the benzene radical by chlorine, methyl, methoxy, nitro, sulfo and/or carboxyl,
$R^6$ is hydrogen, alkyl having 1 to 4 carbon atoms, alkoxy having 1 to 4 carbon atoms, bromine, chlorine or alkanoylamino having 2 to 7 carbon atoms,
$R^7$ is hydrogen, alkyl having 1 to 4 carbon atoms, alkoxy having 1 to 4 carbon atoms, chlorine or alkanoylamino having 2 to 7 carbon atoms, or a ureido or phenylureido group,
$R^8$ is hydrogen, or alkyl which has 1 to 4 carbon atoms and which may be substituted by hydroxyl, cyano, carboxyl, sulfo, sulfato, methoxycarbonyl, ethoxycarbonyl or acetoxy,
$R^9$ represents alkyl which has 1 to 4 carbon atoms and which may be substituted by hydroxyl, cyano, carboxyl, sulfo, sulfato, methoxycarbonyl, ethoxycarbonyl or acetoxy, or is benzyl or phenyl or phenyl which is substituted by alkyl having 1 to 4 carbon atoms, alkoxy having 1 to 4 carbon atoms, chlorine and/or sulfo,
p represents the number zero, 1, 2 or 3,
q denotes the number zero, 1 or 2, and
M is a hydrogen atom or an alkali metal.

8. The process as claimed in claim 4, wherein n represents the number 1, the radical Z is bonded to K, and the -K-Z group denotes a radical of the formula

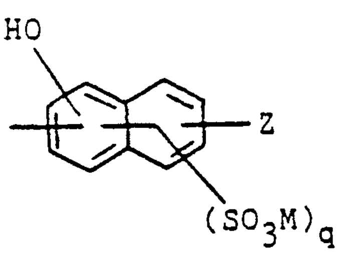

or

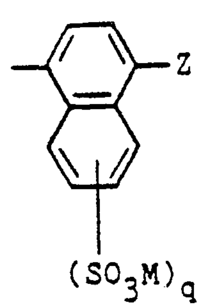

or

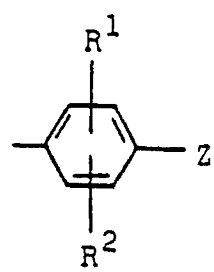

in which $R^1$ equals hydrogen, methyl, methoxy, chlorine, carboxyl or sulfo, $R^2$ equals hydrogen, methyl, methoxy, chlorine, carboxyl, sulfo or acetylamino, q is the number zero, 1 or 2, and M equals hydrogen or an alkali metal, and Z has the meaning mentioned in claim 4.

**9.** The process as claimed in claim 4, wherein v represents the number 1 and E denotes a radical of the formula

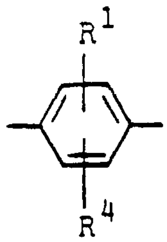

or

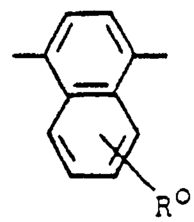

in which

$R^1$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl,

$R^4$ is hydrogen, alkyl having 1 to 4 carbon atoms, alkoxy having 1 to 4 carbon atoms, chlorine, alkanoylamino having 2 to 5 carbon atoms, benzoylamino, ureido, phenylureido, alkylureido having 1 to 4 carbon atoms in the alkyl radical, phenylsulfonyl or alkylsulfonyl having 1 to 4 carbon atoms,

$R^°$ is a hydrogen atom or a sulfo group, and

M denotes a hydrogen atom or an alkali metal.

**10.** The process as claimed in claim 1, wherein the synthesized compound of the formula (1) is a compound corresponding to the formula (15)

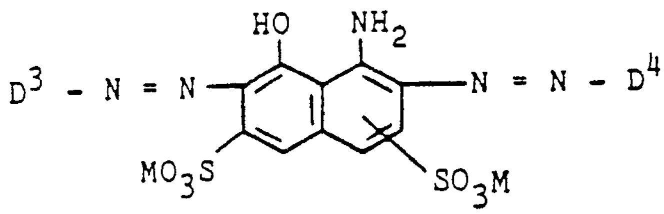

(15)

in which $D^3$ and $D^4$ have meanings which are identical to or different from one another, and each is the radical of a diazo component of which at least one contains, bonded, a fiber-reactive group of the formula (3) and in which M denotes a hydrogen atom or an alkali metal.

**11.** The process as claimed in claim 10, wherein $D^3$ or $D^4$ or both, identical to or different from one another, denote a rádical of the formula (10a) or (10b) or (12), at least one of the radicals $D^3$ and $D^4$ being a radical of the formula (12)

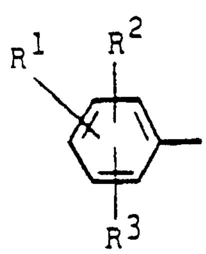

(10a)

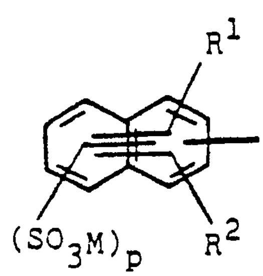

(10b)

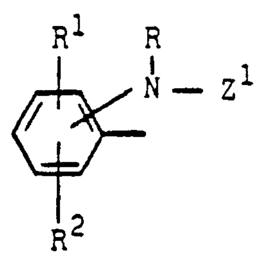

(12)

in which

$R^1$ is hydrogen, methyl, ethyl, methoxy, ethoxy, alkanoyl having 2 to 5 carbon atoms, cyano, carboxyl, sulfo, alkorycarbonyl having 2 to 5 carbon atoms, carbamoyl, N-($C_1$-$C_4$-alkyl)-carbamoyl, fluorine, chlorine, bromine or trifluoromethyl,

$R^2$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N- ($C_1$-$C_4$-alkyl) -carbamoyl,

fluorine, chlorine, nitro, sulfamoyl, N-($C_1$-$C_4$-alkyl)-sulfamoyl, alkylsulfonyl having 1 to 4 carbon atoms, phenylsulfonyl or phenoxy,
$R^3$ is hydrogen, sulfo, β-sulfatoethylsulfonyl or vinylsulfonyl,
R equals hydrogen,
$Z^1$ represents a radical of the formula (3a)

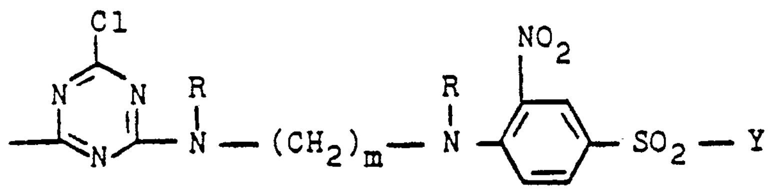

(3a)

where R in each case equals hydrogen, and m and Y have the meaning given in claim 1,
p denotes the number zero, 1, 2 or 3 and
M is a hydrogen atom or an alkali metal.

**12.** The process as claimed in claim 1, wherein the synthesized compound of the formula (1) is a compound corresponding to the formula

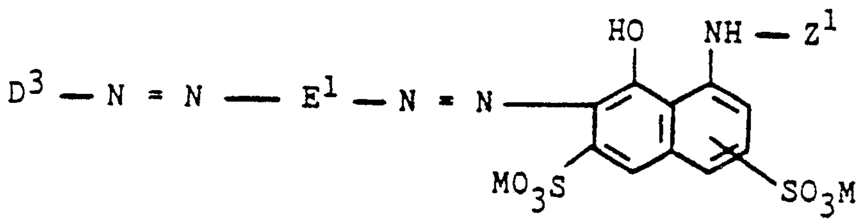

in which
$D^3$ is a radical of the formula (10a) or (10b)

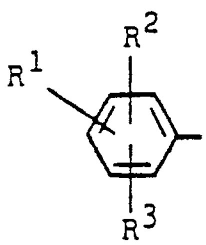

(10a)

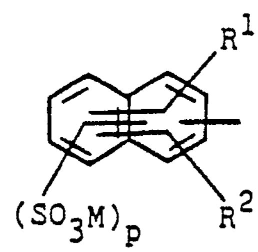

(10b)

in which
$R^1$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl,
$R^2$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)-sulfamoyl, alkylsulfonyl having 1 to 4 carbon atoms, phenylsulfonyl or phenoxy,
$R^3$ denotes hydrogen, sulfo, β-sulfatoethylsulfonyl or vinylsulfonyl,
p denotes the number zero, 1, 2 or 3, and
M is a hydrogen atom or an alkali metal,
$E^1$ is a radical of the formula (7A) or (7B)

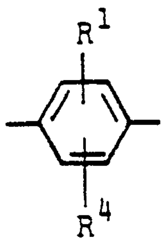

(7A)

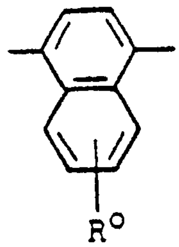

(7B)

in which $R^1$ has one of the above mentioned meanings, and
$R^4$ is hydrogen, alkyl having 1 to 4 carbon atoms, alkoxy having 1 to 4 carbon atoms, chlorine, alkanoylamino having 2 to 5 carbon atoms, benzoylamino, ureido, phenylureido, alkylureido having 1 to 4 carbon atoms in the alkyl radical, phenylsulfonyl, cycloalkylureido having 5 to 8 carbon atoms in the cycloalkyl part, alkylsulfonyl having 1 to 4 carbon atoms or alkylsulfonylamino having 1 to 4 carbon atoms, and
$R^°$ represents hydrogen or sulfo, and
$Z^1$ represents a radical of the formula (3a)

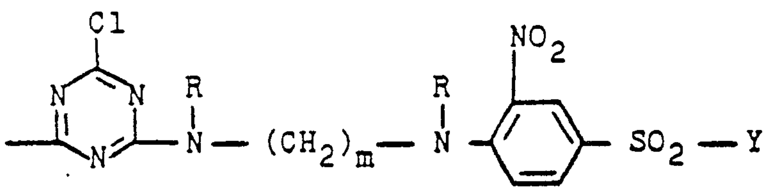

(3a)

where R in each case equals hydrogen and m and Y have the meaning given in claim 1.

**13.** The process as claimed in claim 1, wherein the synthesized compound of the formula (1) is a compound corresponding to the formula

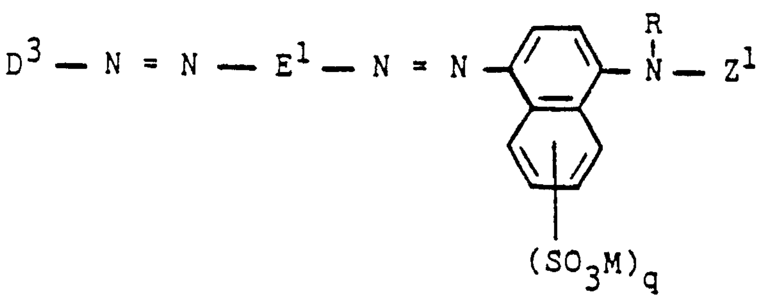

in which
$D^3$, $E^1$, M and $Z^1$ have one of the meanings given in claim 12,
R represents a hydrogen atom and
q is the number zero, 1 or 2.

**14.** The process as claimed in claim 1, wherein the synthesized compound of the formula (1) is a compound corresponding to the formula

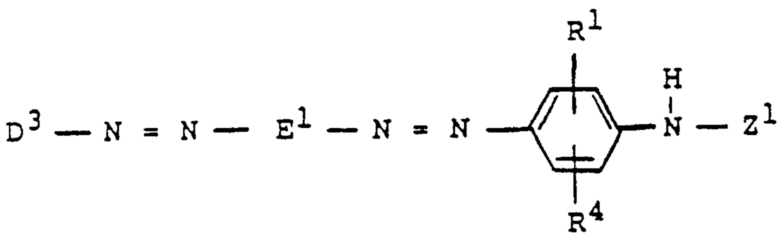

in which R has one of the meanings given in claim 1 and

$D^3$, $E^1$ and $Z^1$ have one of the meanings given in claim 12,
$R^1$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl and
$R^4$ is hydrogen, alkyl having 1 to 4 carbon atoms, alkoxy having 1 to 4 carbon atoms, chlorine, alkanoylamino having 2 to 5 carbon atoms, benzoylamino, ureido, phenylureido alkylureido having 1 to 4 carbon atoms in the alkyl radical, phenylsulfonyl, cycloalkylureido having 5 to 8 carbon atoms in the cycloalkyl part, alkylsulfonyl having 1 to 4 carbon atoms or alkylsulfonylamino having 1 to 4 carbon atoms.

**15.** The process as claimed in at least one of claims 1 to 14, wherein m is the number 2.

**16.** The process as claimed in at least one of claims 1 to 15, wherein Y represents the $\beta$-sulfatoethyl group.

**17.** The process as claimed in at least one of claims 1 to 10 and 14 to 16 wherein each R represents a hydrogen atom.

**18.** A process for coloring (dyeing, including printing) hydroxyl and/or carboxamide group-containing material, preferably fiber material, in which process a dye is applied to the material or incorporated into the material, and the dye is fixed onto or in the material by means of heat or with the aid of an agent with an alkaline effect or by means of heat and with the aid of an alkaline agent, wherein the dye employed is a compound which corresponds to the formula (1) given and defined in claim 1 or has been prepared by a process as claimed in claim 1.

## Revendications

**1.** Composé de formule générale (1)

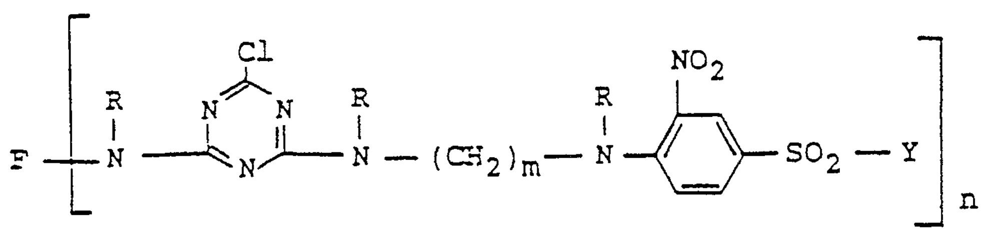

(1)

dans laquelle :
F est le résidu d'un colorant, de préférence d'un colorant soluble dans l'eau et contenant des groupes sulfo, et de préférence de la série azoïque;
m est le nombre 2 ou 3;
n est le nombre 1 ou 2;
R est un atome d'hydrogène ou un groupe alkyle ayant de 1 à 4 atomes de carbone ;
Y est le groupe vinyle ou un groupe de formule générale (2)

$$-CH_2-CH_2-X \quad (2)$$

dans laquelle X est un substituant pouvant être éliminé en tant qu'anion, de préférence à l'aide d'un alcali.

**2.** Composé selon la revendication 1, caractérisé en ce que F est le résidu d'un colorant monoazoïque ou disazoïque contenant des groupes sulfo.

**3.** Composé selon la revendicaton 1 ou 2, caractérisé en ce que n vaut 1.

**4.** Composé selon la revendication 1, de formule générale (4)

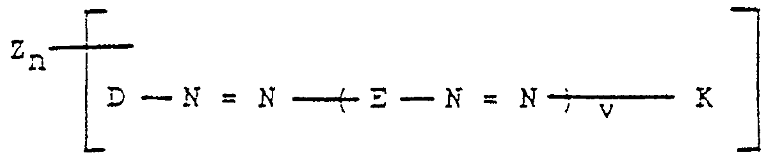

(4)

dans laquelle D est le résidu d'un diazotant, E est le résidu bivalent d'un composé copulable et diazotable, K est le résidu d'un copulant et v vaut zéro ou 1, n vaut 1 ou 2, et Z est un résidu de formule générale (3)

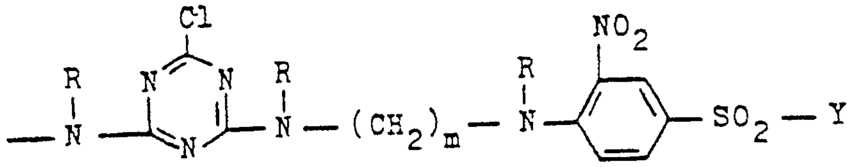

(3)

dans laquelle R, m et Y ont les significations données dans la revendication 1, le radical Z étant lié au radical D ou au radical K ou encore, quand n = 2, à chacun des radicaux D et K.

5. Composé selon la revendication 4, caractérisé en ce que n vaut 1, et Z est lié à K, et D est un radical de formule générale

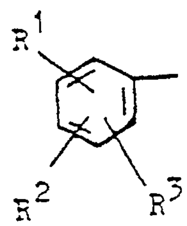

ou

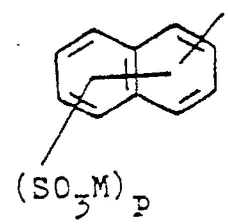

dans lesquelles :

$R^1$ est un hydrogène ou un radical méthyle, éthyle, méthoxy, éthoxy, alcanoyle ayant de 2 à 5 atomes de carbone, cyano, carboxy, sulfo, alcoxycarbonyle ayant de 2 à 5 atomes de carbone, carbamoyle, N-(alkyle en $C_1$-$C_4$) carbamoyle, fluoro, chloro, bromo ou trifluorométhyle,

$R^2$ est un hydroaène ou le radical méthyle, éthyle, méthoxy, éthoxy, cyano, carboxy, sulfo, alcanoylamino ayant de 2 à 5 atomes de carbone, alcoxycarbonyle ayant de 2 à 5 atomes de carbone, carbamoyle, N-(alkyle en $C_1$-$C_4$) carbamoyle, fluoro, chloro, nitro, sulfamoyle, N-(alkyle en $C_1$-$C_4$) sulfamoyle, alkylsulfonyle ayant de 1 à 4 atomes de carbone, phénylsulfonyle ou phénoxy,

$R^3$ est un atome d'hydrogène ou un groupe sulfo, un groupe $\beta$-sulfatoethvlsulfonyle ou vinylsulfonyle,

p vaut zéro, 1, 2 ou 3 et

M est un atome d'hydrogène ou un métal alcalin.

6. Composé selon la revendication 4, caractérisé en ce que n vaut 1 et Z est lié à D, et D est un radical de formule générale

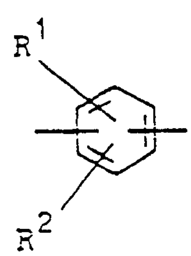

ou

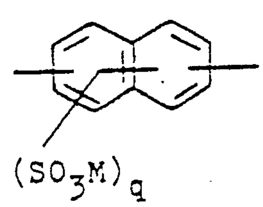

dans lesquelles :

$R^1$ est un hydrogène ou un radical méthyle, éthyle, méthoxy, éthoxy, alcanoyle ayant de 2 à 5 atomes de carbone, cyano, carboxy, sulfo, alcoxycarbonyle ayant de 2 à 5 atomes de carbone,carbamoyle,N-(alkyle en $C_1$-$C_4$)carbamoyle, fluoro, chloro, bromo ou trifluorométhyle,

$R^2$ est un hydrogène ou le radical méthyle, éthyle, méthoxy, éthoxy, cyano, carboxy, sulfo, alcanoylamino ayant de 2 à 5 atomes de carbone, alcoxycarbonyle ayant de 2 à 5 atomes de carbone, carbamoyle, N-(alkyle en $C_1$-$C_4$) carbamoyle, fluoro, chloro, nitro, sulfamoyle, N-(alkyle en $C_1$-$C_4$) sulfamoyle, alkylsulfonyle ayant de 1 à 4 atomes de carbone, phénylsulfonyle ou phénoxy,

q vaut zéro, 1, 2 ou 3 et

M est un atome d'hydrogène ou un métal alcalin.

**7.** Composé selon la revendication 4, caractérisé en ce que n vaut 1, Z est lié à D et K est un résidu de formule générale

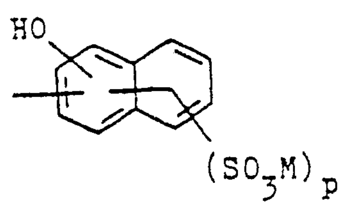

ou

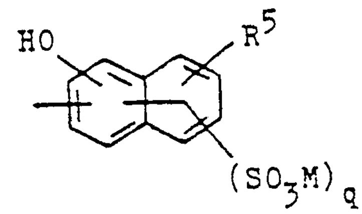

ou

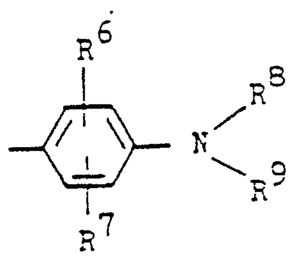

dans lesquelles :

$R^5$ est un radical alkyluréido comportant des groupes alkyle ayant de 1 à 6 atomes de carbone, phényluréido, phényluréido substitué dans le radical phényle par un ou plusieurs radicaux chloro, méthyle, méthoxy, nitro, sulfo et/ou carboxy, alcanoylamino ayant de 2 à 7 atomes de carbone, cyclohexanoylamino, benzoylamino ou benzoylamino substitué dans le noyau benzène par un ou plusieurs radicaux chloro, méthyle, méthoxy, nitro, sulfo et/ou carboxy,

$R^6$ est un hydrogène, un radical alkyle ayant de 1 à 4 atomes de carbone, alcoxy ayant de 1 à 4 atomes de carbone, bromo, chloro ou alcanoylamino ayant de 2 à 7 atomes de carbone,

$R^7$ est un hydrogène, un radical alkyle ayant de 1 à 4 atomes de carbone, alcoxy ayant de 1 à 4 atomes de carbone, chloro ou alcanoylamino ayant de 2 à 7 atomes de carbone, ou encore un groupe uréido ou phényluréido,

$R^8$ est un hydrogène ou un radical alkyle ayant de 1 à 4 atomes de carbone, pouvant être substitué par hydroxy, cyano, carboxy, sulfo, sulfato, méthoxycarbonyle, éthoxycarbonyle ou acétoxy,

$R^9$ est un radical alkyle ayant de 1 à 4 atomes de carbone, pouvant être substitué par hydroxy, cyano, carboxy, sulfo, sulfato, méthoxycarbonyle, éthoxycarbonyle ou acétoxy, ou encore benzyle ou phényle, ou phényle substitué par un ou plusieurs radicaux alkyle ayant de 1 à 4 atomes de carbone, alcoxy ayant de 1 à 4 atomes de carbone, chloro et/ou sulfo,

p vaut zéro, 1, 2 ou 3,

q vaut zéro, 1 ou 2, et

M est un atome d'hydrogène ou un métal alcalin.

**8.** Composé selon la revendication 4, caractérisé en ce que n vaut 1, le radical Z est lié à K et le groupe -K-Z est un radical de formule

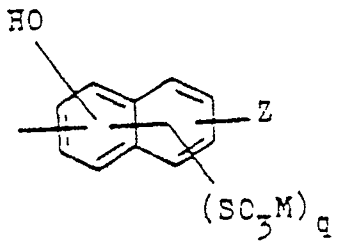

ou

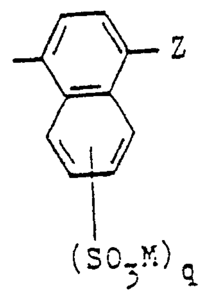

ou

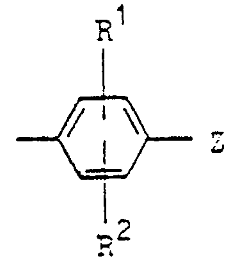

dans lesquelles $R^1$ est un hydrogène ou le radical méthyle, méthoxy, chloro, carboxy ou sulfo, $R^2$ est un hydrogène ou le radical méthyle, méthoxy, chloro, carboxy, sulfo ou acétylamino, q vaut zéro, 1 ou 2 et M est un hydrogène ou un métal alcalin, et Z a les significations données dans la revendication 4.

**9.** Composé selon la revendication 4, caractérisé en ce que v vaut 1 et E est un radical de formule

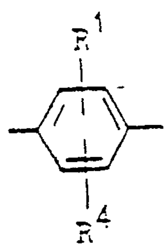

ou

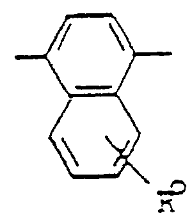

dans lesquelles
$R^1$ est un hydrogène ou un radical méthyle, éthyle, éthoxy, éthoxy, alcanoyle ayant de 2 à 5 atomes de carbone, cyano, carboxy, sulfo, alcoxycarbonyle ayant de 2 à 5 atomes de carbone, carbamoyle, N-(alkyle en $C_1$-$C_4$) carbamoyle, fluoro, chloro, bromo ou trifluorométhyle,
$R^4$ est un hydrogène, un radical alkyle ayant de 1 à 4 atomes de carbone, alcoxy ayant de 1 à 4 atomes de carbone, chloro, alcanoylamino, ayant de 2 à 5 atomes de carbone, benzoylamino, uréido, phényluréido, alkyluréido ayant de 1 à 4 atomes de carbone dans le fragment alkyle, phénylsulfonyle ou alkylsulfonyle ayant de 1 à 4 atomes de carbone,
$R^{\circ}$ est un atome d'hydrogène ou un groupe sulfo, et
M est un atome d'hydrogène ou un métal alcalin.

**10.** Composé selon la revendication 1, de formule générale (15)

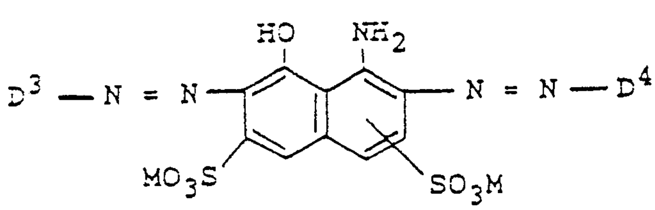

(15)

dans laquelle $D^3$ et $D^4$ sont identiques ou différents et représentent chacun le résidu d'un diazotant, dont au moins l'un contient un groupe réactif de formule générale (3)

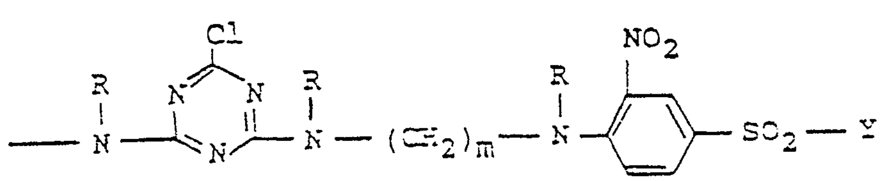

(3)

R, m et Y ayant les significations données dans la revendication 1, et où M est un atome d'hydrogène

ou un métal alcalin.

**11.** Composé selon la revendication 10, caractérisé en ce que $D^3$, ou $D^4$, ou les deux, sont identiques ou différents et représentent chacun un résidu de formule générale (10a) ou (10b) ou (12), au moins l'un des résidus $D^3$ et $D^4$ étant un radical de formule (12)

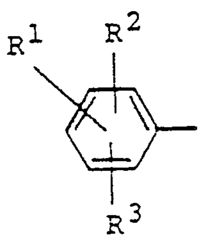

(10a)

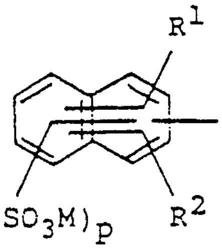

(10b)

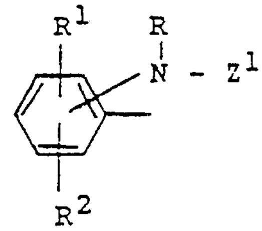

(12)

dans lesquelles

$R^1$ est un hydrogène ou un radical méthyle, éthyle, méthoxy, éthoxy, alcanoyle ayant de 2 à 5 atomes de carbone, cyano, carboxy, sulfo, alcoxycarbonyle ayant de 2 à 5 atomes de carbone, carbamoyle, N-(alkyle en $C_1$-$C_4$) carbamoyle, fluoro, chloro, bromo ou trifluorométhyle,

$R^2$ est un hydrogène ou le radical méthyle, éthyle, méthoxy, éthoxy, cyano, carboxy, sulfo, alcanoylamino ayant de 2 à 5 atomes de carbone alcoxycarbonyle ayant de 2 à 5 atomes de carbone, carbamoyle, N-(alkyle en $C_1$-$C_4$) carbamoyle, fluoro, chloro, nitro, sulfamoyle, N-(alkyle en $C_1$-$C_4$) sulfamoyle, alkylsulfonyle ayant de 1 à 4 atomes de carbone, phénylsulfonyle ou phénoxy,

$R^3$ est un hydrogène, le radical sulfo, $\beta$-sulfatoéthylsulfonyle ou vinylsulfonyle,

R est un hydrogéne,

$Z^1$ est un radical de formule générale (3a)

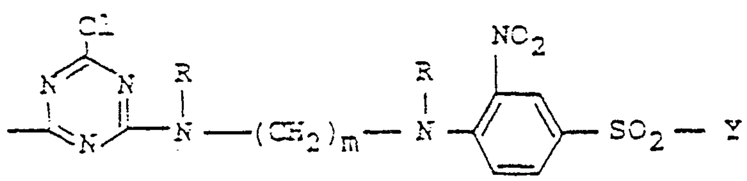

(3a)

dans laquelle chaque R est un hydrogène, et m et Y ont les significations données dans la revendication 1,

p vaut zéro, 1, 2 ou 3, et

M est un atome d'hydrogène ou un métal alcalin.

**12.** Composé selon la revendication 1, de formule générale

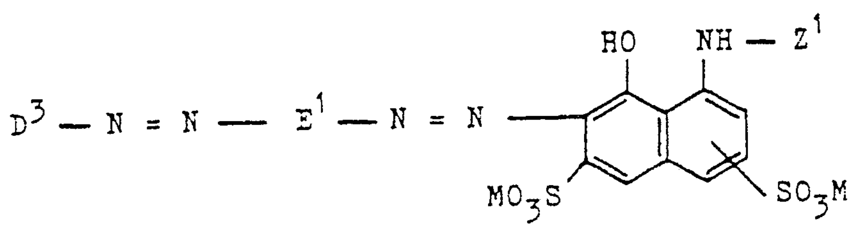

dans laquelle

$D^3$ est un résidu de formule générale (10a) ou (10b)

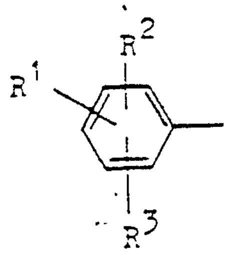

(10a)

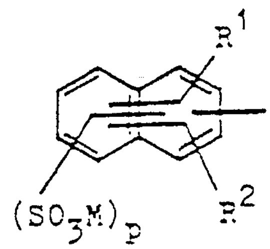

(10b)

dans lesquelles

$R^1$ est un hydrogène ou un radical méthyle, éthyle, méthoxy, éthoxy, alcanoyle ayant de 2 à 5 atomes de carbone, cyano, carboxy, sulfo, alcoxycarbonyle ayant de 2 à 5 atomes de carbone, carbamoyle, N-(alkyle en $C_1$-$C_4$) carbamoyle, fluoro, chloro, bromo ou trifluorométhyle,

$R^2$ est un hydrogène ou le radical méthyle, éthyle, méthoxy, éthoxy, cyano, carboxy, sulfo, alcanoylamino ayant de 2 à 5 atomes de carbone, alcoxycarbonyle ayant de 2 à 5 atomes de carbone, carbamoyle, N-(alkyle en $C_1$-$C_4$) carbamoyle, fluoro, chloro, nitro, sulfamoyle, N-(alkyle en $C_1$ - $C_4$) sulfamoyle, alkylsulfonyle ayant de 1 à 4 atomes de carbone, phénylsulfonyle ou pnénoxy,

$R^3$ est un hydrogène, un radical sulfo, $\beta$-sulfatoéthylsulfonyle ou vinylsulfonyle,

p vaut zéro, 1, 2 ou 3 et

M est un atome d'hydrogène ou un métal alcalin,

$E^1$ est un radical de formule générale (7A) ou (7B)

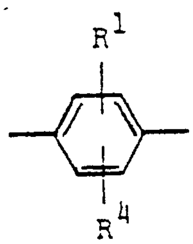

(7A)

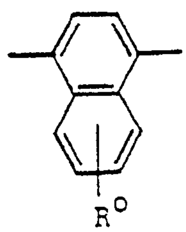

(7B)

où $R^1$ a les significations données ci-dessus et

$R^4$ est un hydrogène, un radical alkyle ayant de 1 à 4 atomes de carbone, alcoxy ayant de 1 à 4 atomes de carbone, chloro, alcanoylamino, ayant de 2 à 5 atomes de carbone, benzoylamino, uréido, phényluréido, alkyluréido ayant de 1 à 4 atomes de carbone dans le fragment alkyle, phénylsulfonyle, cycloalkyluréido ayant de 5 à 8 atomes de carbone dans le fragment cycloalkyle, alkylsulfonyle ayant de 1 à 4 atomes de carbone ou alkylsulfonylamino ayant de 1 à 4 atomes de carbone, et

$R^{\circ}$ est un hydrogène ou le radical sulfo, et

$Z^1$ est un radical de formule générale (3a)

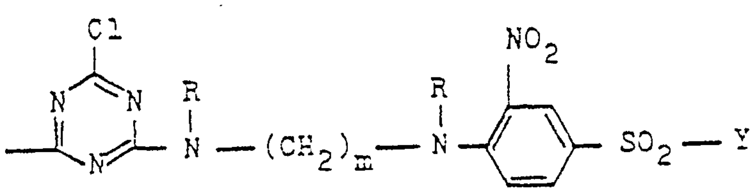

(3a)

dans laquelle chaque R est un hydrogène, et m et Y ont les significations données dans la revendication 1.

**13.** Composé selon la revendicaton 1, de formule générale

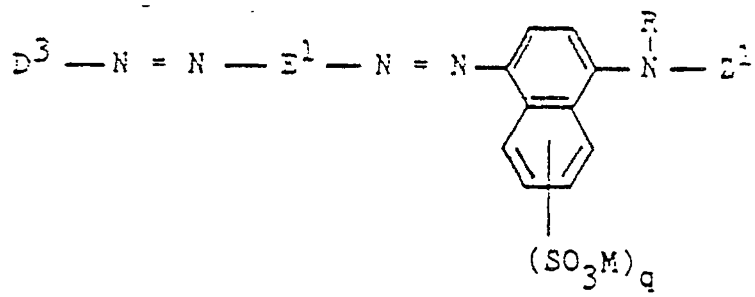

dans laquelle $D^3$, $E^1$, M et $Z^1$ ont les significations données dans la revendication 12,
R est un atome d'hydrogène et
q vaut zéro, 1 ou 2.

**14.** Composé selon la revendication 1, de formule générale

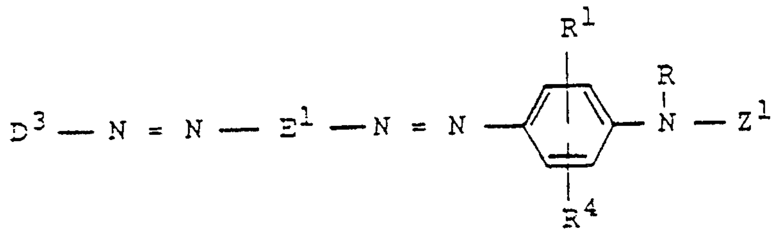

dans laquelle R a les significations données dans la revendication 1, et $D^3$, $E^1$ et $Z^1$ ont les significations données dans la revendication 12,
$R^1$ est un hydrogène ou un radical méthyle, éthyle, méthoxy, éthoxy, alcanoyle ayant de 2 à 5 atomes de carbone, cyano, carboxy, sulfo, alcoxycarbonyle ayant de 2 à 5 atomes de carbone, carbamoyle, N-(alkyle en $C_1$-$C_4$) carbamoyle, fluoro, chloro, bromo ou trifluorométhyle,
$R^4$ est un hydrogène, un radical alkyle ayant de 1 à 4 atomes de carbone, alcoxy ayant de 1 à 4 atomes de carbone, chloro, alcanoylamino, ayant de 2 à 5 atomes de carbone, benzoylamino, uréido, phényluréido, alkyluréido ayant de 1 à 4 atomes de carbone dans le fragment alkyle, phénylsulfonyle, cycloalkyluréido ayant de 5 à 8 atomes de carbone dans le fragment cycloalkyle, alkylsulfonyle ayant de 1 à 4 atomes de carbone ou alkylsulfonylamino ayant de 1 à 4 atomes de carbone.

**15.** Composé selon au moins l'une des revendications 1 à 14, caractérisé en ce que m vaut 2.

**16.** Composé selon au moins l'une des revendications 1 à 15, caractérisé en ce que Y est le groupe β-sulfatoéthyle.

**17.** Composé selon au moins l'une des revendications 1 à 10 et 14 à 16, caractérisé en ce que chaque R est un atome d'hydrogène.

**18.** Procédé de préparation des composés mentionnés et définis dans la revendication 1, de formule générale (1), caractérisé en ce qu'on fait réagir les précurseurs usuels de colorants solubles dans l'eau, dont au moins l'un contient un groupe de formule générale (3), les uns avec les autres d'une manière analogue aux procédés usuels, pour donner le colorant correspondant,

ou encore en ce qu'on fait réagir du chlorure de cyanuryle, dans un ordre quelconque, avec un composé aminé de formule générale (17)

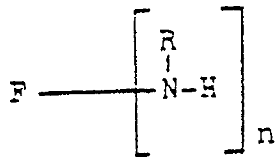

(17)

dans laquelle F, R et n ont les significations données dans la revendication 1, et avec un composé aminé de formule générale (18)

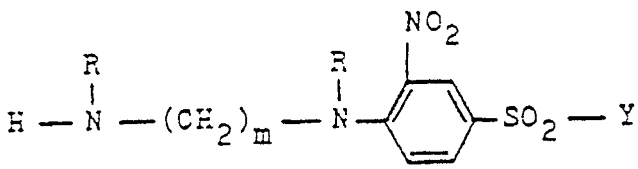

(18)

dans laquelle m, R et Y ont les significations données dans la revendication 1.

**19.** Utilisation des composés mentionnés et définis dans la revendication 1, de formule générale (1), pour teindre et imprimer une matière contenant des groupes hydroxy et/ou carboxamide, en particulier des matières fibreuses.

**20.** Procédé pour colorer (teindre, cette opération englobant l'impression) une matière contenant des groupes hydroxy et/ou carboxamide, de préférence une matière fibreuse, dans lequel on applique un colorant sur la matière ou on l'introduit dans la matière, et on fixe le colorant sur ou dans la matière à l'aide de chaleur ou à l'aide d'un agent à effet alcalin, ou à l'aide de vapeur et d'un agent alcalin, caractérisé en ce qu'on utilise comme colorant un composé de formule générale (1) mentionnée et définie dans la revendication 1.

Revendications pour l'Etat contractant suivant: ES

**1.** Procédé de préparation d'un composé de formule générale (1)

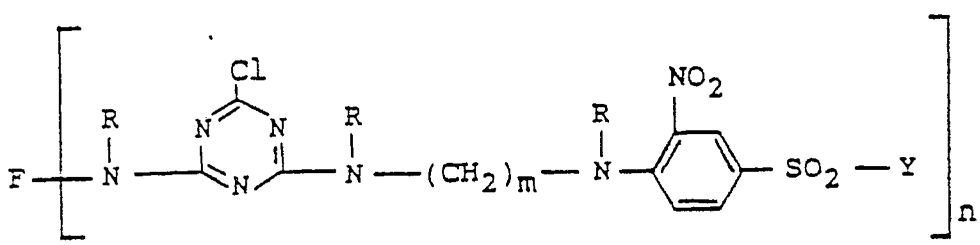

(1)

dans laquelle :

F est le résidu d'un colorant, de préférence d'un colorant soluble dans l'eau et contenant des groupes sulfo, et de préférence de la série azoïque;

m est le nombre 2 ou 3;

n est le nombre 1 ou 2;

R est un atome d'hydrogène ou un groupe alkyle ayant de 1 à 4 atomes de carbone ;

Y est le groupe vinyle ou un groupe de formule générale (2)

$$- CH_2 - CH_2 - X \qquad (2)$$

dans laquelle X est un substituant pouvant être éliminé en tant qu'anion, de préférence à l'aide d'un alcali, caractérisé en ce qu'on fait réagir les précurseurs usuels de colorants solubles dans l'eau, dont au moins l'un contient un groupe de formule générale (3),

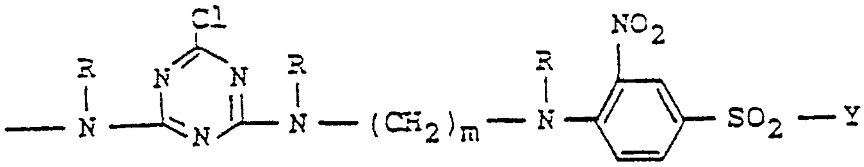 (3)

dans laquelle R, m et Y ont les significations ci-dessus, les uns avec les autres d'une manière analogue aux procédés usuels, pour donner le colorant correspondant,

ou encore en ce qu'on fait réagir du chlorure de cyanuryle, dans un ordre quelconque, avec un composé aminé de formule générale (17)

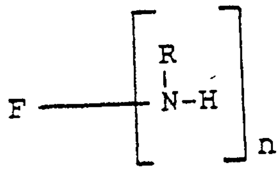 (17)

dans laquelle F, R et n ont les significations données dans la revendication 1, et avec un composé aminé de formule générale (18)

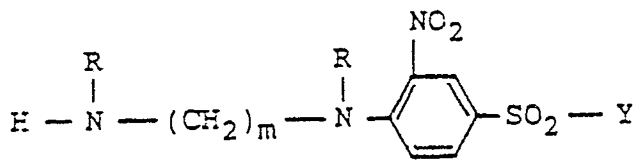 (18)

dans laquelle m, R et Y ont les significations données dans la revendication 1.

**2.** Procédé selon la revendication 1, caractérisé en ce que F est le résidu d'un colorant monoazoïque ou disazoïque contenant des groupes sulfo.

**3.** Procédé selon la revendication 1 ou 2, caractérisé en ce que n vaut 1.

**4.** Procédé selon la revendication 1, caractérisé en ce que le composé synthétisé de formule (1) est un composé de formule générale (4)

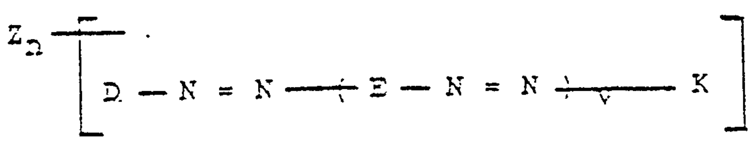 (4)

dans laquelle D est le résidu d'un diazotant, E est le radical bivalent d'un composé copulable et diazotable, K est le résidu d'un copulant et v vaut zéro ou 1, n vaut 1 ou 2 et Z a les significations données dans la revendication 1, le radical Z étant lié au radical D ou au radical K ou encore, quand n = 2, simultanément à D et à K.

**5.** Procédé selon la revendication 4, caractérisé en ce que n vaut 1, et Z est lié à K, et D est un radical de formule générale

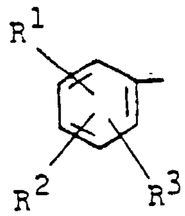

ou

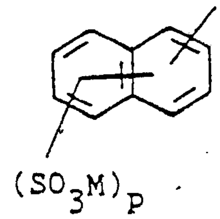

dans lesquelles :

$R^1$ est un hydrogène ou un radical méthyle, éthyle, méthoxy, éthoxy, alcanoyle ayant de 2 à 5 atomes de carbone, cyano, carboxy, sulfo, alcoxycarbonyle ayant de 2 à 5 atomes de carbone, carbamoyle, N-(alkyle en $C_1$-$C_4$) carbamoyle, fluoro, chloro, bromo ou trifluorométhyle,

$R^2$ est un hydrogène ou le radical méthyle, éthyle, méthoxy, éthoxy, cyano, carboxy, sulfo, alcanoylamino ayant de 2 à 5 atomes de carbone, alcoxycarbonyle ayant de 2 à 5 atomes de carbone, carbamoyle, N-(alkyle en $C_1$-$C_4$) carbamoyle, fluoro, chloro, nitro, sulfamoyle, N-(alkyle en $C_1$-$C_4$) sulfamoyle, alkylsulfonyle ayant de 1 à 4 atomes de carbone, phénylsulfonyle ou phénoxy,

$R^3$ est un atome d'hydrogène ou un groupe sulfo, un groupe $\beta$-sulfatoéthylsulfonyle ou vinylsulfonyle,

p vaut zéro, 1, 2 ou 3 et

M est un atome d'hydrogène ou un métal alcalin.

**6.** Procédé selon la revendication 4, caractérisé en ce que n vaut 1 et Z est lié à D, et D est un radical de formule générale

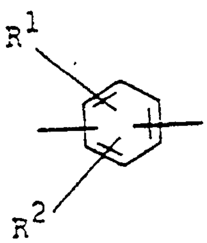

ou

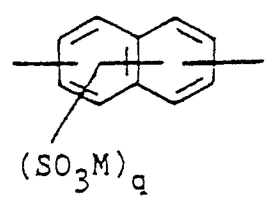

dans lesquelles :

$R^1$ est un hydrogène ou un radical méthyle, éthyle, méthoxy, éthoxy, alcanoyle ayant de 2 à 5 atomes de carbone, cyano, carboxy, sulfo, alcoxycarbonyle ayant de 2 à 5 atomes de carbone, carbamoyle, N-(alkyle en $C_1$-$C_4$) carbamoyle, fluoro, chloro, bromo ou trifluorométhyle,

$R^2$ est un hydrogène ou le radical méthyle, éthyle, mèthoxy, éthoxy, cyano, carboxy, sulfo, alcanoylamino ayant de 2 à 5 atomes de carbone, alcoxycarbonyle ayant de 2 à 5 atomes de carbone, carbamoyle, N-(alkyle en $C_1$-$C_4$) carbamoyle, fluoro, chloro, nitro, sulfamoyle, N-(alkyle en $C_1$-$C_4$) sulfamoyle, alkylsulfonyle ayant de 1 à 4 atomes de carbone, phénylsulfonyle ou phénoxy,

q vaut zéro, 1, 2 ou 3 et

M est un atome d'hydrogène ou un métal alcalin.

**7.** Procédé selon la revendication 4, caractérisé en ce que n vaut 1, Z est lié à D et K est un résidu de formule

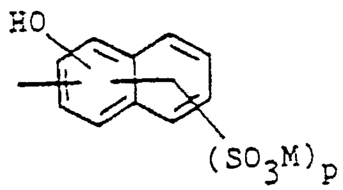

ou

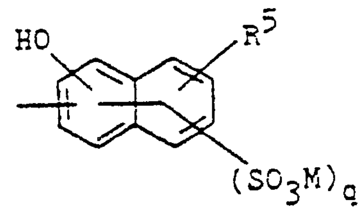

ou

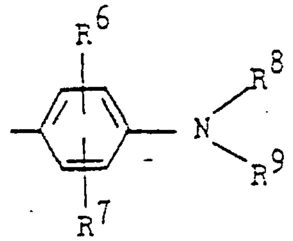

générale dans lesquelles :

$R^5$ est un radical alkyluréido comportant des groupes alkyle ayant de 1 à 6 atomes de carbone, phényluréido, phényluréido substitué dans le radical phényle par un ou plusieurs radicaux chloro, méthyle, méthoxy, nitro, sulfo et/ ou carboxy, alcanoylamino ayant de 2 à 7 atomes de carbone, cyclohexanoylamino, benzoylamino ou benzoylamino substitué dans le noyau benzène par un ou plusieurs radicaux chloro, méthyle, méthoxy, nitro, sulfo et/ou carboxy,

$R^6$ est un hydrogène, un radical alkyle ayant de 1 à 4 atomes de carbone, alcoxy ayant de 1 à 4 atomes de carbone, bromo, chloro ou alcanoylamino ayant de 2 à 7 atomes de carbone,

$R^7$ est un hydrogène, un radical alkyle ayant de 1 à 4 atomes de carbone, alcoxy ayant de 1 à 4 atomes de carbone, chloro ou alcanoylamino ayant de 2 à 7 atomes de carbone, ou encore un groupe uréido ou phényluréido,

$R^8$ est un hydrogène ou un radical alkyle ayant de 1 à 4 atomes de carbone, pouvant être substitué par hydroxy, cyano, carboxy, sulfo, sulfato, méthoxycarbonyle, éthoxycarbonyle ou acétoxy,

$R^9$ est un radical alkyle ayant de 1 à 4 atomes de carbone, pouvant être substitué par hydroxy, cyano, carboxy, sulfo, sulfato, méthoxycarbonyle, éthoxycarbonyle ou acétoxy, ou encore benzyle ou phényle, ou phényle substitué par un ou plusieurs radicaux alkyle ayant de 1 à 4 atomes de carbone, alcoxy ayant de 1 à 4 atomes de carbone, chloro et/ou sulfo,

p vaut zéro, 1, 2 ou 3,

q vaut zéro, 1 ou 2, et

M est un atome d'hydrogène ou un métal alcalin.

**8.** Procédé selon la revendication 4, caractérisé en ce que n vaut 1, le radical Z est lié à K et le groupe -K-Z est un radical de formule

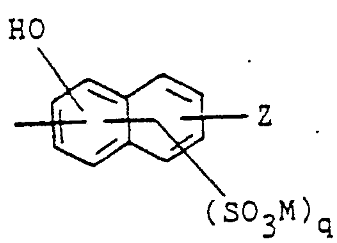

ou

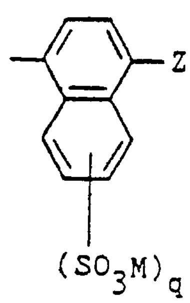

ou

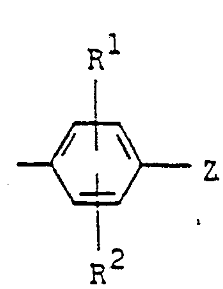

dans lesquelles $R^1$ est un hydrogène ou le radical méthyle, méthoxy, chloro, carboxy ou sulfo, $R^2$ est un hydrogène ou le radical méthyle, méthoxy, chloro, carboxy, sulfo ou acétylamino, q vaut zéro, 1 ou 2 et M est un hydrogène ou un métal alcalin, et Z a les significations données dans la revendication 4.

9. Procédé selon la revendication 4, caractérisé en ce que v vaut 1 et 5 est un radical de formule

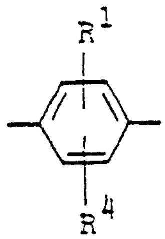

ou

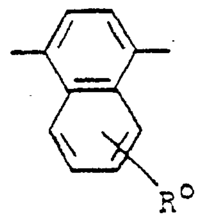

dans lesquelles

$R^1$ est un hydrogène ou un radical méthyle, éthyle, méthoxy, éthoxy, alcanoyle ayant de 2 à 5 atomes de carbone, cyano, carboxy, sulfo, alcoxycarbonyle ayant de 2 à 5 atomes de carbone, carbamoyle, N-(alkyle en $C_1$-$C_4$) carbamoyle, fluoro, chloro, bromo ou trifluorométhyle,

$R^4$ est un hydrogène, un radical alkyle ayant de 1 à 4 atomes de carbone, alcoxy ayant de 1 à 4 atomes de carbone, chloro, alcanoylamino, ayant de 2 à 5 atomes de carbone, benzoylamino, uréido, phényluréido, alkyluréido ayant de 1 à 4 atomes de carbone dans le fragment alkyle, phénylsulfonyle ou alkylsulfonyle ayant de 1 à 4 atomes de carbone,

$R^{\circ}$ est un atome d'hydrogène ou un groupe sulfo, et

M est un atome d'hydrogène ou un métal alcalin.

10. Procédé selon la revendication 1, de formule générale (15)

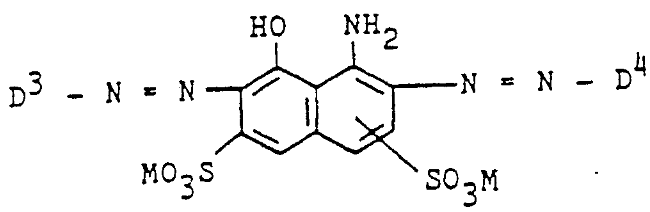

(15)

dans laquelle $D^3$ et $D^4$ sont identiques ou différents et représentent chacun le résidu d'un diazotant, dont au moins l'un contient un groupe réactif de formule générale (3), et où M est un atome d'hydrogène ou un métal alcalin.

11. Procédé selon la revendication 10, caractérisé en ce que $D^3$, ou $D^4$, ou les deux, sont identiques ou différents et représentent chacun un résidu de formule générale (10a) ou (10b) ou (12), au moins l'un des résidus $D^3$ et $D^4$ étant un radical de formule (12)

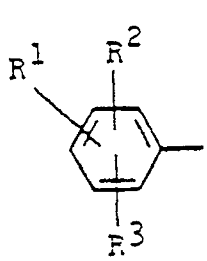

(10a)

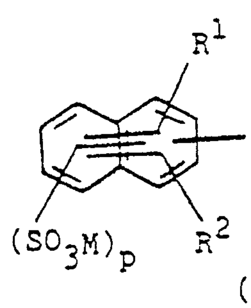

(10b)

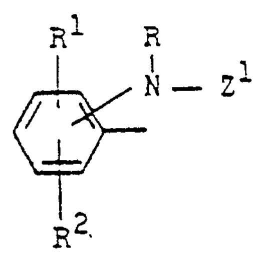

(12)

dans lesquelles

$R^1$ est un hydrogène ou un radical méthyle, éthyle, méthoxy, éthoxy, alcanoyle ayant de 2 à 5 atomes de carbone, cyano, carboxy, sulfo, alcoxycarbonyle ayant de 2 à 5 atomes de carbone, carbamoyle, N-(alkyle en $C_1$-$C_4$) carbamoyle, fluoro, chloro, bromo ou trifluorométhyle,

$R^2$ est un hydrogène ou le radical méthyle, éthyle, méthoxy, éthoxy, cyano, carboxy, sulfo, alcanoylamino ayant de 2 à 5 atomes de carbone, alcoxycarbonyle ayant de 2 à 5 atomes de

carbone, carbamoyle, N-(alkyle en $C_1$-$C_4$) carbamoyle, fluoro, chloro, nitro, sulfamoyle, N-(alkyle en $C_1$-$C_4$) sulfamoyle, alkylsulfonyle ayant de 1 à 4 atomes de carbone, phénylsulfonyle ou phénoxy,
$R^3$ est un hydrogène, le radical sulfo, $\beta$-sulfatoéthylsulfonyle ou vinylsulfonyle,
R est un hydrogène,
$Z^1$ est un radical de formule générale (3a)

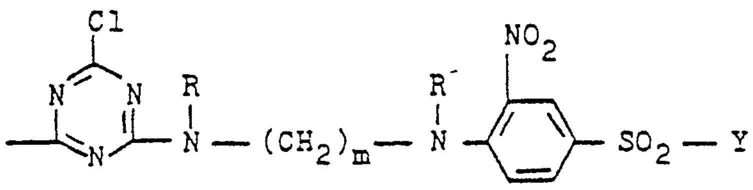

(3a)

dans laquelle chaque R est un hydrogène, et m et Y ont les significations données dans la revendication 1,
p vaut zéro, 1, 2 ou 3, et
M est un atome d'hydrogène ou un métal alcalin.

**12.** Procédé selon la revendication 1, caractérisé en ce que le composé synthétisé de formule (1) est un composé de formule générale

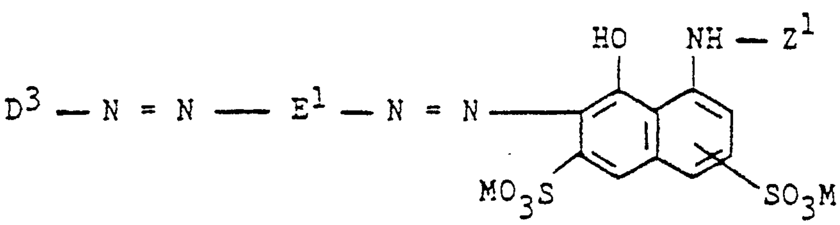

dans laquelle
$D^3$ est un résidu de formule générale (10a) ou (10b)

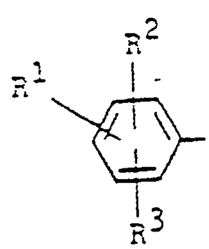

(10a)

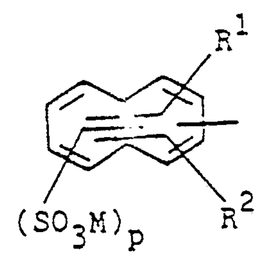

(10b)

dans lesquelles
$R^1$ est un hydrogène ou un radical méthyle, éthyle, méthoxy, éthoxy, alcanoyle ayant de 2 à 5 atomes de carbone, cyano, carboxy, sulfo, alcoxycarbonyle ayant de 2 à 5 atomes de carbone, carbamoyle, N-(alkyle en $C_1$-$C_4$) carbamoyle, fluoro, chloro, bromo ou trifluorométhyle,
$R^2$ est un hydrogène ou le radical méthyle, éthyle, méthoxy, éthoxy, cyano, carboxy, sulfo, alcanoylamino ayant de 2 à 5 atomes de carbone, alcoxycarbonyle ayant de 2 à 5 atomes de carbone, carbamoyle, N-(alkyle en $C_1$-$C_4$) carbamoyle, fluoro, chloro, nitro, sulfamoyle, N-(alkyle en $C_1$-$C_4$) sulfamoyle, alkylsulfonyle ayant de 1 à 4 atomes de carbone, phénylsulfonyle ou phénoxy,
$R^3$ est un hydrogène, un radical sulfo, $\beta$-sulfatoéthylsulfonyle ou vinylsulfonyle,
p vaut zéro, 1, 2 ou 3 et
M est un atome d'hydrogène ou un métal alcalin,
$E^1$ est un radical de formule générale (7A) ou (7B)

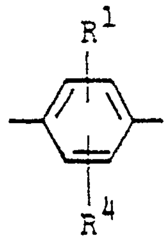 (7A)

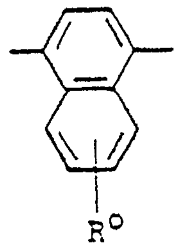 (7B)

où $R^1$ a les significations données ci-dessus et

$R^4$ est un hydrogène, un radical alkyle ayant de 1 à 4 atomes de carbone, alcoxy ayant de 1 à 4 atomes de carbone, chloro, alcanoylamino, ayant de 2 à 5 atomes de carbone, benzoylamino, uréido, phènyluréido, alkyluréido ayant de 1 à 4 atomes de carbone dans le fragment alkyle, phénylsulfonyle, cycloalkyluréido ayant de 5 à 8 atomes de carbone dans le fragment cycloalkyle, alkylsulfonyle ayant de 1 à 4 atomes de carbone ou alkylsulfonylamino ayant de 1 à 4 atomes de carbone, et

$R^°$ est un hydrogène ou le radical sulfo, et

$Z^1$ est un radical de formule générale (3a)

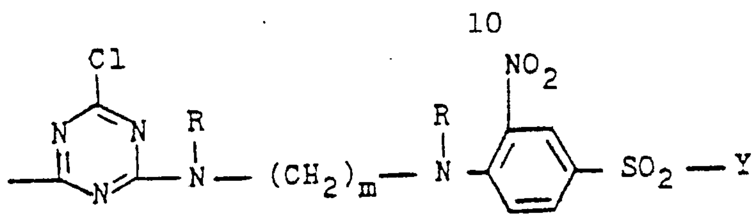 (3a)

dans laquelle chaque R est un hydrogène, et m et Y ont les significations données dans la revendication 1.

**13.** Procédé selon la revendication 1, caractérisé en ce que le composé synthétisé de formule (1) est un composé de formule générale

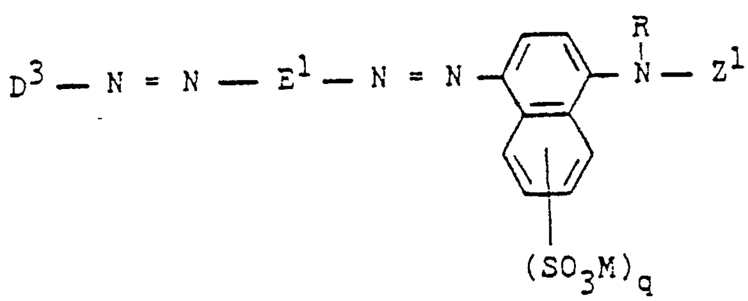

dans laquelle $D^3$, $E^1$, M et $Z^1$ ont les significations données dans la revendication 12,

R est un atome d'hydrogène et

q vaut zéro, 1 ou 2.

**14.** Procédé selon la revendication 1, caractérisé en ce que le composé synthétisé de formule (1) est un composé de formule générale

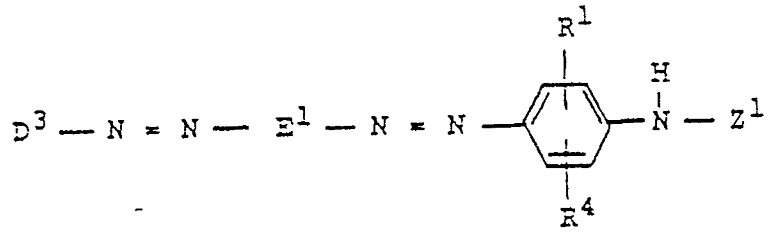

dans laquelle R a les significations données dans la revendication 1, et $D^3$, $E^1$ et $Z^1$ ont les significations données dans la revendication 12,

$R^1$ est un hydrogène ou un radical méthyle, éthyle, méthoxy, éthoxy, alcanoyle ayant de 2 à 5 atomes de carbone, cyano, carboxy, sulfo, alcoxycarbonyle ayant de 2 à 5 atomes de carbone, carbamoyle, N-(alkyle en $C_1$-$C_4$) carbamoyle, fluoro, chloro, bromo ou trifluorométhyle,

$R^4$ est un hydrogène, un radical alkyle ayant de 1 à 4 atomes de carbone, alcoxy ayant de 1 à 4 atomes de carbone, chloro, alcanoylamino, ayant de 2 à 5 atomes de carbone, benzoylamino, uréido, phényluréido, alkyluréido ayant de 1 à 4 atomes de carbone dans le fragment alkyle, phénylsulfonyle, cycloalkyluréido ayant de 5 à 8 atomes de carbone dans le fragment cycloalkyle, alkylsulfonyle ayant de 1 à 4 atomes de carbone ou alkylsulfonylamino ayant de 1 à 4 atomes de carbone.

**15.** Procédé selon au moins l'une des revendications 1 à 14, caractérisé en ce que m vaut 2.

**16.** Procédé selon au moins l'une des revendications 1 à 15,caractérisé en ce que Y est le groupe β-sulfatoéthyle.

**17.** Procédé selon au moins l'une des revendications 1 à 10 et 14 à 16, caractérisé en ce que chaque R est un atome d'hydrogène.

**18.** Procédé pour colorer (teindre, cette opération englobant l'impression) une matière contenant des groupes hydroxy et/ou carboxamide, de préférence une matière fibreuse, dans lequel on applique un colorant sur la matière ou on l'introduit dans la matière, et on fixe le colorant sur ou dans la matière à l'aide de chaleur ou à l'aide d'un agent à effet alcalin, ou à l'aide de vapeur et d'un agent alcalin, caractérisé en ce qu'on utilise comme colorant un composant de formule générale (1) mentionnée et définie dans la revendication 1, ou qui a été préparé par un procédé selon la revendicaton 1.